(19) Europäisches Patentamt / European Patent Office / Office européen des brevets

(11) EP 2 421 874 B1

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **10711369.8**

(22) Anmeldetag: **19.03.2010**

(51) Int Cl.:
***C07F 7/18*** *(2006.01)* ***C09C 1/30*** *(2006.01)*

(86) Internationale Anmeldenummer:
**PCT/EP2010/053626**

(87) Internationale Veröffentlichungsnummer:
**WO 2010/121873 (28.10.2010 Gazette 2010/43)**

(54) **QUARTÄRE-AMINOFUNKTIONELLE, SILICIUMORGANISCHE VERBINDUNGEN ENTHALTENDE ZUSAMMENSETZUNG SOWIE DEREN HERSTELLUNG UND VERWENDUNG**

COMPOSITION CONTAINING QUATERNARY AMINO-FUNCTIONAL ORGANOSILICON COMPOUNDS AND PRODUCTION AND USE THEREOF

COMPOSITION CONTENANT DES COMPOSÉS ORGANO-SILICÉS QUATERNAIRES AMINO-FONCTIONNELS, AINSI QUE SA PRODUCTION ET SON UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.04.2009 DE 102009002477**

(43) Veröffentlichungstag der Anmeldung:
**29.02.2012 Patentblatt 2012/09**

(73) Patentinhaber: **Evonik Degussa GmbH**
**45128 Essen (DE)**

(72) Erfinder:
- **STANDKE, Burkhard**
  **79540 Lörrach (DE)**
- **WASSMER, Christian**
  **79688 Hausen (DE)**
- **VÖGTLIN, Tim**
  **79650 Schopfheim (DE)**
- **LIPPERT, Irene**
  **79618 Rheinfelden (DE)**
- **SCHARFE, Stefan**
  **63526 Erlensee (DE)**
- **LACH, Heinz**
  **63517 Rodenbach (DE)**
- **BATZ-SOHN, Christoph**
  **63454 Hanau-Mittelbuchen (DE)**
- **HASENZAHL, Steffen**
  **63454 Hanau (DE)**

(56) Entgegenhaltungen:
**EP-A1- 0 741 137**
**WO-A1-2005/047298**
**WO-A2-2008/004243**
**DE-A1- 3 120 195**
**DE-A1-102007 040 802**
**DE-C1- 19 928 127**
**US-A- 2 930 809**
**US-A- 4 526 996**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine neue wässrige Zusammensetzung und Verfahren zu ihrer Herstellung umfassend quartäre aminofunktionelle, siliciumorganische Verbindungen, insbesondere in Form vom Oligomeren und Polymeren, die teilweise hydrolysiert bis vollständig hydrolysiert vorliegen können, und insbesondere wasserlöslich sind, und die Zusammensetzungen einen nur äußerst geringen VOC-Anteil aufweisen sowie deren Verwendung, insbesondere - aber nicht ausschließlich - in Papierstreichmassen, zur Kationisierung von Inkjet-Beschichtungen, zur Ausrüstung von Fasermaterialien und/oder Textilien, zur Verbesserung der Anfärbbarkeit von Substraten, beispielsweise bei Textilfasern, Garnen, Papier, Folien oder auch entsprechend beschichteter Substrate, zum Hemmen bzw. Unterbinden des Wachstums von Mikroorganismen oder einer elektrostatischen Aufladung, um nur einige besonders vorteilhafte Anwendungsmöglichkeiten anzuführen.

Generell sind organofunktionelle Alkoxysilane mit quartärer Stickstofffunktion, d. h. mit einer kationischen einen organofunktionalisierten Stickstoff enthaltenden Gruppe, seit längerem bekannt. Der quartäre Stickstoff verfügt unabhängig vom pH-Wert über eine kationische Funktionalität. Bislang war ihre Herstellung nur über aufwendige Verfahren möglich, beispielsweise unter erhöhtem Druck im Autoklaven. Ein weiterer Nachteil dieser Alkoxysilane ist die Freisetzung von Hydrolysealkoholen in die Umwelt bei ihrer Anwendung der bekannten wasserbasierten Applikationslösungen.

Die Herstellung von kationischen Organosilanen und deren teilweiser Einsatz in wässrigen Phasen wird in den folgenden Schriften berichtet. DE 881654 offenbart die Herstellung von quartären Silanen im Autoklaven unter wasserfreien Bedingungen. Weitere Verfahren offenbaren die NL 6517163 zur Herstellung von quartären Methylarylsilanen, DE 1262272 offenbart die Herstellung entsprechender Silicone. Auch die DE 2221349, DE 2648240, US 4035411, US 4005118 und US 4005119 offenbaren Verfahren zur Herstellung von quartären Silanen.

DE 3120195 offenbart in Beispiel 18 ein Verfahren, in dem ein tertiäres Amin mit einem Halogenalkyl-funktionellen Silan über fast 50 Stunden bei 150 °C umgesetzt wird bis sich eine viskose Flüssigkeit gebildet hat; während der Umsetzung erfolgt keine Zugabe von Wasser.

Die Verwendung von quartären aminofunktionellen Alkoxysilanen zur Hemmung des Wachstums von Mikroorganismen beschreiben die DE 2222997, DE 2229580 und die DE 2408192. Eine verbesserte Anfärbbarkeit von schwer zu färbenden Materialien, wie Teflon oder auch Leder, durch Verwendung entsprechender Silane offenbart GB 882067. Die Herstellung quartär funktionalisierter Organosilane erfolgt jeweils in aprotischen organischen Lösemitteln oder unter Feuchtigkeitsausschluss und unter erhöhtem Druck. Die nach diesen Verfahren hergestellten Silane oder deren wässrige Formulierungen enthalten große Mengen an Lösemittel. Dies führt in vielen Anwendungen zu erheblichen Nachteilen, wie einem niedrigen Flammpunkt, der ex-Schutz erfordert, oder eine Verursachung von Umweltschäden durch eine hohe VOC-Belastung hervorruft.

EP 0054748 offenbart ein Verfahren, in welchem beispielsweise 3-Chlorpropyltriethoxysilan mit wässrigem Trimethylamin als tertiäres Amin im Autoklaven unter erhöhtem Druck umgesetzt wird. Die Reaktion bedarf aufgrund der notwendigen hohen Umsetzungstemperatur von 120 °C und höher zusätzlich einer Reaktionsführung unter erhöhtem Druck im Autoklaven. Durch Einsatz von alkoxyfunktionellen Silanen und Alkohol-Wasser-Gemischen als Lösemittel enthalten die wasserbasierten Formulierungen erhebliche Mengen an VOC. So ergeben sich aus den Beispielen 1, 2, 3, 6, 7, 8, 9 und 10 VOC-Gehalte in den Endformulierungen zwischen ca. 16 und 40 Gew.-%. Beispiele 4, 5 und 11 gehen von brom- bzw. jodalkylfunktionellen Organosilanen aus und können wegen der Umweltproblematik der verbleibenden Gegenanionen Jodid und Bromid als technisch irrelevant betrachtet werden.

In WO 2008/076839 wird ein handelsübliches quartäres Silan eingesetzt (AEM 5772, Aegis Antimicrobial agent, Wirkstoff: 3-(Trimethoxysilyl)propyldimethyl-octadecyl ammonium chloride), welches 12 % Methanol enthält. US 4845256 offenbart ein Verfahren zur Herstellung quartärer Silane Erdalkalijodid-Katalysatoren für die Umsetzung von chloralkylfunktionellen Alkoxysilanen und tertiären Aminen. Das beschriebene Verfahren läuft zwar unter Normaldruck bei einer Temperatur von 100 °C ab, jedoch ist es in zweierlei Hinsicht nachteilig. Zum einen werden für die Umwelt problematische Erdalkalijodide in erheblichen Mengen eingesetzt und zum anderen enthalten die wässrigen Applikationslösungen erhebliche Mengen an VOC, wie Hydrolysemethanol und Glykole, die im dortigen Verfahren eingesetzt werden und in der Applikationslösung verbleiben. Das in Beispiel 1 beschriebene Produkt erzeugt in einer wässrigen Applikationslösung mehr als 50 % VOC (bezogen auf die eingesetzte Lösung des quartären Methoxysilans [3-(Trimethoxysilyl)propyl-decyl-dimethyl-ammonium chloride] gelöst in Propylenglykolmonomethylether).

Die folgenden Schriften offenbaren die Anwendung von kationischen aminofunktionellen Silanen zur Kationisierung von Inkjet-Papieranwendungen.

WO 2005/009745 A2 offenbart kationische Aluminiumoxidpartikel mit aminofunktionellen Silanen. US 20030175451 betrifft die Beschichtung von Silica mit Silanen zur Verbesserung der Performance bei Inkjet-Anwendungen. US 20050170109 offenbart die Behandlung von Silica mit Aminoalkoxysilanen und deren Anwendung für Inkjet-Papiere und DE 10 2007 012578 A1 die Herstellung von kationischen Silicadispersionen unter Verwendung von primären, sekundären oder tertiären Aminosilanen und deren Einsatz für Beschichtungen. WO 2005/009745 A2, US 2005/170109 A1 sowie US 2003/175451 erwähnen allgemein die Möglichkeit, ein quartäres aminofunktionelles Alkoxysilan, wie Trimethoxysilanpropyl-N,N,N-trimethylammoniumchlorid, bzw. ein N,N,N-Tributylammoniumchlorid substituiertes Silan einzusetzen. Konkrete Beispiele werden nicht offenbart.

In der DE 102007040802 A1 wird der erfolgreiche Einsatz von VOC-armen, protonierten aminofunktionellen silanolgruppenhaltigen Siloxansystemen (Hydrosile) bei der Kationisierung von Papierstreichmassen beschrieben. Die Protonierung der Aminofunktion dieser Systeme ist stark pH-Wert abhängig. Daher ist die Performance dieser Anwendungen noch verbesserungswürdig. Für die Verarbeitbarkeit von Papierstreichmassen ist deren Viskosität und Feststoffgehalt maßgeblich. Je höher die Viskosität, desto aufwändiger wird die Verarbeitung, wobei zugleich aus Kapazitätsgründen ein hoher Feststoffgehalt der Systeme angestrebt wird.

Es besteht daher weiterhin ein Bedarf an VOC-verminderten quartären-aminofunktionellen siliciumorganischen Verbindungen, die die Einstellung einer niedrigen Viskosität bei gleichzeitig hohem Feststoffgehalt von Dispersionen, beispielsweise Silica-Dispersionen, insbesondere von Papierstreichmassen, ermöglichen.

Aufgabe der vorliegenden Erfindung war es, VOC-reduzierte quartäre-aminoalkylfunktionelle, siliciumorganische Verbindungen enthaltende Zusammensetzungen sowie ein wirtschaftliches Verfahren zur Herstellung VOC-reduzierter quartäre-aminoalkylfunktioneller, siliciumorganischer Verbindungen enthaltende Zusammensetzungen bereitzustellen, das zugleich die Einstellung der gewünschten Viskosität und des Feststoffgehaltes erlaubt.

Die Aufgabe wird erfindungsgemäß entsprechend den Angaben in den Patentansprüchen gelöst. Insbesondere wird die Aufgabe durch die erfindungsgemäße Zusammensetzung entsprechend den Merkmalen der Ansprüche 13 und 17 sowie durch das erfindungsgemäße Herstellverfahren nach Anspruch 1 gelöst. Bevorzugte Ausführungsformen sind in den Unteransprüchen sowie in der Beschreibung ausgeführt.

Überraschend konnte die Aufgabe gelöst werden, indem halogenalkylfunktionelle Alkoxysilane, gegebenenfalls zusammen mit weiteren organofunktionellen Siliciumverbindungen, wie organofunktionellen Alkoxysilanen und/oder kondensationsfähigen oligomeren oder polymeren organofunktionellen Siliciumverbindungen, zusammen mit tertiären Aminen in Gegenwart bzw. unter Zusatz einer definierten Menge Wasser umgesetzt werden und der gebildete Hydrolysealkohol zumindest teilweise entfernt wird, bevorzugt wird der Hydrolysealkohol im Wesentlichen vollständig entfernt. Die dabei stattfindende Quartärnisierungsreaktion und zumindest partielle Hydrolyse und gegebenenfalls partielle Kondensation, d. h. einschließlich Co- bzw. Blockkondensation, wird vorteilhaft unter Temperaturkontrolle durchgeführt, d. h. es wird je nach Bedarf erwärmt oder gekühlt, auch wird die Reaktionsmischung geeigneterweise gerührt. Dabei wird aus einem ursprünglich tertiär organofunktionell substituierten Stickstoffatom des tertiären Amins ein quartäres Stickstoffatom, insbesondere unter Bildung erfindungsgemäß erhältlicher oligomerer bzw. polymerer quartäraminofunktioneller siliciumorganischer Verbindungen, die nachfolgend näher erläutert werden.

Ferner kann während oder nach der Hydrolysereaktion gebildeter Hydrolysealkohol destillativ aus der wässrigen Reaktionsmischung entfernt werden und nach Bedarf erneut Wasser zugesetzt werden, wobei erfindungsgemäß eine zur vorteilhaften Anwendung geeignete bzw. anwendungsfertige wässrige Lösung besagter quartärer-aminofunktioneller, siliciumorganischer Verbindungen erhalten wird, vorzugsweise quartäre alkylammoniumfunktionelle, siliciumorganische Verbindungen (nachfolgend auch kurz als Zusammensetzung oder Silansystem bezeichnet).

Vorliegende Zusammensetzungen weisen vorteilhaft einen VOC-Gehalt von deutlich unter 12 Gew.-% bis 0 Gew.-%, bezogen auf die Gesamtzusammensetzung auf. Bevorzugt liegt der Gehalt an flüchtigen organischen Verbindungen (VOC), insbesondere Lösemitteln, wie Hydrolysealkohol, in einer erfindungsgemäßen Zusammensetzung unter 5 Gew.-%, besonders bevorzugt unter 2 Gew.-%, ganz besonders bevorzugt unter 1 Gew.-%, insbesondere von 0,001 bis 0,5 Gew.-%, bezogen auf die Gesamtzusammensetzung. Daher werden vorliegende Zusammensetzungen nachfolgend auch kurz als VOC-frei bezeichnet. Weiter sind die erfindungsgemäß erhältlichen quartärneren aminoalkylfunktionellen, siliciumorgansichen Verbindungen enthaltenden Zusammensetzungen in praktisch jedem Verhältnis mit Wasser verdünnbar, insbesondere zwischen 1 : 100 bis 100 : 1 sowie in allen dazwischen liegenden Verhältnissen.

Die quartären-aminofunktionellen, siliciumorganischen Verbindungen können insbesondere oligomere bzw. polymere siliciumorganische Verbindungen sein, die je Molekül mindestens einen quartären aminoalkylfunktionellen Rest aufweisen, insbesondere einen quartären alkylammoniumfunktionellen Rest, wobei mindestens einer der Aminoalkyl-Reste ein Silicium-Atom umfasst, insbesondere eine Silanol-Gruppe oder ein Organosilanol, ein Oligomer oder Polymer siliciumorganischer Verbindungen.

Die Erfindung ermöglicht vorteilhaft die Bereitstellung neuer VOC-reduzierter (volatile organic compound) organofunktioneller Silansysteme, im Folgenden Zusammensetzungen genannt, mit quartärer Stickstofffunktion ($NR_4^+$, wobei Gruppen R gleich oder verschieden sein können und mindestens eine Gruppe R silyliert ist und R über ein C-Atom an N kovalent gebunden ist), die vorteilhaft bei Normaldruck und in hoher Ausbeute bereitgestellt werden können. Mindestens ein Rest R umfasst siliciumorganische Gruppen, gegebenenfalls kann R auch weitere Heteroatome enthalten. Insgesamt kann das erfindungsgemäße Silansystem lineare, verzweigte, cyclische und/oder raumvernetzte Strukturen bzw. Strukturbereiche mit M-, D-, T-Strukturen oder auch in Abhängigkeit vom Herstellverfahren Q-Strukturen aufweisen. Beispielsweise bei Zugabe von Tetraalkoxysilan zum Reaktionsgemisch.

Unter Kondensationsprodukten werden im Rahmen der Erfindung sowohl Homo- als auch Co-Kondensationsprodukte aus der Reaktion von hydrolysierten Alkoxysilanen, Silanolen, oligomeren oder auch polymeren Si-OH Gruppen

aufweisenden Siliciumverbindungen oder siliciumorganischen Verbindungen verstanden sowie auch Kondensationsprodukte unter Beteiligung von Block-Co-Kondensaten.

Darüber hinaus ist überraschend, dass bei der erfindungsgemäßen Umsetzung die besagten Reaktionen, wie Quartärnisierung, Hydrolyse und gegebenenfalls Kondensation, praktisch gleichzeitig in einem Reaktionsgemisch bei relativ niedrigen Reaktionstemperaturen unterhalb von 100 °C und damit besonders vorteilhaft durchgeführt werden können. Ein weiterer besonderer Vorteil des erfindungsgemäßen Verfahrens ist es, dass die Umsetzung bei diesen relativ niedrigen Temperaturen bei Normaldruck ablaufen kann. Daher kann vorzugsweise auf die Verwendung von teuren und aufwendig zu bedienenden Autoklaven im erfindungsgemäßen Verfahren verzichtet werden, denn in Abhängigkeit von den eingesetzten tertiären Aminen und deren Siedepunkt wird die Reaktion vorteilhaft bei Normaldruck durchgeführt, wenn der Siedepunkt der Amine oberhalb der Reaktionstemperatur liegt. Bevorzugt liegt der Siedepunkt der verwendeten tertiären Amine, insbesondere der Formel II, wie nachstehend erläutert, oberhalb 85 °C, besonders bevorzugt über 100 °C, insbesondere über 120 °C.

So ist besonders überraschend, dass sowohl die Quartärnisierungsreaktion an der Halogenalkylgruppe des eingesetzten halogenalkylfunktionellen Silans der Formel I als auch die Hydrolyse sowie die Kondensation bzw. Cokondensation der im Reaktionsgemisch vorliegenden siliciumorganischen Verbindungen nicht nur gleichzeitig, d. h. im Sinne einer Eintopfreaktion, sondern darüber hinaus auch noch weitgehend selektiv abläuft.

Überraschend konnte die Aufgabe mit einem Verfahren zur Herstellung einer erfindungsgemäßen Zusammensetzung enthaltend quartäre-aminoalkylfunktionelle, siliciumorganische Verbindungen gelöst werden, indem

- mindestens ein halogenalkylfunktionelles Silan der Formel I und/oder gegebenenfalls dessen Hydrolyse- und/oder Kondensationsprodukte, d. h. einschließlich möglicher Homo-, Co-, Block- bzw. Block-Co-Kondensate,

$$(R^10)_{3-x-y}(R^2)_xSi[(R^3)_nCH_2Hal]_{1+y} \qquad (I),$$

  worin Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht,
  Gruppen $R^2$ gleich oder verschieden sind und $R^2$ für eine lineare, verzweigte oder cyclische Alkyl-Gruppe mit 1 bis 8 C-Atomen, eine Aryl-, Arylalkyl- oder Acyl-Gruppe steht,
  Gruppen $R^3$ gleich oder verschieden sind und $R^2$ eine lineare, verzweigte oder cyclische Alkylengruppe mit 1 bis 18 C-Atomen, d. h. eine bivalente Alkylgruppe mit 1 bis 18 C-Atomen, darstellt, dabei kann die Alkylengruppe substituiert sein oder olefinische C-C-Verknüpfungen enthalten, vorzugsweise $-CH_2-$, $-(CH_2)_2-$, $-CH_2CH(CH_3)-$, n gleich 0 oder 1 ist und Hal für Chlor oder Brom steht, und x gleich 0, 1 oder 2, y gleich 0, 1 oder 2 und (x + y) gleich 0, 1 oder 2 sind,

- mit einem tertiären Amin der allgemeinen Formel II in Gegenwart bzw. unter Zusatz einer definierten Menge Wasser umgesetzt wird,

$$N(R^4)_3 \qquad (II),$$

  worin Gruppen $R^4$ gleich oder verschieden sind und $R^4$ für eine Gruppe $(R^10)_{3-x-y}(R^2)_xSi[(R^3)_nCH_2-]_{1+y}$, wobei $R^1$, $R^2$, $R^3$, n, x, y sowie (x+y) ebenfalls die zuvor genannte Bedeutung haben, oder für eine lineare, verzweigte oder cyclische Alkylgruppe mit 1 bis 30 C-Atomen steht, die darüber hinaus substituiert sein kann, vorzugsweise mit mindestens einer Gruppe aus der Reihe $-N(R^5)_2$, wobei Gruppen $R^5$ gleich oder verschieden sind und $R^5$ für ein Wasserstoff, eine lineare, verzweigte oder cyclische Alkyl-Gruppe mit 1 bis 8 C-Atomen, eine Aminoalkylgruppe oder $(R^10)_{3-x-y}(R^2)_xSi[(R^3)_nCH_2-]_{1+y}$ steht, $-SR^6$, wobei Gruppen $R^6$ gleich oder verschieden sind und $R^6$ für eine wasserstoff, eine lineare, verzweigte oder cyclische Alkyl-Gruppe mit 1 bis 8 C-Atomen oder $(R^10)_{3-x-y}(R^2)_xSi[(R^3)_nCH_2-]_{1+y}$ oder gegebenenfalls dessen Hydrolyse- und/oder Kondensationsprodukte steht, $-OR^1$ oder $(R^10)_{3-x}(R^2)_xSi[(R^3)_nCH_2-]$ oder gegebenenfalls dessen Hydrolyse- und/oder Kondensationsprodukte, wobei die Gruppen $R^1$, $R^2$, $R^3$, x und n unabhängig die bereits oben genannte Bedeutung haben, wobei gegebenenfalls zwei Gruppen $R^4$ ihrerseits miteinander verknüpft sind und mit dem Stickstoff des tertiären Amins einen Cyclus bilden,

- und der gebildete Hydrolysealkohol zumindest teilweise entfernt wird.

Darüber hinaus kann man beim vorliegenden Verfahren aber auch weitere Komponenten, beispielsweise als Katalysator, als Verdünnungsmittel oder als Eduktkomponente -um nur einige der Möglichkeiten zu nennen- einsetzen.

Gegenstand der vorliegenden Erfindung ist somit ein Verfahren zur Herstellung einer Zusammensetzung enthaltend quartäre-aminofunktionelle, siliciumorganische Verbindungen, das dadurch gekennzeichnet ist, dass man

- als Komponente A

(i) mindestens ein halogenalkylfunktionelles Alkoxysilan der allgemeinen Formel I

$$(R^10)_{3-x-y}(R^2)_xSi[(R^3)_nCH_2Hal]_{1+y} \quad (I),$$

worin Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht,
Gruppen $R^2$ gleich oder verschieden sind und $R^2$ für eine lineare, verzweigte oder cyclische Alkyl-Gruppe mit 1 bis 8 C-Atomen oder für eine Aryl-, Arylalkyl- oder Acyl-Gruppe steht,
Gruppen $R^3$ gleich oder verschieden sind und $R^3$ eine lineare, verzweigte oder cyclische Alkylengruppe mit 1 bis 18 C-Atomen darstellt,
n gleich 0 oder 1 ist und Hal für Chlor oder Brom steht, und
x gleich 0, 1 oder 2, y gleich 0, 1 oder 2 und (x + y) gleich 0, 1 oder 2 sind,

oder
(ii) ein Hydrolyse- oder Kondensationsprodukt von mindestens einem Alkoxysilan der zuvor genannten allgemeinen Formel I
oder
(iii) ein Gemisch aus mindestens einem Alkoxysilan der zuvor genannten allgemeinen Formel I und einem Hydrolyse- und/oder Kondensationsprodukt von mindestens einem Alkoxysilan der zuvor genannten allgemeinen Formel I

- mit einem tertiären Amin der allgemeinen Formel II als Komponente B,

$$N(R^4)_3 \quad (II),$$

worin Gruppen $R^4$ gleich oder verschieden sind und $R^4$ für eine Gruppe $(R^10)_{3-x-y}(R^2)_xSi[(R^3)_nCH_{2-}]_{1+y}$, wobei $R^1$, $R^2$, $R^3$, n, x, y sowie (x+y) ebenfalls die zuvor genannte Bedeutung haben, oder für eine lineare, verzweigte oder cyclische Alkylgruppe mit 1 bis 30 C-Atomen steht, die darüber hinaus substituiert sein kann,
wobei gegebenenfalls zwei Gruppen $R^4$ ihrerseits miteinander verknüpft sind und mit dem Stickstoff des tertiären Amins einen Cyclus bilden,

- in Gegenwart einer definierten Menge Wasser umsetzt und

- den gebildete Hydrolysealkohol zumindest teilweise aus dem System entfernt, wobei man flüchtiges Löse- bzw. Verdünnungsmittel und gegebenenfalls zu flüchtigem Lösemittel hydrolysierbare Gruppen, insbesondere Hydrolysealkohol, bis auf einen Gehalt in der Gesamtzusammensetzung von unter 12 Gew.-% entfernt, wobei das Entfernen von flüchtigem Löse- bzw. Verdünnungsmittel während der Umsetzung und/oder danach durch Destillation, insbesondere unter vermindertem Druck im Bereich von 1 bis 1000 mbar erfolgen kann.

Erfindungsgemäß wird in dem Verfahren vorteilhaft ein Silan der Formel I, insbesondere ein chloralkylfunktionelles Silan gegebenenfalls dessen Hydrolyse- und/oder Kondensationsprodukt, mit einem tertiären Amin der Formel II gemischt, in Gegenwart von 0,5 bis 500 mol Wasser je mol Silicium-Atome erfolgt eine Quartärnisierung - am Stickstoffatom - und zumindest teilweise Hydrolyse und gegebenenfalls Kondensation (der Alkoxysilane zu Silanol-Gruppen, gefolgt von einer Kondensation unter Ausbildung von Si-O-Si-Brücken) - der Verbindungen der Formel I und II. Vorzugsweise kann die Umsetzung in einer Art "Eintopfreaktion", beispielsweise batchweise, durchgeführt werden, wobei während der Umsetzung bereits Hydrolysealkohol abdestilliert und im Wesentlichen gleichzeitig Wasser nachdosiert werden kann. Dabei kann der Druck im Reaktionsgefäß mit zunehmender Reaktionsdauer auch abgesenkt werden, d. h., dass man die flüchtigen organischen Anteile, insbesondere den entstandenen Hydrolysealkohol, unter vermindertem Druck zumindest anteilig durch Destillation aus dem System entfernt.
Ferner kann man dem Reaktionsgemisch aus Komponente A und B als weitere Eduktkomponente C mindestens eine weitere hydrolysierbare Siliciumverbindung, vorzugsweise eine organoalkoxyfunktionelle Siliciumverbindung, deren Hydrolyse-, Homo-, Co-, Block-Co-Kondensat oder Gemischen dieser zusetzen.
Gemäß der erfindungsgemäßen Quarternisierungsreaktion, Hydrolyse und zumindest teilweise stattfindenden Kondensation, d. h. einschließlich möglicher Homo-, Co-, Block- bzw. Block-Co-Kondensation, sind nach chemischem Verständnis oligomere und/oder polymere siliciumorganische Verbindungen mit mindestens einem quartären- alkylammoniumfunktionellen Rest oder auch cyclische Verbindungen mit quartärem Stickstoff, wie beispielsweise eine N-Alkyl-Pyrimidinium-Verbindung erhältlich.

Erfindungsgemäß wird das Verfahren in Gegenwart, insbesondere unter Zusatz einer definierten Menge Wasser durchgeführt, wobei insbesondere 5 bis 25 mol Wasser je mol Silicium-Atome zugesetzt werden, bevorzugt 10 bis 20 mol Wasser je mol Silicium-Atome, besonders bevorzugt 12 bis 17 mol Wasser je mol Silicium-Atome. Generell kann das Wasser kontinuierlich oder diskontinuierlich zugesetzt werden, wobei es sich als besonders vorteilhaft erwiesen hat, wenn das Wasser diskontinuierlich, bevorzugt chargenweise zugegeben wird, und zwar in 1 bis 10 Chargen, bevorzugt in 2 bis 5 Chargen, besonders bevorzugt in 3 Chargen. So setzt man beim erfindungsgemäßen Verfahren Wasser vorzugsweise in einer Menge von 0,5 bis 500 mol Wasser je mol der im Reaktionsgemisch vorliegenden Silicium-Atome ein, bevorzugt 5 bis 25 mol Wasser je mol der hydrolysierbaren Silicium-Atome bezüglich der eingesetzten Komponenten A sowie gegebenenfalls B bzw. C, besonders bevorzugt 10 bis 20 mol Wasser je mol besagter Silicium-Atome, insbesondere 12 bis 17 mol Wasser je mol besagter Silicium-Atome. Weiter bevorzugt man beim erfindungsgemäßen Verfahren, dass man das Wasser kontinuierlich oder diskontinuierlich in das Reaktionsgemisch der Eduktkomponenten A, B sowie gegebenenfalls C dosiert, insbesondere das Wasser diskontinuierlich unter Rühren zugibt, besonders bevorzugt chargenweise, in 1 bis 10 Chargen, insbesondere in 2 bis 5 Chargen. Ferner ist es bevorzugt, wenn das Wasser im Verfahren möglich rasch dem Silan der Formel I, dem tertiären Amin der Formel II oder dem Gemisch umfassend das Silan und das Amin zugesetzt wird. Überraschenderweise können auch der Zeitpunkt und/oder die chargenweise Zugabe des Wassers einen besonders guten Einfluss auf die Viskosität der Zusammensetzung bei sonst gleichem Gehalt an quartären aminofunktionellen siliciumorganischen Verbindungen haben. Vorzugsweise erfolgt die Wasserzugabe möglichst direkt im Anschluss nach dem Vermischen der Verbindungen der Formel I und II. Eine Zugabe der gesamten Wassermenge in einem Schritt für die Umsetzung kann zur Bildung von unlöslichen Niederschlägen führen, die beispielsweise zur Herstellung von Lösungen der Zusammensetzung aufwendig abfiltriert werden müssen.

Insbesondere führt man die erfindungsgemäße Umsetzung bei einem Druck von 1 mbar bis 1,1 bar, bevorzugt bei Umgebungsdruck (Normaldruck), und einer Temperatur von 20 und 150 °C, bevorzugt von 40 bis 120 °C, besonders bevorzugt von 60 bis 100 °C, insbesondere von 80 bis 95 °C, durchführt. Besonders bevorzugt erfolgt die Umsetzung bei einer Reaktionstemperatur unter 100 °C und bei Normaldruck, insbesondere um 1013,25 hPa plus/minus 25 hPa.

Auch kann die vorliegende Umsetzung in Gegenwart eines Katalysators durchgeführt werden, insbesondere unter Zusatz eine Hydrolyse- und/oder Kondensationskatalysators, beispielsweise - aber nicht ausschließlich - eine organische oder anorganische Säure, wie Ameisensäure, Essigsäure, Propionsäure, Citronensäure, Chlorwasserstoff, als Gas, konzentrierte oder wässrige Salzsäure, Borsäure, Salpetersäure, Schwefelsäure, Phosphorsäure, um nur einige zu nennen.

Darüber hinaus kann man für die Durchführung der Umsetzung dem Reaktionsgemisch aus den Komponenten A und B oder einem Reaktionsgemisch aus den Komponenten A, B und mindestens einer weiteren Komponente C ein Verdünnungsmittel, beispielsweise ein Alkohol, wie Methanol, Ethanol, Isopropanol, dem Reaktionsgemisch zusetzen, wobei das zugesetzte Verdünnungsmittel geeigneterweise bei der Entfernung des bei der Umsetzung entstandenen Hydrolysealkohols aus dem System gleichsam wieder entfernt wird.

Der bei der Umsetzung gebildete Hydrolysealkohol wird im Wesentlichen vollständig entfernt, vorzugsweise durch Destillation, insbesondere bereits während der Umsetzung. Gemäß einer besonders bevorzugten Verfahrensführung kann etwa die durch Destillation entfernte Menge an Hydrolyselalkohol und Wasser im azeotropen Gemisch durch zusätzliche Zugabe von Wasser ausgeglichen werden.

So kann bei erfindungsgemäßen Verfahren vorteilhaft flüchtiges Löse- bzw. Verdünnungsmittel und gegebenenfalls zu flüchtigem Lösemittel hydrolysierbare Gruppen, insbesondere Hydrolysealkohol, bis auf ein Gehalt in der Gesamtzusammensetzung von unter 12 Gew.-% bis 0 Gew.-% entfernt werden, vorzugsweise unter 10 Gew.-%, besonders bevorzugt unter 5 Gew.%, ganz besonders bevorzugt 2 Gew.-% bis 0,0001 Gew.-%, insbesondere 1 bis $\leq$ 0,5 Gew.- %, wobei das Entfernen von flüchtigem Löse- bzw. Verdünnungsmittel während der Umsetzung und/oder danach durch Destillation, insbesondere unter vermindertem Druck im Bereich von 1 bis 1000 mbar, bevorzugt von 80 bis 300 mbar, erfolgen kann. Geeigneterweise kann man dabei aber auch den Druck im Laufe der Umsetzung von Umgebungsdruck auf einen verminderten Druck absenken.

Die reine Quartärnisierungsreaktion von Verbindungen der Formel I bzw. gemäß Komponete A und des tertiären Amins der Formel II gemäß Komponete B zu mindestens einem besagten quartären-aminoalkylfunktionellen Silan ist nachfolgend modellhaft dargestellt, wobei die Formeln I und II wie vorstehend definiert sind:

$$\underset{(I)}{(R^1 0)_{3-x-y}(R^2)_x Si[(R^3)_n CH_2 Hal]_{1+y}} + \underset{(II)}{N(R^4)_3} \text{ -> } \underset{(IV)}{(R^1 0)_{3-x-y}(R^2)_x Si[(R^3)_n CH_2\text{-}N^+(R^4)_3 Hal^-]_{1+y}}$$

Ferner können sich während der Umsetzung durch Hydrolyse sowie Kondensation von Verbindungen der Formeln I, II und/oder entstandenen Quartärnisierungsprodukten (IV) so genannte oligomere und/oder polymere quartäre aminofunktionelle siliciumorganische Verbindungen bilden, wie sie nachfolgend erläutert sind.

So wird nach chemischem Verständnis angenommen, dass unter den erfindungsgemäßen Reaktionsbedingungen die Umsetzung von Verbindungen der Formeln I und II unter Quartärnisierung und zumindest teilweisen Hydrolyse abläuft, wie es nachfolgend modellhaft veranschaulicht wird (Gruppen R können dabei eine Alkyl- oder Aminoalkyl-Gruppe, wie beispielsweise - aber nicht ausschließlich - Methyl, Ethyl, Propyl, Butyl, N,N-Dimethylaminoethyl, darstellen):

Qartärnisierung und partielle bzw. vollständige Hydrolyse:

$$Cl\text{-}(CH_2)_3\text{-}Si(OEt)_3 + (R)_3N + H_2O \rightarrow Cl^-(R)_3N^+\text{-}(CH_2)_3\text{-}Si(OEt)_2(OH) + EtOH$$

$$Cl\text{-}(CH_2)_3\text{-}Si(OEt)_3 + (R)_3N + 2\ H_2O \rightarrow Cl^-(R)_3N^+\text{-}(CH_2)_3\text{-}Si(OEt)(OH)_2 + 2\ EtOH$$

$$Cl\text{-}(CH_2)_3\text{-}Si(OEt)_3 + (R)_3N + 3\ H_2O \rightarrow Cl^-(R)_3N^+\text{-}(CH_2)_3\text{-}Si(OH)_3 + 3\ EtOH$$

Kondensation:

$$x\ Cl^-(R)_3N^+\text{-}(CH_2)_3\text{-}Si(OH)_3 \rightarrow [(HO\text{-})_2Si(\text{-}(CH_2)_3\text{-}N^+(R)_3)\text{-}[O\text{-}Si((\text{-}(CH_2)_3\text{-}N^+(R)_3)(OH)]_{x\text{-}2}\text{-}O\text{-}Si(\text{-}(CH_2)_3\text{-}N^+(R)_3)(OH)_2] \bullet x\ Cl^- + x\ H_2O$$

$$Cl^-(R)_3N^+\text{-}(CH_2)_3\text{-}Si(OEt)(OH)_2 + x\ Cl^-(R)_3N^+\text{-}(CH_2)_3\text{-}Si(OH)_3 \rightarrow [EtOSi(OH)(\text{-}(CH_2)_3N^+(R)_3)\text{-}[O\text{-}Si(\text{-}(CH_2)_3N^+(R)_3(OH))]_{x\text{-}1}\text{-}O\text{-}Si((\text{-}(CH_2)_3N^+(R)_3)(OH)2] \bullet (x{+}1)Cl^- + (x{+}1)H_2O$$

Dabei kann x eine Zahl von 2 bis $\infty$ sein.

Besonders bevorzugt erfolgt die erfindungsgemäße Umsetzung von Silanen der Formel I im Sinne der Komponente A mit tertiären Aminen der Formel II als Komponente B, gegebenenfalls in Gegenwart von mindestens einer Siliciumverbindung der Formel III als Komponente C des Reaktionsgemischs, im erfindungsgemäßen Verfahren ausschließlich in Gegenwart von Feuchtigkeit oder Wasser, wobei Hydrolyse-, Homo- und/oder Co-Kondensationsprodukte von II und gegebenenfalls III auch erfasst sind und vorzugsweise pro mol Silicium 0,5 mol bis 500 mol, besonders bevorzugt 0,5 bis 200 mol Wasser eingesetzt werden.

Beispielsweise - aber nicht ausschließlich - kann man beim erfindungsgemäßen Verfahren als Komponente A vorteilhaft ein Siliciumverbindung aus der Reihe 3-Chlorpropyltrimethoxysilan, 3-Chlorpropyltriethoxysilan, 3-Chlorpropyl-methyldimethoxysilan, 3-Chlorpropyl-methyldiethoxysilan, 3-Chlorpropyl-dimethylethoxysilan oder 3-Chlorpropyl-dimethylmethoxysilan oder ein Hydrolyse- oder Kondensationsprodukt der zuvor genannten Alkoxysilane einsetzen.

Generell können alle dem Fachmann bekannten tertiäre Aminogruppen enthaltende Verbindungen als Komponente B zur Herstellung der erfindungsgemäßen Zusammensetzung geeignet, bevorzugt, wenn ihr Siedepunkt über 85 °C, besonders bevorzugt, wenn ihr Siedepunkt über 100 °C oder über 120 °C beträgt.

Ein besonderer Vorteil des erfindungsgemäßen Verfahrens ist die niedrige Reaktionstemperatur für die Umsetzung, die zwischen 20 bis 150 °C liegt, insbesondere zwischen 40 bis 120 °C, bevorzugt zwischen 60 bis 100 °C, besonders bevorzugt zwischen 80 bis 95 °C, und vorzugsweise wird die Umsetzung im Wesentlichen bei Normaldruck durchgeführt. Erfindungsgemäß kann die Umsetzung bei einer Temperatur unterhalb 100 °C und vorzugsweise bei Normaldruck durchgeführt werden.

Beispielsweise - aber nicht ausschließlich - kann man beim erfindungsgemäßen Verfahren als Komponente B mindestens ein tertiäres Amin ausgewählt aus der Reihe Tetramethylethylendiamin, Pentamethyldiethylentriamin, Hexadecyldimethylamin, Octadecyldimetylamin, Tetradecyldimethylamin, Dodecyldimethylamin, Decyldimethylamin, Octyldimethylamin, Tetraethylethylendiamin, Pentaethyldiethylentriamin, Hexadecyldiethylamin, Octadecyldietylamin, Tetradecyldiethylamin, Dodecyldiethylamin, Decyldiethylamin, Octyldiethylamin, iso-Hexadecyldimethylamin, iso-Octadecyldimetylamin, iso-Tetradecyldimethylamin, iso-Dodecyldimethylamin, iso-Decyldimethylamin, iso-Octyldimethylamin, iso-Tetraethylethylendiamin, iso-Pentaethyldiethylentriamin, iso-Hexadecyldiethylamin, iso-Octadecyldietylamin, iso-Tetradecyldiethylamin, iso-Dodecyldiethylamin, iso-Decyldiethylamin, iso-Octyldiethylamin, Tris(trimethoxysilylpropyl)amin, Tris(triethoxysilylpropyl)amin, Tris(tri-methoxysilylmethyl)amin, Tris(triethoxysilylmethyl)amin, vorteilhaft einsetzen.

Für die Umsetzung des halogenalkylfunktionellen Silans, insbesondere des Chloralkylsilans der Formel I, wird vorzugsweise ein molares Verhältnis von Halogenalkyl-Gruppe zu tertiärer Amin-Gruppe, insbesondere eines Amins der Formeln II, V und/oder VI, von 2 : 1 bis 1 : m eingestellt, wobei m die Anzahl der tertiären Amin-Gruppen ist, insbesondere ist m eine ganze Zahl zwischen 1 bis 100. So wird beim erfindungsgemäßen Verfahren bevorzugt, dass man die Komponenten A und B in einem Verhältnis einsetzt, wobei das molare Verhältnis der Siliciumverbindung im

Sinne der Formel I zur tertiären Aminverbindung im Sinne der Formel II von 2 : 1 bis 1 : m ist, wobei m die Anzahl der tertiären Amin-Gruppen der Formel II darstellt und m eine ganze Zahl zwischen 1 bis 100 ist, bevorzugt von 1 bis 10, besonders bevorzugt 1, 2, 3, 4, 5, 6 oder 7, insbesondere 1 oder 2.

Darüber hinaus kann man beim erfindungsgemäßen Verfahren vorteilhaft Komponenten A und C, die nachfolgend noch näher ausgeführt werden, in einem molaren Verhältnis von 1 : < 4, bevorzugt 1 : 0 bis 2, besonders bevorzugt 1 : 0,001 bis 1, insbesondere von 1 : 0,1 bis 0,5 einsetzen.

Beispielsweise - aber nicht ausschließlich - kann man beim erfindungsgemäßen Verfahren als Komponente C mindestens eine Siliciumverbindung aus der Reihe Siliciumtetrachlorid, Tetramethoxysilan, Tetraethoxysilan, Tetrapropoxysilan, Methyltrimethoxysilan, Methyltriethoxysilan, Ethyltrimethoxysilan, Ethyltriethoxysilan, n-Propyltrimethoxysilan, n-Propyltriethoxysilan, n- bzw. i-Butyltrimethoxysilan, n- bzw. i-Butyltriethoxysilan, n- bzw. i-Octyltrimethoxysilan, n- bzw. i-Octyltriethoxysilan, Hexadecyltrimethoxysilan, Hexadecyltriethoxysilan, Vinyltriethoxysilan, Vinyltrimethoxysilan, Vinyltris(2-methoxyethoxy)silan, Phenyltrimethoxysilan, Phenyltriethoxysilan, Tridecafluor-1,1,2,2-tetrahydrooctyltrimethoxysilan, Tridecafluor-1,1,2,2-tetrahydrooctyltriethoxysilan, 3-Mercaptopropyltrimethoxysilan, 3-Mercaptopropyltriethoxysilan, 1-Mercaptomethyltrimethoxysilan, 1-Mercaptomethyltriethoxysilan, 3-Glycidyloxypropyltriethoxysilan, 3-Glycidyloxypropyltrimethoxysilan, 3-Methacryloxyisobutyltrimethoxysilan, 3-Methacryloxyisobutyltriethoxysilan, 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, 3-Ureidopropyltriethoxysilan, 3-Ureidopropyltrimethoxysilan, 3-Aminopropyltrimethoxysilan, 3-Aminopropyltriethoxysilan, 3-Aminopropylmethyldimethoxysilan, 3-Aminpropylmethyldiethoxysilan, 1-Aminomethyltrimethoxysilan, 1-Aminomethyltriethoxysilan, 2-Aminoethyltrimethoxysilan, 2-Aminoethyltriethoxysilan, 3-Aminoisobutyltrimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-amino-methyltriethoxysilan, N-n-Butyl-1-aminomethylmethyldimethoxysilan, N-n-Butyl-1-aminomethyltrimethoxysilan, N-n-Butyl-1-aminomethylmethyltriethoxysilan, Benzyl-3-aminopropyltrimethoxysilan, Benzyl-3-aminopropyltriethoxysilan, Benzyl-2-aminoethyl-3-aminopropyltrimethoxysilan, Benzyl-2-aminoethyl-3-aminopropyltriethoxysilan, N-Formyl-3-aminopropyltriethoxysilan, N-Formyl-3-aminopropyltrimethoxysilan, N-Formyl-1-aminomethylmethyldimethoxysilan, N-Formyl-1-aminomethylmethyldiethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxysilan, (1-Aminoethylamino)-methyltrimethoxysilan, (1-Aminoethylamino)-methyltriethoxysilan, Tris(trimethoxysilylpropyl)amin, Tris(triethoxysilylpropyl)amin, Tris(trimethoxysilylmethyl)amin, Tris-(triethoxysilylmethyl)amin, Bis(trimethoxysilylpropyl)amin, Bis(triethoxysilylpropyl)-amin, Bis(diethoxymethylsilylpropyl)amin, Bis(dimethoxymethylsilylpropyl)amin, Bis(triethoxysilylmethyl)amin, Bis(trimethoxysilylmethyl)amin, Bis(diethoxymethylsilylmethyl)amin, Bis(dimethoxymethylsilylmethyl)amin,

$(H_3CO)_3Si(CH_2)_3NH(CH_2)_2NH(CH_2)_3Si(OCH_3)_3$,

$(H_3CO)_3Si(CH_2)_3NH(CH_2)_2NH(CH_2)_2NH(CH_2)_3Si(OCH_3)_3$,

$(H_3CO)_2(CH_3)Si(CH_2)_3NH(CH_2)_2NH(CH_2)_3Si(OCH_3)_2(CH_3)$,

$(H_3CO)_3(CH_3)Si(CH_2)_3NH(CH_2)_2NH(CH_2)_2NH(CH_2)_3Si(OCH_3)_2(CH_3)$,

oder ein Gemisch aus mindestens zwei der zuvor genannten Verbindungen oder ein Hydrolyse- bzw. Kondensationsprodukt einer der zuvor genannten Verbindungen oder ein Hydrolyse-, Kondensations-, Co-, Block- bzw. Block-Cokondensationsprodukt aus mindestens zwei der zuvor genannten Verbindungen einsetzen.

Der bei der Umsetzung im erfindungsgemäßen Verfahren durch Hydrolyse entstehende Hydrolysealkohol, und gegebenenfalls zugesetztes Löse- bzw. Verdünnungsmittel, wird geeigneterweise durch Destillation entfernt, bevorzugt wird Wasser nachdosiert, um insbesondere die zuvor abdestillierte Menge an Wasser, Hydrolysealkohol und Lösemittel im Wesentlichen zu ersetzen. Alternativ kann eine beliebige Menge Wasser zugesetzt werden. Die Destillation erfolgt vorzugsweise unter vermindertem Druck im Bereich zwischen 0,01 bis 1000 mbar, insbesondere zwischen 1 bis 1000 mbar, bevorzugt zwischen 80 bis 300 mbar. Das Lösemittel bzw. der Hydrolysealkohol wird aus der Reaktionsmischung entfernt, bis die Zusammensetzung einen Gehalt an flüchtigem Lösemittel, wie Hydrolysealkohol, und gegebenenfalls zu flüchtigem Lösemittel hydrolysierbare Gruppen, wie Alkoxygruppen, von unter 12 Gew.-% bis 0 Gew.-% in der Gesamtzusammensetzung erhalten wird, insbesondere unter 12 Gew.-% bis 0,0001 Gew.-%, bevorzugt unter 10 Gew.-% bis 0 Gew.-%, besonders bevorzugt unter 5 Gew.-% bis 0 Gew.-%, besser unter 2 Gew.-% bis 0 Gew.-%, bis unter 1 bis 0 Gew.-%. Besonders bevorzugt liegt der Gehalt an flüchtigem Lösemittel zwischen 0,5 bis 0,001 Gew.-% in der Gesamtzusammensetzung.

Als flüchtige Lösemittel oder zu flüchtigen Lösemitteln hydrolysierbare Gruppen werden Alkohole, wie Methanol, Ethanol, iso-Propanol, n-Propanol, und Alkoxygruppen, die zu Alkoholen hydrolysieren, Acyloxy-Gruppen enthaltende

Reste sowie, die durch Hydrolyse abgeleitete Essigsäure oder Ameisensäure, oder auch Aryloxy-Gruppen, die Phenole bilden können und auch Glykole sowie teilveretherte Glykole, wie Ethylenglykol, Diethylenglykol oder Methoxyethanol, die entweder der Formulierung zugegeben werden oder durch Hydrolyse ihrer Silylester entstehen, aufgefasst.

Besonders bevorzugt werden in dem erfindungsgemäßen Verfahren ein tertiäres Amin der allgemeinen Formel II eingesetzt,

$$N(R^4)_3 \qquad (II)$$

wobei $R^4$ unabhängig voneinander eine lineare, verzweigte und/oder cyclische substituierte oder unsubstituierte Alkyl-Gruppe mit 1 bis 30 C-Atomen ist, gegebenenfalls substituiert mit einer oder mehreren $-NR^5_2$-, $-OR^1$- und/oder $-SR^6$-Gruppen, mit $R^1$ unabhängig gleich Wasserstoff oder $R^4$ ist; $R^6$ eine Alkyl-, Alkenyl-Gruppe mit 1 bis 30 C-Atomen ist; und/oder ein, zwei oder drei $R^4$ unabhängig $(R^{1}0)_{3-x}(R^2)_xSi[(R^3)_nCH_2-]$ sind, wobei $R^1$, $R^2$, $R^3$, x und n die vorstehende Bedeutung aufweisen, oder gegebenenfalls dessen Hydrolyse- und/oder Kondensationsprodukte. Zweckmäßig kann mindestens ein $R^4$ mindestens ein oligomeres organofunktionelles Silanol oder Co-Kondensat, Block-Co-Kondensat umfassen, insbesondere umfasst $R^4$ einen $(-O_{1/2}-)_{3-x}(R^2)_xSi[(R^3)_nCH_2-]$-Rest in einer durch Kondensation erhaltenen siliciumorganischen Verbindung.

Alternativ können zwei $R^4$ als $(R^4)_2$ zusammen mit einem Heteroatom N, S oder O einen Cyclus oder Heteroaromaten mit 1 bis 7 C-Atomen bilden, wie beispielsweise aber nicht ausschließlich Pyrrol, Pyridin, etc.

Weitere tertiäre Amine oder Aminoverbindungen, die zur Herstellung der quartären aminofunktionellen siliciumorganischen Verbindung eingesetzt werden können, um entsprechende Produkte zu bilden, werden nachstehend offenbart.

Als tertiäre Amine, insbesondere der Formel II, eigenen sich besonders bevorzugt Amine mit einem Siedepunkt oberhalb 85 °C und/oder insbesondere Amine ausgewählt aus der folgenden Gruppe, wie Amine der Formel IIa, IIb und/oder ein Amin mit einem Rest der Formel IIc und/oder der Formel IId, beispielsweise mit IIc oder IId als eine Gruppe B des Silans der allgemeinen Formel III, und/oder daraus abgeleitete Verbindungen.

Erfindungsgemäß kann als tertiäres Amin der Formel II ebenfalls ein Amin ausgewählt aus den Formeln IIa und IIb in das Verfahren vorteilhaft eingesetzt werden,

$$(R^{14})_2N[CH_2CH_2N(R^{14})]_hCH_2CH_2N(R^{14})_2 \qquad (IIa),$$

worin $R^{14}$ unabhängig ein unverzweigtes, verzweigtes und/oder cyclisches Alkyl, Aryl, insbesondere Benzyl, oder Alkylaryl mit 1 bis 20 C-Atomen ist, wobei $R^{14}$ bevorzugt Methyl oder Ethyl, besonders bevorzugt Methyl ist, und h gleich 0, 1, 2, 3, 4, 5, 6 oder 7 ist, insbesondere ist h gleich 0, 1, 2, 3 oder 4; bevorzugt ist IIa Tetramethylethylendiamin oder Pentamethyldiethylentriamin; mit $R^{14}$ gleich Methyl ($CH_3$) ist IIa gleich $(CH_3)_2N[CH_2CH_2N(CH_3)]_hCH_2CH_2N(CH_3)_2$;

$$[(CH_3)-CH_2)_w]_{p*}N(R^{14})_{3-p*} \qquad (IIb),$$

worin w gleich 2 bis 20, insbesondere mit w gleich 8 bis 14, und $R^{14}$ die vorgenannte Bedeutung hat und p* gleich 1 oder 2 ist, wie insbesondere im di-Octylmethylamin, di-n-Nonylmethylamin, di-n-Decylmethylamin, di-n-Undecylmethylamin, di-n-Dodecylmethylamin, di-n-Tridecylmethylamin oder di-n-Tetradecylmethylamin.

Besonders bevorzugt werden tertiäre Amine aus der Gruppe Tetramethylethylendiamin, Pentamethylethylentriamin, Tetraethylethylendiamin, Pentaethylethylentriamin und/oder Tributylamin oder Mischungen enthaltend mindestens zwei dieser Amine eingesetzt.

Generell kann auch ein cyclisches tertiäres Amin und/oder eine aromatische Aminoverbindung beim vorliegenden Verfahren eingesetzt werden, wie durch Reaktion mit N-Alkyl-Pyrrol, N-Alkyl-Pyrrolidin, N-Alkyl-Piperidin, N-Alkyl-Morpholin, N-Alkyl-Imidazol, N-Alkyl-Piperazin, Pyridin, Pyrazin.

Gemäß einer weiteren Alternative kann als tertiäres Amin der Formel II ein aminoalkylfunktionelles Alkoxysilan mit einem Rest der Formel IIc oder dessen Hydrolyse- und/oder Kondensationsprodukt in dem erfindungsgemäßen Verfahren umgesetzt werden; beispielsweise - aber nicht ausschließlich - kann Formel IIc oder IIc* eine Gruppe B der Formel III entsprechen:

$$[(CH_3(CH_2)_o]_2N(R^{15})- \qquad (IIc)$$

$$[(CH_3(CH_2)_o]_2N(CH_2)_p- \qquad (IIc^*),$$

wobei $R^{15}$ eine lineare, verzweigte und/oder cyclische Alkylen-, Arylen- oder Alkylenaryl-Gruppe mit 1 bis 20 C-Atomen ist, wobei in IIc und/oder IIc* $0 \leq o \leq 6$, und o unabhängig = 0, 1, 2, 3, 4, 5 oder 6 ist, insbesondere kann $R^{15}$ ein $-(CH_2)_p$-sein, wie in Formel IIc* dargestellt, wobei $0 \leq p \leq 6$ ist, und p unabhängig = 0, 1, 2, 3, 4, 5 oder 6 ist,

und/oder das tertiäre Amin der Formel II kann einen Rest der Formel IId aufweisen, insbesondere kann Formel IId oder spezieller Formel IId* ein Rest eines aminoalkylfunktionellen Alkoxysilans oder dessen Hydrolyse- und/oder Kondensationsprodukt sein; beispielsweise - aber nicht ausschließlich - kann auch Formel IId oder IId* eine Gruppe B der Formel III entsprechen:

$$(R^{14})_2N[(CH_2)_g(NH)]_s\text{-}(R^{15})\text{-} \qquad (IId)$$

$$(CH_3(CH_2)_f)_2N[(CH_2)_g(NH)]_s\text{-}(CH_2)_i\text{-} \qquad (IId^*)$$

worin $R^{14}$ und $R^{15}$ in IId unabhängig voneinander die vorgenannte Bedeutung haben und worin in Formel IId und/oder IId* $0 \leq g \leq 6$, $0 \leq s \leq 6$, d. h. g und/oder s unabhängig gleich 0, 1, 2, 3, 4, 5 oder 6 sind und/oder, in Formel IId* $R^{14}$ für eine $(CH_3(CH_2)_f$-Gruppe und $R^{15}$ für eine $-(CH_2)_i$-Gruppe stehen, mit $0 \leq f \leq 3$; $0 \leq g \leq 6$, $0 \leq s \leq 6$, $0 \leq i \leq 6$, d. h. f = 0, 1 oder 2; g, s und/oder i unabhängig gleich 0, 1, 2, 3, 4, 5 oder 6 sind.

Beispiele von Verbindungen dieser tertiären silanfunktionalisierten Amine der allgemeinen Formel II sind nachfolgend dargestellt, wobei die Reste der Verbindungen wie in IIc, IIc* und III definiert substituiert sind:

$$([(CH_3(CH_2)_o]_2N(R^{15})\text{-})_{1+b}Si(R^8)_a(R^70)_{3\text{-}a\text{-}b}$$

$$((R^{14})_2N[(CH_2)_g(NH)]_s\text{-}(R^{15})\text{-})_{1+b}Si(R^8)_a(R^7O)_{3\text{-}a\text{-}b}$$

mit a gleich 0, 1 oder 2, b gleicht 0, 1 oder 2 und (a+b) < 3.

Zusätzlich und/oder alternativ kann das tertiäre Amin ein N-Alkyl-Pyrrolidin, N-Aryl-Pyrrolidin, N-Alkyl-Piperidin, N-Alkyl-Morpholin, N-Alkyl-Imidazolidin, N-Alkyl-Piperazin, N,N'-Dialkylpiperazin, Acridin, Phenazin, Pyrazin sein.

Verwendbare tertiäre Amine sind zweckmäßigerweise Trimethylamin, Triethylamin und/oder bevorzugt mindestens eins der folgenden Amine, ausgewählt aus Triisopropylamin, Tri-n-propylamin, Tribenzylamin, Dimethylethylamin, Dimethyl-n-butylamin, Dimethyl-n-hexylamin, Diethyl-n-octylamin, Dimethyldodecylamin, Dimethylpentadecylamin, Diethyloctadecylamin, Dimethylheptadecylamin, Diethyl-tetradecylamin, Dimethylhexacosylamin, Methylethylisopropylamin, Methylethylbenzylamin, Diethyldecylamin, Methyldipentylamin, Kethylethylheptylamin, Methylethylnonylamin, Cyclopropyldimethylamin, Cyclobutyldiethylamin, Cyclopentyldi-n-propylamin, Cyclohexyldimethylamin, Cyclohexyldiethylamin, Cyclohexylmethylethylamin, Cycloheptyldimethylamin, Cyclooctyldiethylamin, Cyclohexyldioctylamin, Cyclononyldimethylamin, Cyclodecyldiethylamin, Cycloundecyldimethylamin, Cyclododecyldiethylamin, N-Methyl-pyrrolidin, (= N-Methylazolidin laut IUPAC-Regeln), N-Ethylpyrrolidin, N-Isopropylpyrrolidin, N-Benzyl-5-pyrrolidin, N-Methylpiperidin, N-Ethylpipericin. N-n/iso-Propylpiperidin, N-Benzylpiperidin, N-Methylmorpholin oder 4-Methyltetrahydro-1,4-oxazin, N-Ethylmorpholin, N-n-Butylmorpholin, N-Benzylmorpholin, N-Methylimidazolidin, N-Ethylimidazolidin, N-n-Pentylimidazolidin, N-Benzylimidazolidin, N-Methylpiperazin, N-Ethylpiperazin, N-Isopropylpiperazin, N-Benzylpiperazin, N-Methylthiazolidin, N-Ethylthiazolidin, N-Methyloxazolidin, N-Methyltetrahycro-1,4-thiazin, N-Ethyltetrahycro-1,4-thiazin, N-Benzyltetrahydro-1,4-thiazin, N-Methylperhydroacepin, N-Methylhexamethylenimin, N-Ethylperhydroacepin, N-Benzylperhycroacepin, N-Methylperhydrooxin (= N-Methylheptamethylenimin), N-Isopropylperhydrooxin, N-Benzylperhydrooxin, N-Ethyltetramethylenimin, N-Methylpentamethylenimin, N-Ethylpentamethylenimin und N-Benzylpentamethylenimin.

Als tertiäre Amine der Formel II können vorzugsweise auch die folgenden aminofunktionellen Alkoxysilane mit tertiären Aminogruppen eingesetzt werden, wie insbesondere tertiäre Aminoalkoxysilane, Diaminoalkoxysilane, Triaminoalkoxysilane, Bis(triethoxysilylalkyl)amin oder Tris(triethoxysilylalkyl)amin.

Als Bis(alkoxysilylalkyl)amin-Verbindungen kommen insbesondere $(OR^{1**})_{b*}R^{2*}{}_{a*}Si\text{-}A\text{-}SiR^{2*}{}_{a*}(OR^{1**})_{b*}$ in Betracht, mit a*, b* = 0, 1, 2 oder 3 und a* + b* gleich 3 je Si-Atom, wobei $R^{1**}$ und $R^{2*}$ unabhängig voneinander Alkyl mit 1 bis 24 C-Atomen sind, vorzugsweise Methyl, Ethyl und/oder Propyl. Mit A für eine bisaminoalkylfunktionelle Gruppe der Formel V, wobei $N^{\#}$ in V dem tertiären Stickstoff (N) der Formel V entsprechen kann,

$$-(CH_2)_{i*}\text{-}[NR^{16}(CH_2)_{f*}]_{g*}N^{\#}R^{16}[(CH_2)_{f*}NR^{16}]_{g*}\text{-}(CH_2)_{i*}\text{-} \qquad (V)$$

worin $R^{16}$ unabhängig eine verzweigte, unverzweigte und/oder cyclische Alkyl-, Aryl- oder Alkylaryl-Gruppe mit 1 bis 20 C-Atomen sein kann, wobei $R^{16}$ bevorzugt Methyl- oder Ethyl-, besonders bevorzugt Methyl- ist, und worin in Formel V i*, f* oder g* jeweils unabhängig voneinander gleich oder verschieden sind, mit i* = 0 bis 8, f* = 1, 2 oder 3, g* = 0, 1 oder 2 und $R^{1**}$ einem linearen, cyclischen und/oder verzweigten Alkyl-Rest mit 1 bis 4 C-Atomen entsprechen, wobei i* insbesondere eine der Zahlen 1, 2, 3 oder 4, bevorzugt 3, entspricht, besonders bevorzugt ist $[(H_5C_2O)_3Si(CH_2)_3NCH_3(CH_2)_3Si(OC_2H_5)_3$.

Als Tris(alkoxysilylalkyl)amine, insbesondere der Formel VI, kommen in Betracht,

$N[ZSi(R^{12})_{\Omega}(OR^{13})_{3-\Omega}]_3$ (VI)

wobei Z unabhängig ein bivalenter Alkylen-Rest ist, insbesondere aus der Reihe - $CH_2$-, -$(CH_2)_2$-, -$(CH_2)_3$- oder -[$CH_2CH(CH_3)CH_2$]-, $R^{12}$ ein linearer, verzweigter und/oder cyclischer Alkyl-Rest mit 1 bis 24 C-Atomen ist, insbesondere mit 1 bis 16 C-Atomen, bevorzugt mit 1 bis 8 C-Atomen, besonders bevorzugt mit 1 bis 4 C-Atomen, oder ein Aryl-Rest ist und unabhängig $\Omega$ = 0 oder 1 ist, $R^{13}$ jeweils unabhängig voneinander in VIII ein linearer, cyclischer und/oder verzweigter Alkyl-Rest mit 1 bis 24 C-Atomen ist, insbesondere mit 1 bis 16 C-Atomen, bevorzugt mit 1 bis 8 C-Atomen, besonders bevorzugt mit 1 bis 4 C-Atomen. Vorzugsweise ist $R^{13}$ ein Methyl-, Ethyl- oder Propyl-Rest. Der Stickstoff der Formel VIII entspricht auch hier dem Stickstoff (N) der allgemeineren Formel V und $[ZSi(R^{12})_{\Omega}(OR^{13})_{3-\Omega}]$ entspräche einem $R^1$. Bevorzugt wird als tertiäres Tris(trialkoxysilan)amin Tris(triethoxysilylpropyl)amin oder Tris(trimethoxysilylpropyl)amin eingesetzt. Allgemein können Verbindungen der Formel VI, deren Hydrolyse- und/oder Kondensationsprodukte als tertiäres Amin beim erfindungsgemäßen Verfahren eingesetzt werden.

In das erfindungsgemäße Verfahren wird besonders bevorzugt ein halogenalkylfunktionelles Silan der der Formel I ausgewählt aus der folgenden Gruppe eingesetzt: Chlorpropyltrimethoxysilan, Chlopropyltriethoxysilan, Chorpropylmethyldimethoxysilan und Chlorpropylmethyldiethoxysilan und/oder dessen Hydrolyse- und/oder Kondensationsprodukt.

Weitere beim erfindungsgemäßen Verfahren vorzugsweise einsetzbare Halogenalkylsilane der Formel I sind, insbesondere ausgewählt aus der Gruppe, 3-Chlorpropyltrimethoxysilan, 3-Chlorpropyltriethoxysilan, 3-Chlorpropyltripropoxysilan, Chlorpropyl-methyldimethoxysilan, Chlorpropylmethyldiethoxysilan, Chlorpropyl-dimethylethoxysilan, Chlorpropyldimethylmethoxysilan, Chlorethyltrimethoxysilan, Chlorethyltriethoxysilan, Chlorethylmethyldimethoxysilan, Chlorethylmethyldiethoxysilan, Chlorethyldimethylmethoxysilan, Chlorethyldimethylethoxysilan, Chlormethyltriethoxysilan, Chlormethyltrimethoxysilan, Chlormethylmethyldimethoxysilan, Chlormethylmethyldiethoxysilan, Chlormethyldimethylmethoxysilan, Chlormethyldimethylethoxysilan, 2-Chlorisopropyltris(methoxyethoxy)silan, 3-Chlorpropylcyclohexyldiethoxyslan, 3-Chlorisobutyltrimethoxysilan, 3-Chlorisobutyltriethoxysilan, 3-Chlorpropylcyclohexyldimethoxysilan, 3-Bromisropyldiethylcyclohexoxysilan, 3-Chlorpropylcyclopentyldienethoxysilan, 3-Bromisobutyltrimethoxysilan, 3-Chlorisobutyl-bis(ethoxyethoxy)methylsilan, 4-Brom-n-butyltriethoxysilan, 4-Chlor-n-butyldiethoxycyclopentylsilan, 5-Chlor-n-pentyltri-n-butoxysilan, 5-Brom-n-pentyltriethoxysilan, 4-Brom-3-methylbutyldimethoxyphenylsilan, 5-Brom-n-pentyltri-n-butoxysilan, 5-Chlor-n-pentyltriethoxysilan, 6-Chlor-n-hexylethoxydimethylsilan, 6-Brom-n-hexylpropyldipropoxysilan, 6-Chlor-n-hexyldiethoxyethylsilan, 7-Chlor-n-heptyltriethoxysilan, 7-Chlorheptyldimethoxycycloheptylsilan, 7-Brom-n-heptyl-, diethoxycyclooctylsilan, 8-Chlor-n-oxtyltriethoxysilan, 8-Brom-n-octyldimethylcyclohexoxysilan, 3-Chlorpropyldiethoxyphenylsilan, 3-Chlorpropylmethoxyethoxybenzylsilan, 3-Brompropyldimethoxybenzylsilan und/oder deren Hydrolyse- und/oder Homo- und/oder Co-Kondensationsprodukte oder zweckmäßig 1,4-Chlorphenyltrimethoxysilan, 1,4-Chlorbenzyltriethoxysilan und Chlormethyl-p-methylphenyl-trimethoxysilan und/oder deren Hydrolyse- und/oder Homo- und/oder Co-Kondensationsprodukte eingesetzt werden. Besonders bevorzugt werden reine Chloralkyl-substituierte Alkoxysilane in dem erfindungsgemäßen Verfahren eingesetzt.

In bevorzugten Verfahren ist $R^3$ in Formel I ein lineares, verzweigtes und/oder cyclisches Alkylen mit 1 bis 18 C-Atomen, insbesondere ein Methylen (-$CH_2$-), Ethylen [-$(CH_2)_2$-], Propylen [-$(CH_2)_3$-], Butylen [-$(CH_2)_4$- oder -$(CH_2)CH(CH_3)(CH_2)$-], und n = 0 mit Hal gleich Chlor. Besonders bevorzugt ist die Gruppierung - $[(R^3)_nCH_2Hal]$ eine Chlormethylen-, Chlorethylen-, 3-Chlorpropylen-, 2-Chlorpropylen-, 2-Chlor-iso-propylen-, Chlorbutylen-, Chlor-iso-butylen-, Chlorpentyl-, Chlorhexyl-, Chlorcyclohexyl-, Chlorheptyl-, Chloroctyl-, Chlor-n-octyl-, Chlorcyclooctyl-Gruppe. Zweckmäßig können auch die entsprechenden Bromsubstituierten Gruppen für Hal oder eine Gruppierung -$[(R^2)_nCH_2L]$ mit L als Austrittsgruppe mit einer Sulfonsäureester substituierten Gruppe (z. B. Triflat) oder Salpetersäure oder Schwefelsäureester substituierte Gruppen verwendet werden.

In einer besonders bevorzugten Verfahrensvariante erfolgt die Umsetzung in Gegenwart mindestens einer weiteren wasserlöslichen, kondensationsfähigen, organofunktionellen Siliciumverbindung, deren Hydrolyse-, Homo-, Co-, Block-Co-Kondensat oder Gemischen dieser, insbesondere unter Bildung oligomerer bzw. polymerer quartärenaminoalkylfunktionellen, siliciumorganischen Verbindungen durch Kondensationsreaktionen.

Diese Siliciumverbindung, deren Hydrolyse-, Homo-, Co-, Block-Co-Kondensat, insbesondere monomere, oligomere oder polymere Siliciumverbindungen, oder deren Gemische sind insbesondere abgeleitet aus mindestens einer Verbindung der Formel III und können insbesondere zusammen mit einer Verbindung der Formel I und/oder II, wie vorstehend definiert, oder nach mindestens einmaliger Wasserzugabe dem Verfahren zugesetzt werden. Die Co-Kondensation zweier Alkoxysilane ist nachfolgend modellhaft wiedergegeben (Gruppen R können dabei eine Alkyl- oder Aminoalkyl-Gruppe sein, beispielsweise - aber nicht ausschließlich - Methyl, Ethyl, Propyl, Butyl, N,N-Dimethylaminoethyl):

Cokondensation:

$NH_2(CH_2)_3\text{-}Si(OEt)_3$ + x $Cl^-(R)_3N^+\text{-}(CH_2)_3\text{-}Si(OH)_3$ + $3H_2O$ -> $[(HO)_2Si(\text{-}(CH_2)_3NH_2\text{-}[O\text{-}$

$Si(-(CH_2)_3-N^+(R)_3)(OH)]_{x-1}-O-Si((-(CH_2)_3-N^+(R)_3)(OH)_2] \bullet x\ Cl^- + (x+1)H_2O + 3\ EtOH$

sowie

$$F_3C(CF_2)_5(CH_2)_2-Si(OEt)_3 + x\ Cl^-(R)_3N^+-(CH_2)_3-Si(OH)_3 + 3H_2O \rightarrow [(HO)_2Si(-(CH_2)_2(CF_2)_5CF_3)-[O-Si(-(CH_2)_3-N^+(R)_3)(OH)]_{x-1}-O-Si((-(CH_2)_3-N^+(R)_3(OH)_2] \bullet xCl^- + (x+1)\ H_2O + 3\ EtOH$$

- wobei sich die Kondensation bzw. Cokondensation fortsetzen kann und x eine Zahl von 1 bis $\infty$ sein kann.

Als oligomere oder polymere Siliciumverbindungen können in das erfindungsgemäße Verfahren eingesetzt werden, wie sie beispielsweise aber nicht ausschließlich aus WO 2006/010666, EP 0 846 717 A1, EP 0846 716 A1, EP 1 101 787 A1, EP 0 960 921 A1, EP 0 716 127 A1, EP 1 205 505 A, EP 0 518 056 A1, EP 0 814 110 A1, EP 1 205 481 A1 und EP 0 675 128 A bekannt, zu entnehmen bzw. darin zitiert sind, auf den Offenbarungsgehalt der vorstehenden Druckschriften wird ausdrücklich vollständig Bezug genommen.

Geeigneterweise wird dazu als Komponete C, insbesondere während der Umsetzung, zusätzlich mindestens eine mit weiteren organofunktionellen Gruppen funktionalisierte Siliciumverbindung der Formel III, deren Hydrolyseprodukte, Kondensationsprodukte oder Gemische dieser, beim erfindungsgemäßen Verfahren eingesetzt,

$$(R^70)_{3-a-b}(R^8)_aSi(B)_{1+b} \qquad (III)$$

wobei $R^7$ unabhängig voneinander Wasserstoff, eine lineare, verzweigte und/oder cyclische Alkyl-Gruppe mit 1 bis 8 C-Atomen, Aryl, Arylalkyl und/oder Acyl, besonders bevorzugt Alkyl mit 1 bis 5 C-Atomen, bevorzugt Methyl, Ethyl, Propyl und $R^8$ unabhängig voneinander eine lineare, verzweigte und/oder cyclische Alkyl-Gruppe mit 1 bis 24 C-Atomen; insbesondere mit 1 bis 16, bevorzugt mit 1 bis 8 C-Atomen; Aryl, Arylalkyl und/oder Acyl sind und B eine zweite organofunktionelle Gruppe ist, die jeweils gleich oder unterschiedlich ist, a gleich 0, 1 oder 2, b gleich 0, 1 oder 2 und a + b < 3 sind,

insbesondere ist die Verbindung der Formel III ausgewählt aus Verbindungen mit

- B gleich $-[(R^{10})_nR^9]$, wobei $R^{10}$ einem linearen, verzweigten und/oder cyclischen Alkylen und/oder Alkenylen mit 1 bis 18 C-Atomen, n gleich 0 oder 1, und $R^9$ unabhängig voneinander einer unsubstituierten oder substituierten linearen, verzweigten und/oder cyclischen Alkyl-Gruppe mit 1 bis 30 C-Atomen, die gegebenenfalls eine oder mehrere $-NR^{3*}_2$, $-OR^{3*}$ und/oder $-SR^{3*}$ Gruppen aufweist entsprechen, mit $R^{3*}$ gleich Wasserstoff und/oder $R^{3*}$ gleich $R^9$, und/oder $R^9$ zusammen mit einem Heteroatom N, S oder O ein Cyclus oder Heteroaromaten mit 1 bis 7 C-Atomen ist,

- B gleich $(R^{5*}0)_{3-x}(R^{6*})_{x*}Si((R^{2*})CH_2-)$ ist, wobei $R^{5*}$ unabhängig voneinander Wasserstoff, eine lineare, verzweigte und/oder cyclische Alkyl-Gruppe mit 1 bis 8 C-Atomen, Aryl, Arylalkyl und/oder Acyl ist, bevorzugt Alkyl mit 1 bis 5 C-Atomen, besonders bevorzugt Methyl, Ethyl, Propyl, $R^{6*}$ unabhängig voneinander eine lineare, verzweigte und/oder cyclische Alkyl-Gruppe mit 1 bis 24 C-Atomen ist, insbesondere mit 1 bis 16, bevorzugt mit 1 bis 8 C-Atomen, und/oder Aryl, Arylalkyl und/oder Acyl ist, $R^{2*}$ ein lineares, verzweigtes und/oder cyclisches Alkylen und/oder Alkenylen mit 1 bis 18 C-Atomen, bevorzugt ein Alkylen und x* gleich 0, 1 oder 2 ist,

- B ein primärer, sekundärer und/oder tertiärer aminofunktioneller Rest der allgemeinen Formeln IIIa oder IIIb ist,

$$R^{11}_{h*}NH_{(2-h*)}[(CH_2)_h(NH)]_j[(CH_2)_l(NH)]_c-(CH_2)_k- \qquad (IIIa)$$

worin $0 \leq h \leq 6$; h* = 0, 1 oder 2, j = 0, 1 oder 2; $0 \leq l \leq 6$; c = 0, 1 oder 2; $0 \leq k \leq 6$ und $R^{11}$ einem Benzyl-, Aryl-, Vinyl-, Formyl-Rest und/oder einem linearen, verzweigten und/oder cyclischen Alkyl-Rest mit 1 bis 8 C-Atomen entsprechen, bevorzugt sind k = 3, c = 1 oder 2, l = 1, 2 oder 3 und j = 0, besonders bevorzugt sind k = 3, c = 1 oder 2, l = 2 für einen (2-aminoethylen)-3-aminopropyl-Rest, oder j = 0; c = 2 und k = 3, oder auch j = 1; c = 1 und k = 3 mit h = 2, l = 2 für ein Triaminoethylen-3-propyl-Rest; und in Formel IIIb

$$[NH_2(CH_2)_d]_2N(CH_2)_p- \qquad (IIIb)$$

$0 \leq d \leq 6$ und $0 \leq p \leq 6$ sind, bevorzugt mit d gleich 1 oder 2 und p gleich 3,

- B gleich $-(CH_2)_{i*}-[NH(CH_2)_{f*}]_{g*}NH[(CH_2)_{f*}NH]_{g*}-(CH_2)_{i*}-SiR^{2*}_{a*}(OR^{1**})_{b*}$-(IIIc), worin i*, f* oder g* in der Formel IIIc jeweils unabhängig voneinander gleich oder verschieden sind, mit i* = 0 bis 8, f* = 1, 2 oder 3, g* = 0, 1 oder 2 und $R^{1**}$ einem linearen, cyclischen und/oder verzweigten Alkyl-Rest mit 1 bis 4 C-Atomen entsprechen, wobei i* insbesondere eine der Zahlen 1, 2, 3 oder 4, bevorzugt 3, mit a*, b* = 0, 1, 2 oder 3 und a* + b* gleich 3 und $R^{2*}$ ein Alkyl-Rest mit 1 bis 24 C-Atomen ist,

- B ein Rest $R^{12}-Y_q-(CH_2)_s-$ ist, wobei $R^{12}$ einem mono-, oligo- oder perfluorierten Alkyl-Rest mit 1 bis 20 C-Atomen oder einem mono-, oligo- oder perfluorierten Aryl-Rest entspricht, wobei ferner Y einem $-CH_2-$, -O- , -Aryl- oder -S-Rest entspricht und q = 0 oder 1 und s = 0 oder 2 ist, insbesondere entspricht B einem perfluorierten Alkylrest mit 1 bis 20 C-Atomen,

- B ein Vinyl-, Allyl-, iso-Propenyl-Rest, Mercaptoalkyl-Rest, Sulfanalkyl-Rest, Ureidoalkyl-Rest, einem Acryloxyalkyl-Rest, Methacryloxypropyl-Rest oder ein linearer, verzweigter oder cyclischer Alkoxyrest mit 1 bis 24 C-Atomen ist, insbesondere mit 1 bis 16 C-Atomen, bevorzugt mit 1 bis 4 C-Atomen, insbesondere bei a gleich 0 und b gleich 0, 1 oder 2 in Formel III für ein Tetraalkoxysilan,

- B ein Hydroxyalkyl-, Epoxy- und/oder Ether-Rest ist, insbesondere ein 3-Glycidoxyalkyl-, 3-Glycidoxypropyl-, Dihydroxyalkyl-, Epoxyalkyl-, Epoxycycloalkyl-, Polyalkylglykolalkyl-Rest oder ein Polyalkylglykol-3-propyl-Rest, oder

- zumindest teilweisen Hydrolyse- und Kondensationsprodukten einer oder mindestens zweier Verbindungen der Formel III.

Bevorzugt können Homo-, Co- oder auch Block-Co-Kondensate mindestens zwei unterschiedlicher Verbindungen der Formel III als oligomere oder polymere Siliciumverbindungen in das Verfahren eingesetzt werden, wie sie beispielsweise aber nicht ausschließlich aus WO 2006/010666, sowie aus den vorgenannten EP-Schriften bekannt sind.

Bevorzugt Verbindungen der Formel III sind:

Bis(triethoxysilylpropyl)amin $[(H_5C_2O)_3Si(CH_2)_3NH(CH_2)_3Si(OC_2H_5)_3$, Bis-AMEO]. Weitere bevorzugte Verbindungen sind: $(H_3CO)_3Si(CH_2)_3NH(CH_2)_3Si(OCH_3)_3$ (Bis-AMMO), $(H_3CO)_3Si(CH_2)_3NH(CH_2)_2NH(CH_2)_3Si(OCH_3)_3$ (Bis-DAMO), $(H_3CO)_3Si(CH_2)_3NH(CH_2)_2NH(CH_2)_2NH(CH_2)_3Si(OCH_3)_3$ (Bis-TRIAMO), Bis(diethoxymethylsilylpropyl)amin, Bis(dimethoxymethylsilylpropyl)amin, Bis(triethoxysilylmethyl)amin, Bis(trimethoxysilylmethyl)amin, Bis(diethoxymethylsilylmethyl)amin, Bis(dimethoxymethylsilylmethyl)amin, $(H_3CO)_2(CH_3)Si(CH_2)_3NH(CH_2)_2NH(CH_2)_3Si(OCH_3)_2(CH_3)$ und/oder $(H_3CO)_3(CH_3)Si(CH_2)_3NH(CH_2)_2NH(CH_2)_2NH(CH_2)_3Si(OCH_3)_2(CH_3)$.

Bevorzugte aminoalkylfunktionelle Silane der Formel III sind:

Diaminoethylen-3-propyltrimethoxysilan ($H_2N(CH_2)_2NH(CH_2)_3Si(OCH_3)_3$,DAMO); Triaminodiethylen-3-prolytrimethoxysilan $H_2N(CH_2)_2NH(CH_2)_2NH(CH_2)_3Si(OCH_3)_3$ (TRIAMO), (2-Aminoethylamino)-ethyltriethoxysilan, Butyl- N-Butyl-3-aminopropyltriethoxysilan, N-Butyl-3-aminopropylmethyldiethoxysilan, N-Butyl-3-aminopropyltrimethoxysilan, N-Butyl-3-aminopropylmethyldimethoxysilan, N-Butyl-1-amino-methyltriethoxysilan, N-Butyl-1-aminomethylmethyldimethoxysilan, N-Butyl-1-aminomethyltrimethoxysilan, N-Butyl-1-aminomethylmethyltriethoxysilan, N-Formyl-3-aminopropyltriethoxysilan, N-Formyl-3-aminopropyltrimethoxysilan, N-Formyl-1-aminomethylmethyldimethoxysilan und/oder N-Formyl-1-aminomethylmethyldiethoxysilan, sowie die entsprechenden N-Methyl-, N-Ethyl-, N-Propyl- substituierten Aminosilane oder deren Gemische. Als aminofunktionalisierte Siliciumverbindungen können insbesondere die folgenden eingesetzt werden, wie Bis(3-triethoxysilylpropyl)amin, Bis(3-trimethoxysilylpropyl)amin, 3-Aminopropylmethyldiethoxysilan, 3-Aminpropylmethyldimethoxysilan, 3-aminpropyltriethoxysilan, Aminoethyl-N'-2-aminoethyl-N-3aminopropyltrimethoxysilan, N-(n-Butyl)-3-aminopropyltrimethoxysilan, Benzyl-2-aminoethyl-3-aminopropyltrimethoxysilan, 2-Aminoethyl-3-aminopropylmethyldimethoxysilan, 2-Aminoethyl-3-aminopropyltrimethoxysilan, und/oder deren Hydrolyse-, Homo- und/oder Co-Kondensationsprodukte und/oder deren Gemische.

Als organofunktionalisierte Siliciumverbindungen gemäß Komponente C können insbesondere auch die folgenden eingesetzt werden, wie Phenyltrimethoxysilan, Phenyltriethoxysilan, 3-Glycidoxypropyltriethoxysilan, 3-Glycidoxypropyltrimethoxysilan, Tridecafluoroctyltriehoxysilan, Ethylpolysilikat, Tetraethylortosilikat, Tetra-n-Propylorthosilikat, 3-Mercaptopropyltrimethoxysilan, 3-Mercaptopropyltriethoxysilan, 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, 3-Ureidopropyltriethoxysilan, 3-Ureidopropyltrimethoxysilan, Vinyltriethoxysilan, Vinyltrimethoxysilan, Vinyltris(2-methoxyethoxy)silan, Vinylbenzyl-2-aminoethyl-3-aminopropylpolysiloxan ggf. in Methanol und/oder deren Hydrolyse-, Homo- und/oder Co-Kondensationsprodukte und/oder deren Gemische.

Weiter kann es bevorzugt sein als weitere Komponente beim erfindungsgemäßen Verfahren Metalloxyde einzusetzen, vorzugsweise Metalloxide mit zur Kondensation fähigen Hydroxygruppen. Dies sind insbesondere Silica, pyrogene Kieselsäure, gefällte Kieselsäure, Silikate, Borsäure, Titandioxid, Aluminiumoxid, Aluminiumoxidhydrat, ATH (Aluminiumtrihydroxid, $Al(OH)_3$), Magnesiumhydroxid ($Mg(OH)_2$), Ceroxid, Yttriumoxid, Calciumoxid, Eisenoxide, Zirkoniumoxid, Hafniumoxid, Boroxid, Galliumoxid, Indiumoxid, Zinnoxid, Germaniumoxid sowie entsprechende Hydroxide und Oxidhydrate sowie Mischungen von mindestens zwei der zuvor genannten Verbindungen untereinander.

Zur Einstellung des pH-Wertes und/oder als Katalysator kann der Zusammensetzung oder Reaktionsmischung zu jederzeit eine anorganische oder organische Säure, wie beispielsweise Ameisensäure, Essigsäure, Salzsäure oder andere dem Fachmann geläufige Säuren zugesetzt werden.

Besonders bevorzugt werden die nachfolgenden Verbindungen der Formel I, II und der Formel III, deren Hydrolyse- und/oder Kondensationsprodukte oder Gemische davon im erfindungsgemäßen Verfahren zur Herstellung erfindungsgemäßer quartären- aminofunktionellen, siliciumorganischen Verbindung eingesetzt und umgesetzt, wie vorzugsweise: Formel I und II mit Formel III, wobei die Gruppe B einem Rest $-[(R^{10})_nR^9]_{1+b}$,entspricht; Formel I und II mit zwei Verbindungen der Formel III mit Gruppe B gleich $-[(R^{10})_nR^9]_{1+b}$, und eine weitere Verbindung der Formel III mit Gruppe B, wobei Gruppe B einer primären, sekundären und/oder tertiären aminofunktionellen Gruppe der allgemeinen Formeln IIIa oder IIIb entspricht; Formel I und II mit einer Verbindung der Formel III, wobei Gruppe B einem Rest $R^{12}$-$Y_q$-$(CH_2)_s$- entspricht; Formel I und II mit zwei verschiedenen Verbindungen der Formel III, wobei eine Gruppe B einem Rest $R^{12}$-$Y_q$-$(CH_2)_s$- und eine andere Gruppe B einer primären, sekundären und/oder tertiären aminofunktionellen Gruppe, insbesondere der allgemeinen Formeln IIIa oder IIIb, entspricht; Formel I und II mit einer Verbindung der Formel III, wobei Gruppe B einem Hydroxyalkyl-, Epoxy-Rest, insbesondere einem 3-Glycidyloxyalkyl-, 3-Glycidyloxypropyl-, Dihydroxyalkyl-, Epoxyalkyl-, Epoxycycloalkyl-Rest entspricht; Formel I und II mit einem Tetraalkoxysilan der Formel III.

In dem erfindungsgemäßen Verfahren können das oder die Silane der Formel III und/oder deren Hydrolyse, Homo- und/oder Co-Kondensationsprodukte zu Beginn des Verfahrens zusammen mit dem chlorfunktionalisierten Silan vorgelegt werden oder zu jedem späteren Zeitpunkt im Verlauf des Verfahren einem Reaktionsgemisch aus Komponente A und B zugesetzt werden. Bevorzugt kann die Zugabe nach der ersten, zweiten oder dritten Wasserzugabe erfolgen.

Insbesondere kann das erfindungsgemäße Verfahren ohne Verwendung von Jodiden und weitgehend ohne jede Verwendung von Lösemitteln, wie Glykole oder Glykolether, d. h. weitgehend ohne Zusatz eines Lösemittels durchgeführt werden. Ferner schließt insbesondere die wässrige Herstellung der siliciumorganischen Verbindungen die zusätzliche Verwendung von Hydrogensilanen im erfindungsgemäßen Verfahren aus.

Vorteilhaft kann das Verfahren wie folgt durchgeführt werden. Zunächst werden das halogenalkylfunktionelle Silan, insbesondere eine Komponente A, und gegebenenfalls mindestens ein Silan der Formel III, d. h. optional Komponente C, in einem geeigneten Reaktionsgefäß; beispielsweise einen Rührkesselreaktor mit Temperaturregelung, Dosiereinrichtung und Destillationsvorrichtung; mit dem tertiären Amin, insbesondere eine Komponente B, gemischt. Die Temperatur sollte hierbei unter der Siedetemperatur des verwendeten Amins liegen sowie auch unter der Siedetemperatur des verwendeten bzw. Silans. Bevorzugt wird das Silan oder das Silangemisch vorgelegt und das tertiäre Amin schnell innerhalb weniger Sekunden bis Minuten zudosiert. Das molare Verhältnis Chloralkylfunktion / tertiäre Aminofunktionen der Verbindungen kann im Bereich 2 : 1 bis 1 : 10 variieren. Bei einem Verhältnis von 1 : 1 reagiert jede Chloralkylfunktion mit einer Aminofunktion. Vorzugsweise ist das Verhältnis aller Aminofunktionen (primär, sekundär und tertiär) zum Chloralkyl etwa 1 : 1. Bei Wahl eines geringeren Verhältnisses als 1 : 1 verbleiben unreagierte Aminofunktionen in der Zusammensetzung, die abgetrennt werden können oder in der Lösung verbleiben. Enthält das tertiäre Amin mehr als eine tertiäre Aminofunktion, kann ein geringeres Verhältnis als 1 : 1 von tertiärem Amin zur Chloralkylfunktion eingesetzt werden, um sämtliche tertiäre Amine mit einer Chloralkylfunktion reagieren zu lassen.

Darüber hinaus kann eine bevorzugte Ausführungsform des erfindungsgemäßen Verfahrens vorteilhaft durchführen werden, indem man

- die Komponenten A und B und optional C mischt, wobei dem Gemisch optional ein Verdünnungsmittel, vorzugsweise ein Alkohol, besonders bevorzugt Methanol, Ethanol, Isopropanol, zugesetzt werden kann,
- in das Gemisch kontinuierlich oder diskontinuierlich Wasser in einer Menge von 0,5 bis 500 mol Wasser je mol der vorliegenden Silicium-Atome dosiert, vorzugsweise unter Rühren, sowie optional dem Reaktionsgemisch einen Katalysator zusetzt,
- das vorliegende Reaktionsgemisch bei Umgebungsdruck oder vermindertem Druck auf eine Temperatur zwischen 20 und 150 °C einstellt und
- den gebildeten Hydrolysealkohol zumindest teilweise, vorzugsweise im Wesentlichen vollständig, aus dem Reaktionsgemisch entfernt ebenso das gegebenenfalls eingesetzte Löse- bzw. Verdünnungsmittel und
- die so erhaltene Zusammensetzung optional mit Wasser verdünnt, wobei man den Gehalt an Wirkstoff, d. h. an verfahrensgemäß erhaltenem Gemisch quartäre-aminofunktioneller, siliciumorganischer Verbindungen, das mindestens eine oligomerisierte quartäre-aminofunktionelle, siliciumorganische Verbindung enthält, in der Zusammensetzung bevorzugt auf 0,1 bis 99,9 Gew.-% einstellt, und nachfolgend gegebenenfalls mit mindestens einer weiteren Komponente aus der Reihe der Pigmente, Füllstoffe, Binder, Vernetzer, optische Aufheller, Verdicker, Rheologiehilfsstoffe, Lackhilfsstoffe oder einem anderen Hilfsstoff versetzt oder in Kontakt bringt.

Beispielsweise bei der Umsetzung von 3-Chlorpropyltriethoxysilan (CPTEO) mit Tetramethylethylendiamin (TMEDA) kann ein Verhältnis von etwa 1:2 an Chloralkyfunktionen zu tertiären Aminfunktionen ausreichend sein, um praktisch sämtliche TMEDA Moleküle abreagieren zu lassen, siehe dazu Beispiel 1. Bei einem Verhältnis der funktionellen Gruppen von > 1 : 1 bleiben nicht abreagierte Chloralkylsilylfunktionen zurück, welche aber durch Hydrolyse der Alkoxysilylfunktionen und Kondensation der Silanolfunktionen in das oligomere Endprodukt mit eingebaut werden können. Werden während Hydrolyse und Kondensationsreaktion weitere organofunktionelle Alkoxysilane eingesetzt, wie gemäß Formel III, so werden diese mit in das erfindungsgemäße oligomere Produkt eingebaut, siehe dazu in idealisierter Form Formel VII.

Auf diese Weise können erfindungsgemäße multifunktionelle oligomere oder polymere quartäre-aminoalkylfunktionelle, siliciumorganische Verbindungen der Formel VII hergestellt werden, welche neben der quartären Aminofunktion noch weitere organofunktionelle Gruppen enthalten.

So können beispielsweise bei der Verwendung von Alkylalkoxysilanen, z. B. Methyl-, Propyl-, Butyl-, Isobutyl-, Octyl-, Isooctyl-, Hexadecyltrialkoxysilanen oder -methyldiethoxysilanen oder -dimethylalkoxysilanen, Alkylsilyl- und quartäre aminofunktionelle Co-Kondensate gebildet werden. Auf gleiche Weise lassen sich auch weitere Organofunktionen, wie z. B. Amino-, Diamino-, Triamino-, Mercapto-, Glycidyloxy-, (Meth)acryloxy-, Fluoroalkyl- Funktionen, in das oligomere Produkt einbringen.

In besonderen Fällen können Verdünnungsmittel verwendet werden, beispielsweise auch Methanol oder Ethanol, beispielsweise um die Viskosität einzustellen. Bevorzugt wird kein Lösemittel eingesetzt. Zur Viskositätseinstellung und zur Lösevermittlung kann auch bei den nachfolgenden Schritten, Hydrolyse und/oder Kondensation und insbesondere Destillation ein Verdünnungsmittel eingesetzt werden. Im Verlauf des Destillationsschrittes wird es erfindungsgemäß wieder entfernt.

Bevorzugt wird der Mischvorgang möglichst schnell durchgeführt. Anschließend erfolgt die Zugabe von Wasser, insbesondere in einer Menge zwischen 0,5 mol Wasser pro mol Si bis 500 mol Wasser pro mol Si. Die Zugabe erfolgt unter Rühren in einem Zeitraum zwischen 1 min und 10 Stunden bevorzugt innerhalb 10 min bis 1 Stunde. Die Reaktionsmischung bzw. Lösung wird dabei gewöhnlich trüb. Es wird solange gerührt und temperiert, insbesondere zwischen 10 °C bis zur Rückflusstemperatur, je nach verwendeten Edukten, bevorzugt wird die Reaktion bei 20 bis 150 °C, besonders bevorzugt unter 100 °C durchgeführt, bis eine klare Lösung entsteht.

Bevorzugt wird eine Nachreaktionszeit unter Rückfluss, insbesondere im vorstehend genannten Temperaturbereich, von 30 Minuten bis 24 h, bevorzugt zwischen 1 h bis 8 h, eingehalten. Innerhalb dieser Zeit kann weiteres Wasser zudosiert werden. Anschließend erfolgt ein Abdestillieren von Hydrolysealkoholen und gegebenenfalls zugesetzten Lösemitteln. Die abdestillierte Menge wird vorzugsweise zu gleichen Teilen durch Wasser ersetzt. Dies kann durch kontinuierliches Dosieren oder durch Zugabe in Teilschritten erfolgen. Bevorzugt wird in Teilschritten zudosiert, wobei die Dosiergeschwindigkeit bevorzugt möglichst hoch eingestellt wird.

Die Destillation erfolgt bevorzugt unter vermindertem Druck, insbesondere zwischen 0,01 mbar bis 1000 mbar, insbesondere zwischen 1 bis 1000 mbar, besonders bevorzugt zwischen 80 bis 300 mbar. Es wird vorzugsweise destilliert bis am Kopf der Trennkolonne nur noch Wasser nachweisbar ist. Abdestilliertes Wasser wird durch erneute Wasserzugabe ergänzt. Am Ende der Destillation kann die gewünschte Endkonzentration der Lösung durch Zugabe von weiterem Wasser eingestellt werden.

Gegenstand der vorliegenden Erfindung sind somit auch oligomere bzw. polymere quartäre-aminoalkylfunktionelle siliciumorganische Verbindungen sowie deren Gemischen erhältlich nach dem erfindungsgemäßen Verfahren.

Weiter ist Gegenstand der vorliegenden Erfindung eine Zusammensetzung enthaltend quartäre-aminoalkylfunktionelle, siliciumorganische Verbindungen und Wasser, erhältlich nach dem erfindungsgemäßen Verfahren.

Der Gehalt an erfindungsgemäß quartärer-aminofunktioneller, siliciumorganischer Verbindung, insbesondere der Formel VII, kann in vorliegenden Zusammensetzungen je nach Bedarf in einem Bereich zwischen 0,001 bis 99,5 Gew.-%, vorzugsweise zwischen 0,1 Gew.-% bis 90 Gew.-%, in der Gesamtzusammensetzung eingestellt werden.

Bevorzugt zeichnen sich erfindungsgemäße Zusammensetzungen durch einen Gehalt an Wirkstoff, d. h. verfahrensgemäß erhaltener quartäre-aminofunktioneller, siliciumorganischer Verbindungen, wobei die Zusammensetzung mindestens eine oligomerisierte quartäre-aminofunktionelle, siliciumorganische Verbindung enthält, in der Zusammensetzung von 0,1 bis 99,9 Gew.-% aus, vorzugsweise von 0,5 bis 90 Gew.-%, besonders bevorzugt 5 bis 70 Gew.-%, ganz besonders bevorzugt 7 bis 60 Gew.%, insbesondere 10 bis 50 Gew.-%, wobei alle Bestandteile in der Zusammensetzung in Summe 100 Gew.-% ergeben.

Ferner zeichnen sich erfindungsgemäße Zusammensetzungen durch einen Gehalt an Wasser von 0,0999 bis 99,9 Gew.-% aus, wobei diese vorteilhaft in praktisch jedem Verhältnis mit Wasser verdünnbar sind: Auch können diese

einen Gehalt an flüchtigem Lösemittel bzw. Hydrolysealkohol in der Gesamtzusammensetzung von unter 12 Gew.-% bis 0 Gew.-% aufweisen, vorzugsweise unter 5 bis 0,0001 Gew.-%, wobei alle Bestandteile in der Zusammensetzung in Summe 100 Gew.-% ergeben. Der VOC-Gehalt der Zusammensetzung beträgt, wie vorstehend definiert, somit vorteilhaft weniger als 12 Gew.-% in der Gesamtzusammensetzung, besonders bevorzugt unter 2 bis 0 Gew.-%.

Darüber hinaus können erfindungsgemäße Zusammensetzungen mindestens eine weitere der folgenden Komponenten aus der Reihe Pigmente, Füllstoffe, Binder, Vernetzer, optische Aufheller, Lackhilfsstoffe oder andere Hilfsstoffe enthalten.

Auch weisen erfindungsgemäße Zusammensetzungen vorteilhaft eine Viskosität von < 1500 mPa s, vorzugsweise < 1000 mPa s, besonders bevorzugt 10 bis 600 mPa s, insbesondere von 100 bis 300 mPa s, auf.

Das erfindungsgemäß erhaltene Endprodukt bzw. die erfindungsgemäße Zusammensetzung ist in der Regel flüssig und niedrig bis leicht viskos, wobei die Viskosität insbesondere unter 1500 mPa s bis 0,001 mPa s beträgt, vorzugsweise zwischen 1000 und 1 mPa s, bevorzugt unter 300 mPa s, vorzugsweise unter 200 mPa s, besonders bevorzugt unter 100 mPa s, besser zwischen 100 mPa s und 1 mPa s, weiter bevorzugt sind Bereiche von 200 bis 1 mPa s, insbesondere von 100 und 10 mPa s (die Viskosität wird gemäß DIN 53015 bestimmt).

Auch kann eine erfindungsgemäß erhaltene Zusammensetzung bzw. Silanproduktlösung bei Bedarf auf konventionelle Weise filtriert werden, falls Trübungen auftreten.

Eine bevorzugte Anwendung für die erfindungsgemäßen Zusammensetzungen ist die Herstellung von Streichfarben. Hierzu wird geeigneterweise zunächst eine wässrige Silicadispersion hergestellt und mit dem erfindungsgemäßen Silansystem behandelt, gewöhnlich unter Einwirkung hoher Scherkräfte mit Hilfe branchenüblicher Dispergiergeräte. Die erhaltene silanisierte Silicadispersion zeichnet sich vorteilhaft durch einen hohen Feststoffgehalt, hohe Lagerstabilität und niedrige Sedimentationsneigung aus. Bevorzugt wird in einem zweiten Schritt aus der silanisierten Silicadispersion durch Zusatz von Bindemittel, vorzugsweise Polyvinylalkohol, und Vernetzer, vorzugsweise Borsäure, die Streichfarbe hergestellt, die sich besonders gut zur Herstellung von Foto-Inkjet-Papieren eignet.

Besonders bevorzugt ist eine Viskosität der Streichfarbe von vorzugsweise unter 600 mPa s, besonders bevorzugt unter 450 mPa s, ganz besonders bevorzugt unter 200 mPa s, insbesondere von 2 bis 150 mPa s, wie bei den in Beispiel 9 gewählten Bedingungen. Je geringer der Feststoffgehalt in der Formulierung ist desto geringer ist auch die Kapazität der damit betriebenen Beschichtungsanlagen, weil die flüchtigen Bestandteile der Papierstreichmassen (hier: hauptsächlich Wasser) in der Regel thermisch entfernt werden müssen. Je höher der Feststoffgehalt der Formulierung desto weniger Wasser muss entfernt werden und desto schneller können die Beschichtungsanlagen betrieben werden. Ein Feststoffgehalt von > 15 Gew.-% wird unter den in Beispiel 9 gewählten Bedingungen für Papierstreichmassen angestrebt.

Vor der Anwendung können die erfindungsgemäßen Zusammensetzungen sowie die erfindungsgemäßen Endprodukte bei Bedarf vorteilhaft auf einen Gehalt zwischen 10 bis 0,01 Gew.-%, bevorzugt auf 5 bis 0,1 Gew.-% mit Wasser oder anderen Lösemitteln oder auch Gemischen daraus verdünnt werden.

Eine erfindungsgemäße Zusammensetzung kann somit neben Wasser eine quartäre-aminoalkylfunktionelle, siliciumorganische Verbindung der Formel VII oder Gemische dieser, insbesondere oligomere oder polymere und gegebenenfalls monomere Verbindungen der Formel VII oder Gemische dieser enthalten,

$$R^{1*}N(R^{*}h^{+}\ Z^{-} \qquad (VII)$$

wobei $R^{1*}$ und $R^{*}$ jeweils unabhängig voneinander gleichen oder unterschiedlichen organofunktionellen Gruppen entsprechen, gegebenenfalls zwei $R^{*}$ mit N einen Cyclus bilden, die über ein C-Atom mit dem quartären Stickstoff (N) verbunden sind, und mindestens $R^{1*}$, gegebenenfalls auch $R^{*}$, ein Si-Atom umfasst; vorzugsweise umfassen die Reste $R^1$ und $R^{1*}$ unabhängig eine $-CH_2$-Si-Gruppe und gegebenenfalls mindestens einen Alkyl-Rest; wobei der Stickstoff ein Kation und Z ein Anion darstellt, insbesondere ist Formel VII eine quartäre-alkylammoniumfunktionelle Verbindung, insbesondere ist Z ein Chlorid, Bromid, Acetat, Formiat, und vorzugsweise ist $R^{1*}$ in Formel VII ein $(R^1O)_{3-x-y}(R^2)_xSi[(R^3)_nCH_2$- Rest, mit $R^1$ gleich Wasserstoff und/oder $R^{1*}$ ist ein Hydrolyse- oder ein oligomeres oder polymeres Kondensationsprodukt dieses Silylrestes.

Erfindungsgemäß ist die vorliegende Zusammensetzung im Wesentlichen frei von flüchtigen Lösemitteln, bevorzugt von Hydrolysealkohol, und setzt insbesondere beim Vernetzen keinen Hydrolysealkohol mehr frei.

Gegenstand der vorliegenden Erfindung ist auch eine Zusammensetzung enthaltend quartäre-aminoalkylfunktionelle, siliciumorganische Verbindungen und Wasser, erhältlich nach einem Verfahren gemäß einem der Ansprüche 1 bis 12 und gekennzeichnet durch einen Gehalt an Wasser von 0,0999 bis 99,9 Gew.-% und einen Gehalt an flüchtigem Lösemittel bzw. Hydrolysealkohol in der Gesamtzusammensetzung von unter 12 Gew.-% bis 0 Gew.-%, vorzugsweise unter 5 bis 0,0001 Gew.-%, wobei alle Bestandteile in der Zusammensetzung in Summe 100 Gew.-% ergeben, wobei die Zusammensetzung eine Viskosität von < 1500 mPa s aufweist. Besonders bevorzugt ist die Zusammensetzung enthaltend quartäre-aminoalkylfunktionelle siliciumorganische Verbindungen nach einem Verfahren der Ansprüche 1 bis 12 erhältlich, durch Umsetzung der Verbindungen der Formeln I und II, wie vorstehend definiert, gegebenenfalls in

Gegenwart mindestens einer Verbindung der Formel III, wie vorstehend definiert, deren Hydrolyse-, Kondensationsprodukten oder Gemischen dieser, in Gegenwart von 0,5 bis 500 mol Wasser und destillativer Entfernung zumindest eines Teils des Hydrolysealkohols. Bevorzugt ist die erfindungsgemäße Zusammensetzung im Wesentlichen frei von organischen Lösemitteln und setzt beim Vernetzen im Wesentlichen keinen Alkohol mehr frei, insbesondere weist sie einen Flammpunkt oberhalb 90 °C auf.

Gleichfalls Gegenstand der Erfindung ist eine Zusammensetzung enthaltend quartäre-aminoalkylfunktionelle, siliciumorganische Verbindungen und Wasser, wobei die Zusammensetzung quartäre-aminoalkylfunktionelle, siliciumorganische oligomere und/oder polymere und gegebenenfalls monomere Verbindungen mit mindestens einer quartärenaminoalkylfunktionellen Gruppe der allgemeinen Formel VII oder Gemische dieser enthält,

$$[R^{1*}N(R^{*})_3]^{+}Z^{-} \qquad \text{(VII)}$$

wobei $R^{1*}$ und R* jeweils unabhängig voneinander gleichen oder unterschiedlichen organofunktionellen Gruppen entsprechen, die über ein C-Atom mit dem quartären Stickstoff (N) verbunden sind, und gegebenenfalls zwei R* mit N einen Cyclus bilden, und mindestens $R^{1*}$, gegebenenfalls auch R*, ein Si-Atom umfasst; vorzugsweise umfassen die Reste $R^{*}$ und/oder $R^{1*}$ unabhängig eine $-CH_2$-Si-Gruppe; wobei der Stickstoff ein Kation und Z ein Anion ist; insbesondere ist die Formel VII eine quartäre-alkylammoniumfunktionelle siliciumorganische Verbindung, insbesondere ist Z ein Chlorid, Bromid, Acetat, Formiat, und vorzugsweise ist $R^{1*}$ in Formel VII ein $(R^1O)_{3-x-y}(R^2)_xSi[(R^3)_nCH_2$- Rest, mit $R^1$ gleich Wasserstoff und/oder $R^{1*}$ ist ein Hydrolyse- oder ein oligomeres oder polymeres Kondensationsprodukt dieses Restes; und wobei die quartären-aminoalkylfunktionellen, siliciumorganischen Verbindungen der Formel VII oder Gemische dieser erhältlich sind aus einer Quartärnisierungsreaktion und gegebenenfalls zumindest teilweisen Hydrolyse- und/oder Kondensation

- mindestens eines halogenalkylfunktionellen Silans der Formel I und gegebenenfalls dessen Hydrolyse- und/oder Kondensationsprodukten

$$(R^1O)_{3-x-y}(R^2)_xSi[(R^3)_nCH_2Hal]_{1+y} \qquad \text{(I)}$$

- wobei $R^3$ einem linearen, verzweigten und/oder cyclischen Alkylen und/oder Alkenylen mit 1 bis 18 C-Atomen entspricht, bevorzugt ein Alkylen, n gleich 0 oder 1, Hal gleich Chlor oder Brom, vorzugsweise Chlor, $R^1$ unabhängig voneinander Wasserstoff, eine lineare, verzweigte und/oder cyclische Alkyl-Gruppe mit 1 bis 8 C-Atomen, Aryl, Arylalkyl und/oder Acyl, besonders bevorzugt Alkyl mit 1 bis 5 C-Atomen, bevorzugt Methyl, Ethyl, Propyl und $R^2$ unabhängig voneinander eine lineare, verzweigte und/oder cyclische Alkyl-Gruppe mit 1 bis 24 C-Atomen, insbesondere mit 1 bis 16, bevorzugt mit 1 bis 8 C-Atomen, oder Aryl, Arylalkyl und/oder Acyl sind, x gleich 0, 1 oder 2, y gleich 0, 1 oder 2 und $x + y < 3$ sind,

- mit einem tertiären Amin der allgemeinen Formel II,

$$N(R^4)_3 \qquad \text{(II)}$$

- wobei $R^4$ unabhängig voneinander organofunktionellen Gruppen entspricht, die über ein C-Atom mit dem tertiären Stickstoff (N) verbunden sind, gegebenenfalls bilden zwei $R^4$ mit N einen Cyclus, insbesondere ist $R^4$ eine linearere, verzweigte und/oder cyclische substituierte oder unsubstituierte Alkyl-Gruppe mit 1 bis 30 C-Atomen gegebenenfalls mit einer oder mehreren $-NR^5_2$, - $OR^1$ und/oder $-SR^6$ Gruppen, mit $R^6$ unabhängig gleich Wasserstoff oder $R^4$; und/oder ein, zwei oder drei $R^4$ entsprechen $(R^10)_{3-x}(R^2)_xSi((R^3)_nCH_2$-) und gegebenenfalls dessen Hydrolyse- und/oder Kondensationsprodukt,

- in Gegenwart einer definierten Menge Wasser, gegebenenfalls in Gegenwart eines Katalysators, gefolgt von einer zumindest teilweisen Entfernung des gebildeten Hydrolysealkohols und zusätzlichen Zugabe von Wasser.

Als definierte Menge Wasser werden vorzugsweise 0,5 bis 500 mol Wasser je mol Silicium-Atome zugesetzt, insbesondere 5 bis 25 mol Wasser je mol Silicium-Atome, bevorzugt 10 bis 20 mol Wasser je mol Silicium-Atome, besonders bevorzugt 12 bis 17 mol Wasser je mol Silicium-Atome.

Modellhaft kann sich aus der Quartärnisierungsreaktion und teilweisen Hydrolyse beispielhaft die folgende Verbindung der Formel VII bilden:

$$(R^{1}0)_{3}Si[(R^{3})_{n}CH_{2}Hal] + (R^{14})_{2}N[CH_{2}CH_{2}N(R^{14})]CH_{2}CH_{2}N(R^{14})_{2}$$

(I) (IIa)

->

$$[(R^{1}0)_{3}Si[(R^{3})_{n}CH_{2}-N^{+}(R^{14})_{2}[CH_{2}CH_{2}N^{*}(R^{14})]CH_{2}CH_{2}N(R^{14})_{2}]Cl^{-}$$

(VIIa)

oder unter Bildung eines quartären Stickstoffatoms an der mit einem (N*) gekennzeichneten Position und/oder vorzugsweise entsprechende Hydrolyse- sowie Kondensationsprodukte (vgl. die Formeln VIIc und VIId).

$$[(R^{1}0)_{3}Si[(R^{3})_{n}CH_{2}-N^{+}(R^{14})_{2}[CH_{2}CH_{2}N^{*}(R^{14})]CH_{2}CH_{2}N(R^{14})_{2}]Cl^{-} + 3\ H_{2}O \rightarrow$$

(VIIa)

$$[(H0)_{3}Si[(R^{3})_{n}CH_{2}-N^{+}(R^{14})_{2}[CH_{2}CH_{2}N^{*}(R^{14})]CH_{2}CH_{2}N(R^{14})_{2}]Cl^{-} + 3R^{1}OH$$

(VIIc)

$$x\ [(H0)_{3}Si[(R^{3})_{n}CH_{2}-N^{+}(R^{14})_{2}[CH_{2}CH_{2}N^{*}(R^{14})]CH_{2}CH_{2}N(R^{14})_{2}]Cl^{-} \rightarrow$$

$$[[0_{1,5}Si[(R^{3})_{n}CH_{2}-N^{+}(R^{14})_{2}[CH_{2}CH_{2}N^{*}(R^{14})]CH_{2}CH_{2}N(R^{14})_{2}]Cl^{-}]_{x} + 1{,}5x\ H_{2}O$$

(VIId)

Dabei kann hier x formal eine Zahl von 1 bis ∞ sein, sofern $H_2O$ vollständig aus dem System entfernt wird.

Auch können sich nach chemischem Verständnis aus Verbindungen der Formeln I und IIb ferner Verbindungen im Sinne der modellhaften Formel VII bilden:

$$(R^{1}0)_{3}Si[(R^{3})_{n}CH_{2}Hal] + ((CH_{3})-(CH_{2})_{w})_{p^{*}}N(R^{14})_{3-p^{*}}$$

(I) (IIb)

->

$$[(R^{1}0)_{3}Si[(R^{3})_{n}CH_{2}-N^{+}((CH_{2})_{w}-(CH_{3}))_{p^{*}}(R^{14})_{3-p^{*}}]Cl^{-}$$

(VIIb)

Dabei ist es besonders bevorzugt, wenn der Hydrolysealkohol im Wesentlichen vollständig entfernt wird, insbesondere durch Destillation gegebenenfalls unter vermindertem Druck. Als im Wesentlichen frei an flüchtigem Lösemittel, insbesondere Hydrolysealkohol, gilt eine Zusammensetzung, mit einem Gehalt an Lösemittel unter 12 Gew.-% bis 0 Gew.-% in der Gesamtzusammensetzung, vorzugsweise unter 12 bis 0,0001 Gew.-%, insbesondere unter 10 Gew.-% bis 0 Gew.-%, bevorzugt unter 5 Gew.-% bis 0 Gew.-%, besonders bevorzugt zwischen 2 bis 0 Gew.-%, vorzugsweise zwischen 1 bis 0 Gew.-%, besser zwischen 0,5 bis 0,001 Gew.-%.

Bevorzugte Zusammensetzungen sind erhältlich durch Zugabe mindestens einer organofunktionellen Siliciumverbindung der Formel III, wie vorstehend definiert, deren Hydrolyse-, Kondensationsprodukten oder Gemischen

vor, während oder nach der Umsetzung der Verbindungen der Formel I und II Die verwendbaren organofunktionellen Siliciumverbindungen sind eingehend vorstehend erläutert.

Bevorzugt ist die erfindungsgemäße Zusammensetzung im Wesentlichen frei von organischen Lösemitteln und setzt beim Vernetzen im Wesentlichen keinen Alkohol mehr frei, insbesondere weist sie einen Flammpunkt oberhalb 90 °C auf.

Ferner weisen die nach dem erfindungsgemäßen Verfahren erhältlichen Zusammensetzungen eine Viskosität von unter 1500 mPa s bis 0,001 mPa s auf, insbesondere unter 300 mPa s, bevorzugt unter 100 mPa s, besonders bevorzugt zwischen 1000 und 1 mPa s. Bevorzugte Bereiche sind 200 bis 100 mPa s, 100 bis 0,01 mPa s, 100 bis 20 mPa s oder auch 10 bis 20 mPa s, wobei der jeweils bevorzugte Bereich von der konkreten Anwendung abhängt.

Dabei kann der Gehalt, insbesondere Feststoffgehalt, an quartären aminoalkylfunktionellen, siliciumorganischen Verbindungen oder einem Gemisch dieser in einer erfindungsgemäßen wässrigen Zusammensetzung vorteilhaft von 0,001 bis rd. 99,5 Gew.-% (einschließlich aller dazwischen liegender Zahlenwerte), bezogen auf die Gesamtzusammensetzung, betragen. Der Gehalt kann direkt im erfindungsgemäßen Verfahren eingestellt werden oder auch vom Anwender durch Verdünnen, beispielsweise mit Wasser, auf eine beliebige Konzentration verdünnt werden, beispielsweise auf 0,0001 bis 2 Gew.-% in der Zusammensetzung. Konkret bevorzugte Gehalte der Verbindungen, wie dem Feststoffgehalt, liegen insbesondere zwischen 0,1 bis 90 Gew.-%, bevorzugt 5 bis 70 Gew.-%, besonders bevorzugt 10 bis 50 Gew.-%, oder vorzugsweise zwischen 40 bis 65 Gew.-%. Die erfindungsgemäßen Zusammensetzungen zeichnen sich vorteilhaft durch eine niedrige Viskosität bei gleichzeitig hohem Feststoffgehalt aus, wie durch die Ausführungsbeispiele belegt wird. Diese Kombination von niedriger Viskosität und hohem Feststoffgehalt ist eine notwenige Voraussetzung für eine hohe Kapazität bei der Herstellung von Beschichtungen. Gleichzeitig sind die erfindungsgemäßen Zusammensetzungen im Wesentlichen VOC-frei, d. h. sie sind im Wesentlichen frei von Hydrolysealkohol und setzen beim Vernetzen keinen Alkohol mehr frei. Somit weisen die erfindungsgemäßen Zusammensetzungen eine deutlich verbesserte Performance als bekannte Zusammensetzungen auf.

Die beanspruchten Zusammensetzungen sind im Wesentlichen lagerstabil. Das bedeutet, sie zeigen keine sichtbaren Veränderungen wie Trübung oder Sedimentation oder Gelierung innerhalb von zwei Wochen, bevorzugt 3 Monaten besonders bevorzugt 1 Jahr.

Gegenstand der Erfindung ist auch eine Formulierung umfassend eine erfindungsgemäße Zusammensetzung, die mindestens eine der folgenden Komponenten aus der Reihe Pigmente, Binder, Vernetzer, optische Aufheller, Lackhilfsstoffe, Wirkstoff und/oder Hilfsstoff und/oder Füllstoff umfasst.

Die erfindungsgemäßen Zusammensetzungen können mit sehr guter Eignung in Inkjet Beschichtungen, insbesondere für hochglänzende Papierstriche eingesetzt werden.

Eine detaillierte Beschreibung dieser Anwendung findet sich in der parallelen Erfindungsmeldung "Hydrosile mit quaternärer Aminofunktion für Silicadispersionen in der IJP Anwendung". Die Herstellung von Papierstreichmassen basierend auf einer erfindungsgemäßen Zusammensetzung ist im Beispiel 9d dargelegt.

Zur Anwendung kann die erfindungsgemäße Zusammensetzung durch Tauchen, Streichen, Verreiben, Sprühen, insbesondere mit Tröpfchengrößen unterhalb 200 μm, bevorzugt kleiner 100 μm bis in den Nanometerbereich; Niederschlagen, Spincoating oder alle weiteren, dem Fachmann bekannte Techniken auf ein Substrat aufgebracht werden. Dazu wird eine für das angewendete Verfahren geeignete Konzentration an siliciumorganischer Verbindung in der Zusammensetzung eingestellt. Je nach Verarbeitungsverfahren kann daher die Konzentration von 0,01 Gew.-% an siliciumorganischer Verbindung bis hin zu 99,5 Gew.-% in der Zusammensetzung reichen. Die Auftragungsverfahren sind dem jeweils zuständigen Fachmann hinlänglich bekannt. Darüber hinaus kann in an sich bekannter Weise eine auf ein Substrat aufgebrachte Beschichtung unter Umgebungsbedingungen und/oder durch eine zusätzlich thermische und/oder photochemische Behandlung aushärten bzw. mit dem Substrat abbinden. Beispielsweise kann man so mit einer erfindungsgemäßen Zusammensetzung anorganische oder organische Substrate behandeln oder eine erfindungsgemäße Zusammensetzung als Eduktkomponente in Formulierungen einsetzen.

So finden erfindungsgemäße Zusammensetzungen oder Formulierungen, die auf einer erfindungsgemäßen Zusammensetzung basieren, vorteilhaft Verwendung zur Modifizierung, Behandlung und/oder Herstellung von Substraten, Artikeln, organischen, anorganischen Materialien, Kompositmaterialien, Papierstreichmassen, Inkjet-Anwendungen, Papierbeschichtungsmitteln, Textilien, Füllstoffen; bei biozid, wie in antibakteriell, fungizid, algizid, und/oder viruzid wirkenden Formulierungen bzw. Beschichtungen, zur Ausrüstung von Fasermaterialien, Garnen und/oder Textilien, zur Textilimprägnierung, zur Antistatikausrüstung von Oberflächen, insbesondere flächiger, faseriger, gewebter, körniger und/oder pulverförmiger Materialien, wie z. B. Holzoberflächen, mineralischen Oberflächen, Glas-, Keramik-, Metall-, Kunststoffoberflächen, porösen mineralischen Baustoffen, Fasermaterialien, beispielsweise Textilfasern; oder zur Anti-Fingerprint oder Antikorrosions- Beschichtung von Materialien und Metallen sowie vorbehandelten Metallen. Weitere Anwendungsgebiete umfassen eine antistatische Ausrüstung von Oberflächen, z. B. von Kunststoffen, Glas, Keramik, Holz, lackierte Oberflächen, Fasermaterialien wie Glasfasern, Mineralwolle, Kohlenstofffasern, Keramikfasern oder Textilfasern (inkl. Gewebe hergestellt aus diesen Fasern) sowie mineralischen Füllstoffen beispielsweise Silica, Fällungskieselsäure, Flammkieselsäure, Quarz, Calciumcarbonat, Gips, ATH, alpha- und gamma $Al_2O_3$, Magnesiumhydroxid/-

oxid, Eisenoxide, Tonminerale, Schichtsilikate oder weitere dem Fachmann geläufige Füllstoffe.

Weiterhin können die erfindungsgemäßen Produkte zur Modifizierung von Füllstoffen ggf. in Kombination mit anderen organofunktionellen Silanen oder Hydrosilan eingesetzt werden, beispielsweise um eine bessere Dispergierfähigkeit zu erreichen.

Besonders bevorzugt ist die Verwendung einer Zusammensetzung in Papierstreichmassen, insbesondere für Inkjet-Anwendungen, zur Herstellung von Papierbeschichtungsmittel, als Papierbeschichtungsmittel, zur Ausrüstung von Fasermaterialien und/oder Textilien, zur Textilimprägnierung oder zur Modifizierung von Füllstoffen. Weitere bevorzugte Verwendung ist die Beschichtung von Filtern, Rohren, Armaturen, medizinischen Geräten oder Instrumenten, in Schwimmbadfarben, zur Beschichtung von Kacheln oder Flächen, die immer wieder mit Feuchtigkeit oder Wasser in Kontakt kommen, wie in Schwimmbädern, Bädern, Badkeramiken, Küchenkeramiken, einer Außenhaut von Gebäuden, wie Fassaden, Dachabdeckungen, Gartenmöbel, Zubehör im marinen Bereich, Tauwerk, Segeltuch, Schiffsaußenhaut etc. sowie weitere dem hier zuständigen Fachmann bekannte Anwendungen bei denen Probleme mit Mikroorganismen bekannt sind, oder auch von Glas, Fenstern, Autoglas, Spiegel, optische Gläser, chirurgische Instrumente, oder Bestandteile von chirurgischen Instrumenten und mikroinvasiven chirurgischen Instrumenten, Endoskope oder Teile davon, Kanülen, medizinische Schläuche, medizinische Gerätschaften und/oder Teile davon, Implantate, Prothesen, Stents, Grabsteine, oder von Fasern, wie Naturfasern und/oder künstlichen Fasern, wie insbesondere Baumwolle, Hanf, Wolle, Seide, Polyester, Acetate, und weitere, dem zuständigen Fachmann geläufige Materialien. Besonders bevorzugt ist die Verwendung in Wundabdeckungen oder auch Hygieneartikeln, wie Pflastern, Mullbinden, Windeln, Pads sowie weiteren dem zuständigen Fachmann geläufige Medizin- oder Hygieneartikel. Dabei kann die Beschichtung in ihrer Ausdehnung großflächig oder auch im Mikro- bis Nanometerbereich hinabreichen.

Gegenstand der vorliegenden Erfindung ist somit ebenfalls die Verwendung einer erfindungsgemäß hergestellten bzw. erhältlichen Zusammensetzung zur Modifizierung, Behandlung und/oder Herstellung von Formulierungen, Substraten, Artikeln, organischen oder anorganischen Materialien, Kompositmaterialien, Papierstreichmassen, Inkjet-Anwendungen, Papierbeschichtungsmitteln, Textilien, Füllstoffen, biozid, fungizid und/oder viruzid wirkenden Formulierungen, zur Ausrüstung von Fasermaterialien, Garnen und/oder Textilien, zur Textilimprägnierung, zur Antistatikausrüstung von Oberflächen, insbesondere flächiger, faseriger, gewebter, körniger und/oder pulverförmiger Materialien.

Die folgenden Beispiele erläutern die vorliegende Erfindung, insbesondere das erfindungsgemäße Verfahren sowie die erfindungsgemäßen Zusammensetzungen, näher, ohne die Erfindung auf diese Beispiele zu beschränken.

<u>Beispiele</u>

Bestimmungsmethoden:

Hydrolysierbares Chlorid wurde potentiographisch mit Silbernitrat titriert (beispielsweise Metrohm, Typ 682 Silberstab als Indikatorelektrode und Ag/AgCl-Referenzelektrode oder andere geeignete Referenzelektrode). Gesamtchloridgehalt nach dem Wurtzschmitt-Aufschluss. Dazu wird die Probe in einer Wurtzschmittbombe mit Natriumperoxid aufgeschlossen. Nach Ansäuern mit Salpetersäure wird Chlorid potentiographisch mit Silbernitrat gemessen, wie vorstehend.

Bei einer vollständigen Umsetzung der Chloralkylfunktion mit tertiären Aminen sind die Analysenwerte für hydrolysierbares Chlorid und Gesamtchlorid identisch und damit ein Maß für die Vollständigkeit der Reaktion, da mit Gesamtchlorid die Summe aus salzartigem Chlorid (Aminhydrochlorid) und kovalent gebundenem Chlor (Chloralkylfunktion) und mit hydrolysierbarem Chlorid ausschließlich salzartiges oder mit Wasser abspaltbares Chlorid (vorliegend Aminhydrochlorid) bestimmt wird. Am Anfang der Reaktion beträgt der Wert für hydrolysierbares Chlorid null und steigt bei vollständigem Umsatz auf den Wert, der für Gesamtchlorid gemessen wird. Daher eignet sich diese Analysen hervorragend zusätzlich zur $^1$H und $^{13}$C NMR Spektroskopie als Reaktionskontrolle.

Der Alkoholgehalt nach Hydrolyse wird gaschromatographisch bestimmt. Dazu wird eine Probe einer definierten Menge mit Schwefelsäure (5 g Probe, 25 ml $H_2SO_4$, w = 20 %) hydrolysiert. Es werden 75 ml destilliertes Wasser zugegeben. Anschließend mit Natronlauge neutralisiert und eine Wasserdampfdestillation durchgeführt. Interner Standard 2-Butanol. Die Stickstoffbestimmung, organisch gebunden, Ammonium etc. Organisch gebundener Stickstoff kann mittels Kjeldahl-Aufschluss in Ammonium überführt werden und nach Zusatz von Natronlauge als Ammoniak acidimetrisch bestimmt werden (s. a. DIN 1310, DIN 32625, DIN 32630, DIN EN 25663-H11, DIN 38409-H12, AN-GAA 0629 - Büchi 322/343). Bestimmung von $SiO_2$ erfolgt nach Zersetzung mittels Schwefelsäure und Kjeldahl-Katalysator, indem das Gewicht des ausgeschiedenen $SiO_2$ bestimmt wird.

Die Viskosität erfolgt in der Regel nach DIN 53015.

Die Bestimmung des Feststoffgehaltes, d. h. der nicht flüchtigen Anteile in wässrigen und lösemittelhaltigen Zubereitungen kann in Ablehnung an DIN / EN ISO 3251 (Bestimmung des nicht flüchtigen Anteils von Lacken, Anstrichstoffen und Bindemitteln für Lacke und Anstrichstoffe) wie folgt durchgeführt werden (QM-AA):

Prüfgeräte -

Thermometer (Ablesegenauigkeit 2 K)
Einmalschalen aus Aluminium (d= ca. 65 mm, h= ca. 17 mm)
Analysenwaage (Genauigkeit 1 mg)
Trockenschrank bis 250 °C
Exsikkator

Eine Probe wird auf eine festgelegte Temperatur (z. B. 125 °C) erwärmt, um auf diese Weise die flüchtigen Anteile der Probe zu entfernen. Erfasst wird der Feststoffgehalt (Trockenrückstand) der Probe nach der Wärmebehandlung.

In eine Einmalschale wird auf einer Analysenwaage ca. 1g Probe eingewogen (Genauigkeit 1 mg). Das Produkt ist durch kurzes Umschwenken gleichmäßig in der Einmalschale zu verteilen. Die Schale wird 1h bei ca. 125 °C in einem Trockenschrank gelagert. Nach Beendigung des Trockenvorganges wird die Schale 20 min in einem Exsikkator auf Raumtemperatur abgekühlt und auf der Analysenwaage auf 1 mg genau zurückgewogen. Es sind pro Versuch mindestens 2 Bestimmungen durchzuführen.

$$\text{Feststoffgehalt (\%)} = \frac{\text{Auswaage (g)}}{\text{Einwaage (g)}} \times 100$$

Feststoffgehalt - Prozentuales Verhältnis der Probenmasse vor und nach der Behandlung.
Auswaage - Die Probemasse nach der Behandlung.
Einwaage - Die Probemasse vor der Behandlung.

**Beispiel 1**

Wasserbasierte, VOC-freie Lösung eines quartären Silansystems, hergestellt aus 3-Chlorpropyltriethoxysilan (CPTEO) und Tetramethylethylendiamin (TMEDA).

Apparatur: Rührreaktor mit Destilliervorrichtung, Sumpf- und Kopfthermometer, Vakuumpumpe, Manometer und Dosiervorrichtung

Stoffeinsatz:

| Edukte | M(Edukt) [g] | N(Edukte) [mol] | w(Edukte) [%] | Bemerkung |
|---|---|---|---|---|
| Chlorpropyltriethoxysilan | 3206,2 | 13,31 | 37,3 | M=240,8 g/mol |
| N,N,N,'N'-Tetramethylethylendiamin | 1547,2 | 13,31 | 18,0 | M=116,21g/mol |
| VE-Wasser: | | | | |
| 1. Zugabe | 1603,1 | | 18,6 | |
| 2. Zugabe | 641,3 | | 7,5 | |
| 3. Zugabe | 1600,0 | | 18,6 | |
| Σ (Edukte) | 8597,8 | | | |

m(Ethanol aus Hydrolyse) = 1836,8 g; Auswaage Produkt nach Filtration: 6521,4 g (Theorie: 6761,1 g); Auswaage Destillat: 2946,5 g

Durchführung:

1. Reaktion (Dauer ca. 9,7 h): Chlorpropyltriethoxysilan wird vorgelegt und unter Rühren Tetramethylethylendiamin schnell zugegeben. Anschließend erfolgt die 1. Zugabe von Wasser innerhalb von circa 20 Minuten (Volumenstrom ca. 4,8 l/h) unter kräftigem Rühren. Der Sumpf ist nun deutlich trüb, es wird 6 h unter Rückfluss (ca. 87 °C) erhitzt. Innerhalb von 10 Minuten erfolgt die 2. Wasserzugabe in den inzwischen aufgeklarten Sumpf (Volumenstrom ca. 3,9 l/h). Nach weiteren 1,5 h Erhitzen unter Rückfluss erfolgt die 3. Zugabe von Wasser unter Rühren (innerhalb von ca. 20 Minuten, Volumenstrom ca. 4,8 l/h).

2. Destillation (Dauer ca. 9 h): Bei einer Sumpftemperatur von 49 °C bis 54 °C wird Hydrolyseethanol unter Vakuum (100 - 270 mbar) abdestilliert. Nach Abdestillieren eines ca. 1700 g Ethanol / Wasser Gemisches werden 327 g Wasser schnell nachdosiert. Um den Hydrolysealkohol nahezu vollständig abzudestillieren, muss ein mindestens 60-%iger Überschuss (bezogen auf die Masse an Hydrolysethanol) abdestilliert werden. Die abdestillierte Wassermenge wird am Ende der Destillation wieder zugeführt.

3. Filtration (Dauer ca. 1 h): Anschließend wird das gelbliche leicht trübe Produkt mittels Druckfilter (2 l) und Seitz 500 Tiefenfilter bei 0,8 bar Überdruck filtriert (Filtrationsleistung bei $d_{Filter}$= 14cm: 18 l/h). Erhalten wird eine klare leicht gelbliche Flüssigkeit.

Analysen:

| Bestimmung | Ergebnis | Theorie | Methode |
|---|---|---|---|
| Viskosität (20 °C) [mPa s] | 70 | | DIN 53015 |
| Dichte (20 °C) [g/ml] | 1,107 | | DIN 51757 |
| Brechzahl (20 °C) | 1,4224 | | DIN 51423 |
| Farbe [mg Pt-Co/l] | 75 | | |
| Feststoff [%] | 48,4 | | DIN 38409-1 |
| pH | 8,6 | | 1:1 in Wasser, DIN 38404-C5 |
| $SiO_2$[%] | 11,8 | 11,8 | s. o. |
| Ethanol n. Hydrolyse [%] | 0,5 | | s. o. |
| Gesamt-N [%] | 5,0 | 5,5 | s. o. |
| Gesamtchlorid [%] | 7,2 | 7,0 | s. o. |
| Hydrol. Chlorid [%] | 7,1 | 7,0 | s. o. |

NMR: $^{13}C$-NMR: Ca. 15 % der TMEDA Gruppen liegen als Bisaddukt vor. Pro 100 $SiCH_2$ Gruppen liegen 8 Mol-% freies TMEDA vor.

$^{29}Si$-NMR: 2,5 Si-% Silan; 14,6 Si-% M-Strukturen; 49,7 Si-% D-Strukturen; 33,3 Si-% T-Strukturen

**Beispiel 2**

Wasserbasierte, VOC-freie Lösung eines quartären Silansystems, hergestellt aus 3-Chlorpropyltriethoxysilan und Tetramethylethylendiamin mit Überschuss an Tetramethylethylendiamin.

Apparatur: Rührreaktor mit Destilliervorrichtung, Sumpf- und Kopfthermometer, Vakuumpumpe, Manometer und Dosiervorrichtung.

Stoffeinsatz:

| Edukte | m(Edukt) [g] | n(Edukte) [mol] | w(Edukte) [%] | Bemerkung |
|---|---|---|---|---|
| Chlorpropyltriethoxysilan | 401,19 | 1,67 | 36,37 | M=240,8g/mol |
| N,N,N,'N'-Tetramethylethylendiamin | 221,53 | 1,91 | 20,09 | M=116,21g/mol |

(fortgesetzt)

| Edukte | m(Edukt) [g] | n(Edukte) [mol] | w(Edukte) [%] | Bemerkung |
|---|---|---|---|---|
| VE-Wasser | | | | |
| 1. Zugabe | 200,27 | | 18,16 | |
| 2. Zugabe | 79,82 | | 7,24 | |
| 3. Zugabe | 200,14 | | 18,15 | |
| Σ Edukte | 1102,95 | | | |
| m (Ethanol nach Hydrolyse) = 229,4 g; Auswaage Produkt : 859,24 g, Theorie: 873,55 g; Auswaage Destillat: 1073,13 g | | | | |

Durchführung:

1. Reaktion (Dauer ca. 9,7 h): Chlorpropyltriethoxysilan wird vorgelegt, und unter Rühren Tetramethylethylendiamin schnell zugegeben. Anschließend erfolgt die 1. Zugabe von Wasser innerhalb von circa 20 Minuten (Volumenstrom ca. 4,8 l/h) unter kräftigem Rühren. Der Sumpf ist nun deutlich trübe, es wird 6 h unter Rückfluss (ca. 84 - 92 °C) erhitzt. Es folgt die 2. Zugabe Wasser in den inzwischen aufgeklarten Sumpf. Nach weiteren 1,5 h Erhitzen unter Rückfluss erfolgt die 3. Zugabe von Wasser unter Rühren, innerhalb von ca. 20 Minuten (Volumenstrom ca. 4,8 l/h).
2. Destillation: Bei einer Sumpftemperatur von 48 °C bis 53 °C werden nun der Hydrolyseethanol und das überschüssige TMEDA unter Vakuum (100-270 mbar) abdestilliert. Während der Destillation werden insgesamt 859,02g Wasser wieder zugeführt. Erhalten wird eine klare niedrigviskose Flüssigkeit.

Analysen:

| Bestimmung | Ergebnis | Theorie | Methode |
|---|---|---|---|
| Viskosität (20 °C) [mPa s] | 43,8 | | DIN 53015 |
| Dichte (20 °C) [g/ml] | 1,104 | | DIN 51757 |
| Brechzahl (20 °C) | 1,4184 | | DIN 51423 |
| Farbe [mg Pt-Co/l] | 70 | | ISO 6271 |
| Feststoff [%] | 48,3 | | DIN 38409-1 |
| pH | 8,2 | | 1:1 in Wasser, DIN 38404-C5 |
| $SiO_2$[%] | 11,6 | 11,4 | s. o. |
| Ethanol n. Hydrolyse [%] | < 0,1 | | s. o. |
| Gesamt-N [%] | 4,6 | 6,1 | s. o. |
| Gesamtchlorid [%] | 7,0 | 6,8 | s. o. |
| Hydrol. Chlorid [%] | 7,0 | 6,8 | s. o. |

NMR: Die $^1H$- und $^{13}C$-NMR-Spektren zeigen als Hauptkomponente (ca. 75 % des eingesetzten Silans) das Zielprodukt (das Silan liegt hydrolysiert und oligomerisiert vor):

Die nachfolgende Formel gibt idealisiert die Summenformel des resultierenden Feststoffes bei vollständiger Entfernung des Lösemittels Wasser sowie des durch Kondensation entstehenden Wassers wieder.

$$[(CH_3)_2N\text{-}CH_2\text{-}CH_2\text{-}N^+(CH_3)_2CH_2\text{-}CH_2\text{-}CH_2\text{-}SiO_{1,5}]_n$$

Dabei kann n formal eine Zahl von 1 bis ∞ sein, vorzugsweise 4 bis ∞.

In wässriger Lösung weist das polymere Produkt neben Siloxaneinheiten auch Silanolgruppen auf.

Daneben erkennt man geringe Mengen nicht umgesetztes TMEDA und Nebensignale. Es gibt keine Hinweise auf CPTEO. Vermutlich liegen auch geringe Mengen 2fach umgesetztes TMEDA vor.

Das $^{29}$Si-NMR-Spektrum zeigt: ca. 2 %Si Silan(x)ol: ca. 14 %Si M-Strukturen; ca. 51 %Si D-Strukturen; ca. 33 %Si T-Strukturen.

**Beispiel 3**

Wasserbasierte, VOC-freie Lösung eines quaternären Silansystems, hergestellt aus 3-Chlorpropyltriethoxysilan und Tetramethylethylendiamin mit Überschuss an 3-Chlorpropyltriethoxysilan.

Apparatur: Rührreaktor mit Destilliervorrichtung, Sumpf- und Kopfthermometer, Vakuumpumpe, Manometer und Dosiervorrichtung.

Stoffeinsatz:

| Edukte | m(Edukt) [g] | n(Edukte) [mol] | w(Edukte) [%] | Bemerkung |
|---|---|---|---|---|
| Chlorpropyltriethoxysilan | 401,68 | 1,67 | 38,32 | M=240,8g/mol |
| N,N,N,'N'-Tetramethylethylendiamin | 164,53 | 1,42 | 15,70 | M=116,21g/mol |
| VE-Wasser | | | | |
| 1. Zugabe | 201,45 | | 19,22 | |
| 2. Zugabe | 80,15 | | 7,65 | |
| 3. Zugabe | 200,43 | | 19,12 | |
| Σ Edukte | 1048,24 | | | |
| m(Ethanol nach Hydrolyse)= 229,4 g; Auswaage Produkt nach Filtration : 771,70 g, Theorie: 818,84 g; Auswaage Destillat: 377,65 g | | | | |

Durchführung:

1. Reaktion (Dauer ca. 9,7 h): Chlorpropyltriethoxysilan wird vorgelegt, und unter Rühren Tetramethylethylendiamin schnell zugegeben. Anschließend erfolgt die 1. Zugabe von Wasser innerhalb von circa 18 Minuten unter kräftigem Rühren. Der Sumpf ist nun deutlich trübe und wird 6 h unter Rückfluss (ca. 82 - 84 °C) gekocht. Es folgt die 2. Zugabe Wasser in den inzwischen aufgeklarten Sumpf innerhalb von 9 Minuten. Nach weiteren 1,6 h Kochen unter Rückfluss erfolgt die 3. Zugabe von Wasser unter Rühren, innerhalb von ca. 13 Minuten.
2. Destillation: Bei einer Sumpftemperatur von 52 °C bis 60 °C wird nun der Hydrolyseethanol unter Vakuum (100 - 270 mbar) abdestilliert. Während der Destillation werden insgesamt 859,02g Wasser wieder zugerührt.
3. Filtration: Anschließend wird das gelbliche leicht trübe Produkt mittels Druckfilter und Seitz K800 filtriert. Die erhaltene leicht trübe Flüssigkeit wird nochmals über einen Seitz K700 filtriert. Erhalten wird eine klare leicht gelbliche Flüssigkeit.

Analysen:

| Bestimmung | Ergebnis | Theorie | Methode |
|---|---|---|---|
| Viskosität (20 °C) [mPa s] | 88,2 | | DIN 53015 |
| Dichte (20 °C) [g/ml] | 1,114 | | DIN 51757 |
| Brechzahl (20 °C) | 1,4239 | | DIN 51423 |
| Farbe [mg Pt-Co/l] | 65 | | ISO 6271 |

(fortgesetzt)

| Bestimmung | Ergebnis | Theorie | Methode |
|---|---|---|---|
| Feststoff [%] | 51,4 | | DIN 38409-1 |
| pH | 8,5 | | 1:1 in Wasser, DIN 38404-C5 |
| $SiO_2$[%] | 12,5 | 12,2 | s. o. |
| Ethanol n. Hydrolyse [%] | 0,2 | | s. o. |
| Gesamt-N [%] | 4,6 | 4,8 | s. o. |
| Gesamtchlorid [%] | 7,6 | 7,3 | s. o. |
| Hydrol. Chlorid [%] | 7,1 | 7,3 | s. o. |

NMR: Die $^{1}$H- und $^{13}$C-NMR-Spektren zeigen als Hauptkomponente (ca. 65 % des eingesetzten Silans) das Zielprodukt (das Silan liegt hydrolysiert und oligomerisiert vor):

Die nachfolgende Formel gibt idealisiert die Summenformel des resultierenden Feststoffes bei vollständiger Entfernung von Wasser wieder (vgl. entsprechende Anmerkung in Beispiel 2).

$$[(CH_3)_2N\text{-}CH_2\text{-}CH_2\text{-}N^+(CH_3)_2CH_2\text{-}CH_2\text{-}CH_2\text{-}SiO_{1,5}]_n$$

In wässriger Lösung weist das polymere Produkt neben Siloxaneinheiten auch Silanolgruppen auf.

Daneben erkennt man nicht umgesetztes TMEDA und Nebensignale. Es gibt keine Hinweise auf CPTEO .Vermutlich liegt auch 2fach umgesetztes TMEDA vor.

Das $^{29}$Si-NMR-Spektrum zeigt: ca. 2 % Si Silan(x)ol; ca. 12 % Si M-Strukturen ca. 46 % Si D-Strukturen; ca. 40 % Si T-Strukturen

## Beispiel 4

Wasserbasierte, VOC freie Lösung eines quaternären Silansystems, hergestellt aus Chlorpropyltriethoxysilan und Tetramethylethylendiamin. Als Änderung der Verfahrensweise wurde die Gesamtmenge Wasser in einer Portion zugegeben. Apparatur: Rührreaktor mit Destilliervorrichtung, Sumpf- und Kopfthermometer, Vakuumpumpe, Manometer und Dosiervorrichtung.

Stoffeinsatz:

| Edukte | m(Edukt) [g] | n(Edukte) [mol] | w(Edukte) [%] | Bemerkung |
|---|---|---|---|---|
| Chlorpropyltriethoxysilan | 399,8 | 1,66 | 45,77 | M=240,8g/mol |
| N,N,N,'N'-Tetramethylethylendiamin | 193,3 | 1,66 | 22,13 | M=116,21g/mol |
| VE-Wasser | 280,44 | | 32,10 | |
| Σ Edukte | 873,54 | | | |

Durchführung: In einer 2-I-Vierhalskolbenrührapparatur werden CPTEO und TMEDA unter Rühren vorgelegt. Dazu wird innerhalb von 13 min das VE-Wasser bei Raumtemperatur zugetropft. Es entsteht eine starke Trübung. Bei einer Sumpftemperatur von 82-86 °C wird 5,5h am Rückfluss erhitzt. Erhalten wird eine Flüssigkeit mit weißem Niederschlag (unlöslich in Ethanol oder Wasser).

## Beispiel 5

Wasserbasierte Lösung eines quaternären Silansystems, hergestellt aus 3-Chlorpropyltriethoxysilan und N,N-Dimethylethylendiamin.

Apparatur:

Rührreaktor mit Rückflusskühler, Sumpf- und Kopfthermometer Dosiervorrichtung.

Stoffeinsatz:

| Edukte | m(Edukt) [g] | n(Edukte) [mol] | w(Edukte) [%] | Bemerkung |
|---|---|---|---|---|
| Chlorpropyltriethoxysilan | 107,79 | 0,448 | 34,1 | M=240,8g/mol |
| N, N-Di methylethyl end iam in | 39,44 | 0,447 | 12,5 | M=88,15g/mol |
| VE-Wasser | | | | |
| 1. Zugabe | 41,4 | | 13,1 | |
| 2. Zugabe | 40,0 | | 12,7 | |
| 3. Zugabe | 47,1 | | 14,9 | |
| 4. Zugabe | 40,0 | | 12,7 | |
| Σ Edukte | 315,7 | | | |
| m(Ethanol nach Hydrolyse) = 61,8 g; Auswaage Produkt: 185,4 g, Theorie: 315,7 g Durchführung: In einer 0,5-I-Vierhalskolbenrührapparatur werden CPTEO und Dimethylethylendiamin unter Rühren vorgelegt. Dazu wird innerhalb von 5 min 41,4 g VE-Wasser (1. Zugabe) bei Raumtemperatur zugetropft. Es entsteht eine starke Trübung und die Reaktion ist leicht exotherm. Anschließend wird bei einer Sumpftemperatur von 83 bis 85 °C 4 h unter Rückfluss erhitzt und innerhalb dieser Zeit das Wasser in weiteren drei Portionen zudosiert. Erhalten wird eine leicht milchig trübe niedrigviskose Flüssigkeit. | | | | |

Analysen:

| Bestimmung | Ergebnis | Methode |
|---|---|---|
| pH | 9,2 | DIN 38404-C5 |
| $SiO_2$[%] | 6,6 | s. o. |
| Gesamt-N [%] | 3,1 | s. o. |
| Gesamtchlorid [%] | 4,1 | s. o. |
| Hydrol. Chlorid [%] | 3,6 | s. o. |

**Beispiel 6**

Wasserbasierte, VOC-freie Lösung eines quaternären Silansystems, hergestellt aus 3-Chlorpropyltrimethoxysilan (CPTMO) und Tetramethylethylendiamin.

Apparatur: Rührreaktor mit Destilliervorrichtung, Sumpf- und Kopfthermometer, Vakuumpumpe, Manometer und Dosiervorrichtung.

Stoffeinsatz:

| Edukte | m(Edukt) [g] | n(Edukte) [mol] | w(Edukte) [%] | Bemerkung |
|---|---|---|---|---|
| Dynasylan® CPTMO | 330,5 | 1,67 | 35,84 | M=199,0g/mol |

(fortgesetzt)

| Edukte | m(Edukt) [g] | n(Edukte) [mol] | w(Edukte) [%] | Bemerkung |
|---|---|---|---|---|
| N,N,N,'N'-Tetramethylethylendiamin | 193,9 | 1,67 | 21,03 | M=116,21g/mol |
| VE-Wasser | | | | |
| 1. Zugabe | 199,8 | | 21,67 | |
| 2. Zugabe | 79,95 | | 8,67 | |
| 3. Zugabe | 100,1 | | 10,86 | |
| 4. Zugabe | 17,8 | | 1,93 | |
| Σ Edukte | 922,05 | | | |
| m(Ethanol nach Hydrolyse)= 160,52 g; Auswaage Produkt nach Filtration : 648,1 g, Theorie: 761,63 g; Auswaage Destillat: 224,4 g | | | | |

Durchführung: In einer 1-I-Vierhalskolbenrührapparatur werden CPTMO und TMEDA unter Rühren vorgelegt. Das ganze 1,5 h bei 71 bis 75 °C gerührt. Danach wird innerhalb von 2,4 h 199,8 g VE-Wasser bei 71 bis 87 °C zugetropft. Es entsteht eine leicht trübe gelbliche Flüssigkeit. Während des Zutropfens wurde das Hydrolysemethanol unter Vakuum abdestilliert. Anschließend werden 79,95 g VE-Wasser innerhalb von ca.16 min zugetropft. Am nächsten Tag werden bei einer Sumpftemperatur von 35 °C bis 39 °C innerhalb von drei Minuten 100,1 g VE-Wasser zugetropft und anschließend unter Vakuum Restmengen an Hydrolysemethanol abdestilliert. Zum Schluss werden noch mal 17,8 g VE-Wasser zugerührt. Anschließend wird das gelbliche leicht trübe Produkt mittels Druckfilter und Seitz K900 filtriert. Erhalten wird eine klare gelbliche viskose Flüssigkeit.

Analysen:

| Bestimmung | Ergebnis | Methode |
|---|---|---|
| Viskosität (20 °C) [mPa s] | 450 | DIN 53015 |
| Dichte (20 °C) [g/ml] | 1,129 | DIN 51757 |
| Feststoff [%] | 56,9 | QM-AA AS-FA-SL 7001 |
| pH | 8,6 | 1:1 in Wasser, DIN 38404-C5 |
| $SiO_2$[%] | 14,1 | s. o. |
| Methanol n. Hydrolyse [%] | 1,5 | s. o. |
| Freies Methanol [%] | 1,5 | s. o. |
| Gesamtchlorid [%] | 8,4 | s. o. |
| Hydrol. Chlorid [%] | 8,4 | s. o. |

NMR: Es liegt eine stärkere Oligomerisierung vor (verglichen mit CPTEO / TMEDA Umsetzung). Die Spektren zeigen als Hauptkomponente (ca. 65 % des eingesetzten Silans) das Zielprodukt (das Silan liegt hydrolysiert und oligomerisiert vor)

Die nachfolgende Formel gibt idealisiert die Summenformel des resultierenden Feststoffes bei vollständiger Entfernung von Wasser wieder (vgl. entsprechende Anmerkung in Beispiel 2).

$$[(CH_3)_2N\text{-}CH_2\text{-}CH_2\text{-}N^+(CH_3)_2CH_2\text{-}CH_2\text{-}CH_2\text{-}SiO_{1,5}]_n$$

In wässriger Lösung weist das polymere Produkt neben Siloxaneinheiten auch Silanolgruppen auf.
TMEDA-Monoaddukt= 83,6 % TMEDA-Bisaddukt=16,4 %
Das $^{29}$Si-NMR-Spektrum zeigt: ca. 0,7 % Silan(x)ol; ca. 9,0 % Si M-Strukturen; ca. 49,6 % Si D-Strukturen; ca. 40,7 % Si T-Strukturen

**Beispiel 7**

Wasserbasierte, VOC-freie Lösung eines quaternären Silansystems, hergestellt aus 3-Chlorpropyltrimethoxysilan und Tetramethylethylendiamin, wobei Tetramethylethylendiamin im Überschuss eingesetzt wird.

Apparatur: Rührreaktor mit Destilliervorrichtung, Sumpf- und Kopfthermometer, Vakuumpumpe, Manometer und Dosiervorrichtung.

Stoffeinsatz:

| Edukte | m(Edukt) [g] | n(Edukte) [mol] | w(Edukte) [%] | Bemerkung |
|---|---|---|---|---|
| Dynasylan® CPTMO | 298,3 | 1,50 | 28,37 | M=199,0g/mol |
| N,N,N,'N'-Tetramethylethylendiamin | 261,8 | 2,25 | 24,93 | M=116,21g/mol |
| VE-Wasser | | | | |
| 1. Zugabe | 49,81 | | 4,74 | |
| 2. Zugabe | 99,91 | | 9,51 | |
| 3. Zugabe | 101,08 | | 9,62 | |
| 4. Zugabe | 144,8 | | 13,79 | |
| HCl w= 37 % | 94,57 | | 9,00 | |
| Σ Edukte | 1050,27 | | | |
| m(Ethanol nach Hydrolyse)= 144,18 g; Auswaage Produkt nach Filtration : 697,9 g Auswaage Destillat: 308,9 g | | | | |

Durchführung: In einer 1-I-Vierhalskolbenrührapparatur werden CPTMO und TMEDA unter Rühren vorgelegt. Das ganze wird 1,5 h bei 60 bis 70 °C gerührt. Danach wird bei 80 bis 90 °C 50 g VE-Wasser innerhalb von 30 min zugetropft. Danach wird 30 min nachreagiert und gleichzeitig bei Normaldruck das entstandene Methanol abdestilliert. Anschließend 2-mal weitere 100 g Wasser innerhalb von 30 min zugetropft und 30 min nachreagieren lassen. Es entsteht eine klare Lösung sobald eine Trübung eintritt Wasserzugabe unterbrechen und nachreagieren lassen. Nachdem etwa 145 g Methanol/Wasser abdestilliert sind, wird nicht weiter destilliert. Die Umsetzung CPTMO wird mittels Differenz aus w (Gesamtchlorid) und w (hydr. Chlorid) CPTMO ermittelt. Nach beendeter Reaktion wird mit Salzsäure 37-%ig neutralisiert und ein pH-Wert von 7 eingestellt (exotherm). Anschließend wird bei 300 bis 100 mbar und einer Sumpftemperatur bis ca. 55 °C Methanol/Wasser abdestilliert. Wenn der Ansatz viskos wird, werden ca.100 g Wasser zugegeben (Theorie Hydrolysemethanol bei 1,5 molarem Ansatz: 144,2 g). Es sollten ca. 290 g Methanol/Wasser Gemisch abdestilliert werden. Zum Schluss wird die abdestillierte Wassermenge wieder zugegeben. Das Produkt wird über einen Druckfilter SEITZ K900 filtriert. Erhalten wird eine klare gelbliche leicht viskose Flüssigkeit.

Analysen:

| Bestimmung | Ergebnis | Methode |
|---|---|---|
| Viskosität (20 °C) [mPa s] | 286 | DIN 53015 |
| Feststoff [%] | 68,3 | DIN 38409-1 |
| pH | 7,1 | 1:1 in Wasser, DIN 38404-C5 |
| $SiO_2$[%] | 12,3 | s. o. |
| Methanol n. Hydrolyse [%] | 0,1 | s. o. |
| Freies Methanol [%] | 0,1 | s. o. |

NMR: Die Spektren zeigen als Hauptkomponente (ca. 85 % des eingesetzten Silans) das Zielprodukt (das Silan liegt

hydrolysiert und oligomerisiert vor)

Die nachfolgende Formel gibt idealisiert die Summenformel des resultierenden Feststoffes bei vollständiger Entfernung von Wasser wieder (vgl. entsprechende Anmerkung in Beispiel 2).

$$[(CH_3)_2N\text{-}CH_2\text{-}CH_2\text{-}N^+(CH_3)_2CH_2\text{-}CH_2\text{-}CH_2\text{-}SiO_{1,5}]_n$$

In wässriger Lösung weist das polymere Produkt neben Siloxaneinheiten auch Silanolgruppen auf. Das $^{29}$Si-NMR-Spektrum zeigt: ca. 1,5 % Silan(x)ol; ca. 8,4 % Si M-Strukturen; ca. 46,7 % Si D-Strukturen; ca. 43,4 % Si T-Strukturen

**Beispiel 8**

Wasserbasierte, VOC-freie Lösung eines quaternären Silan-Cokondensat, hergestellt aus 3-Chlorpropyltriethoxysilan, 3-Aminopropyltriethoxysilan (AMEO) und Tetramethylethylendiamin
Apparatur: Rührreaktor mit Destilliervorrichtung, Sumpf- und Kopfthermometer, Vakuumpumpe, Manometer und Dosiervorrichtung.

Stoffeinsatz:

| Edukte | m(Edukt) [g] | n(Edukte) [mol] | w(Edukte) [%] | Bemerkung |
|---|---|---|---|---|
| Chlorpropyltriethoxysilan | 200,1 | 0,83 | 35,61 | M=240,8g/mol |
| N,N,N,'N'-Tetramethylethylendiamin | 96,7 | 0,83 | 17,21 | M=116,21g/mol |
| VE-Wasser | | | | |
| 1. Zugabe | 100,0 | | 17,80 | |
| 2. Zugabe | 40,1 | | 7,14 | |
| 3. Zugabe | 100,1 | | 17,81 | |
| Dynasylan® AMEO | 24,9 | 0,113 | 4,43 | M=221,0g/mol |
| Σ Edukte | 561,9 | | | |
| m(Ethanol nach Hydrolyse)= 130,20 g; Auswaage Produkt: 413,3 g, Theorie: 431,7 g; Auswaage Destillat: 219,5 g | | | | |

Durchführung: In einer 1-l-Vierhalskolbenrührapparatur werden CPTEO und TMEDA unter Rühren vorgelegt. Dazu wird innerhalb von 15 min 100,0 g VE-Wasser (1. Zugabe) bei Raumtemperatur zugetropft. Es entsteht eine starke Trübung und die Reaktion ist leicht exotherm. Anschließend wird bis ca. 90 °C Sumpftemperatur 3 h unter Rückfluss erhitzt. Danach werden Dynasylan® AMEO innerhalb von ca.15 min zugetropft und anschließend weitere 3 h bei ca. 90 °C Sumpftemperatur erhitzt. Im Anschluss werden 40,0 g VE- Wasser (2. Zugabe) innerhalb von 5 min zugegeben und nochmals 1,5 h bei 90 °C erwärmt. Zum Schluss werden nochmals 100,0 g VE-Wasser (3. Zugabe) innerhalb von 20 min unter Rühren zugegeben.

Danach wird bei 300-100 mbar und einer Sumpftemperatur bis ca. 55 °C Ethanol/Wasser abdestilliert (doppelte Menge wie theoretisch an Ethanol entsteht). Wenn der Ansatz viskos wird, wird Wasser schnell zugegeben. Nach Ende der Destillation wird die abdestillierte Wassermenge durch VE-Wasser ersetzt und unter Rühren bis auf RT abgekühlt. Das Produkt wird über einen Druckfilter SEITZ K700 filtriert. Erhalten wird eine klare leicht gelbe niedrigviskose Flüssigkeit.

Analysen:

| Bestimmung | Ergebnis | Methode |
|---|---|---|
| Viskosität (20 °C) [mPa s] | 180 | DIN 53015 |

(fortgesetzt)

| Bestimmung | Ergebnis | Methode |
|---|---|---|
| Dichte (20 °C) [g/ml] | 1,117 | DIN 51757 |
| Farbe [mg Pt-Co/l] | 160 | ISO 6271 |
| Feststoff [%] | 50,1 | DIN 38409-1 |
| pH | 8,5 | 1:1 in Wasser, DIN 38404-C5 |
| $SiO_2$[%] | 13,5 | s. o. |
| Ethanol n. Hydrolyse [%] | 0,1 | s. o. |
| Gesamt-N [%] | 5,0 | s. o. |
| Gesamtchlorid [%] | 7,0 | s. o. |
| Hydrol. Chlorid [%] | 7,0 | s. o. |

**Beispiel 9**

Herstellung von silanisierten Kieselsäuredispersionen sowie Herstellung von Papierstreichmassen hieraus: Substanzen: Polyvinylalkohol: teilhydrolysierter Polyvinylalkohol (Fa. Poval® PVA 235); Borsäurelösung: 7 Gew.-% wässrige Borsäurelösung.

Allgemeines Herstellbeispiel: Als Kieselsäure wird eine handelsübliche Flammkieselsäure mit einer Oberfläche von 200 $m^2$/g, einer Primärteilchengröße von ca. 12 nm und einem $SiO_2$-Gehalt von > 99,8 Gew.-% verwendet. Die Einarbeitung der Flammkieselsäure in die wässrige Lösung erfolgt mittels Dissolver, Dispermat mit Dissolverscheibe "schwere Ausführung d=60 mm". Die Nachdispersion erfolgt mittels Rotor-Stator Dispergierer Ultra Turrax T25. Die Streichfarbe wird in einem Becherglas mit Rührorgan (Magnetrührer) aus der wässrigen Kieselsäuredispersion unter Zugabe einer 9,04 gew.-%igen wässrigen Lösung eines teilhydrolysierten Polyvinylalkohols der Fa. Kuraray, Poval® PVA 235, Hydrolysegrad 87 - 89 %, Viskosität 80 - 110 mPa s , und einer 7 gew.-%igen wässrigen Lösung von Borsäure hergestellt.

**Beispiel 9a**

Streichfarbe unter Verwendung von Butylaminopropyltrimethoxysilan:

1. Herstellung der silanisierten Kieselsäuredispersion 600,13 g VE Wasser und 10,0 g einer wässrigen, 18 gew.-%igen HCl Lösung werden vorgelegt. Mittels Dissolver werden 248,41 g Flammkieselsäure dispergiert. Anschließend wird bei 8000 - 10000 rpm 10 min nachdispergiert. Anschließend erfolgt eine weitere Homogenisierung für 10 min mittels Ultra Turrax bei 20500 rpm. Anschließend werden 17,14 g einer 20 gew.-%igen Lösung von Butylaminopropyltrimethoxysilan in Methanol langsam zusammen mit weiteren 4,03 g der 18 gew.-%igen Salzsäure zugegeben. Der pH-Wert darf hierbei einen Wert von ca. 4 nicht überschreiten, da oberhalb davon die Dispersion hochviskos wird. Nach Beendigung der Silanzugabe wird noch ca. 60 min mittels Ultra Turrax bei 20500 rpm nachdispergiert.
2. Herstellung einer Streichfarbe aus 1: 65,15 g VE-Wasser werden vorgelegt. Unter Rühren werden 74,86 g der Polyvinylalkohollösung zugegeben. Anschließend werden 124,97 g der Kieseläuredispersion aus 1 eingerührt. Danach werden innerhalb von 10 min 12,03 g der Borsäure Lösung zudosiert. Es erfolgt 15 min Nachrühren. Die Streichfarbe hat die in der Tabelle "Eigenschaften der Streichfarbe" aufgeführten Eigenschaften.

**Beispiel 9b**

Streichfarbe unter Verwendung eines wässrigen, alkoholfreien Hydrolysats aus Butylaminopropyltrimethoxysilan.

Das Hydrolysat wird folgendermaßen hergestellt:

Apparatur: 1-l-Vierhalskolben, Rührwerk mit Flügelrührer, Tropftrichter, Thermometer, Destillationsbrücke mit Vakuumanschluss, Vorlagekolben, Vakuumpumpenstand, Ölbad mit Regler

Stoffeinsatz:

| Edukte | m (ist) [g] | Stoffmenge [mol] | W/W [%] |
|---|---|---|---|
| Butylaminopropyltrimethoxysilan | 249,53g | 1,06 mol | 50% |
| Ameisensäure 85% | 68,10g | 1,48 mol + 40,6% Überschuss | 13,7% |
| VE-Wasser | 181,15g | 10,6 mol | 36,3% |
| Summe $\sum$ | 498,8g | | |

Durchführung: VE-Wasser und Ameisensäure werden unter Rühren vorgelegt und Butylaminopropyltrimethoxysilan so zugetropft, dass die Sumpftemperatur 60 °C nicht übersteigt. Nach beendetem Zutropfen wird der pH-Wert gemessen. Er sollte zwischen pH 4,0 - 5,0 liegen. Eventuell Ameisensäure oder Butylaminopropyltrimethoxysilan nachdosieren. Anschließend wird mit dem Ölbad 3h bei einer Sumpftemperatur von 60 °C nachgerührt. Bevor das Methanol abdestilliert wird, werden 101,9 g Wasser zugegeben damit das abdestillierte Methanol volumenmäßig wieder ersetzt wird. Bei einem Druck von 130 mbar und einer Sumpftemperatur von 40-60 °C werden 203,8g Methanol/Wasser abdestilliert. Anschließend wird der Sumpf ausgewogen und mit VE-Wasser wieder auf die ursprüngliche Masse von 499,0g aufgefüllt.

Analysen (Produkt):

| Bestimmung | Ergebnis | Methode |
|---|---|---|
| Gesamt-N: | 2,8% (Massen) | s. o. |
| Si-Gehalt: | 5,9% (Massen) | |
| 1 H-NMR: | pro n-Butylaminosilylrest: 1,2 mol Formiat; 0,05 mol | |
| | Methanol | |
| 29Si-NMR: | 1 % Monomere | |
| | 5% Si-M- | |
| | 37% Si-D- | |
| | 57% Si-T-Strukturen | |
| pH-Wert: | 4,6 | DIN 38404 |
| Feststoffgehalt: | 44,0% (Masse) | vgl. QM-AA |
| Viskosität (20 °C) | 27,9 mPa s | DIN 53015 |
| Methanol nach Hydrolyse | 0,6% (Massen) | s. o. |
| Freies Methanol | 0,6% (Massen) | |
| $SiO_2$-Gehalt | 12,7% (Massen) | s. o. |
| Dichte (20 °C) | 1,012 g/cm3 | DIN 51757 |

1. Herstellung der silanisierten Kieselsäuredispersion: 600,02 g VE Wasser und 5,95 g einer wässrigen, 18 gew.-%igen HCl Lösung werden vorgelegt. Mittels Dissolver werden 260,84 g Flammkieselsäure dispergiert. Anschließend wird bei 5000 - 7000 rpm 15 min nachdispergiert. Anschließend erfolgt eine weitere Homogenisierung für 10 min mittels Ultra Turrax bei 20500 rpm. Anschließend werden 34,16 g des Silanhydrolysats langsam zusammen mit weiteren 1,37 g der 18 gew.-%igen Salzsäure zugegeben. Der pH-Wert darf hierbei einen Wert von ca. 3 nicht überschreiten, da oberhalb davon die Dispersion hochviskos wird. Nach Beendigung der Silanzugabe wird noch ca. 60 min mittels Ultra Turrax bei 20500 rpm nachdispergiert.

2. Herstellung einer Streichfarbe aus 1: 65,52 g VE-Wasser werden vorgelegt. Unter Rühren werden 75,30 g der Polyvinylalkohollösung zugegeben. Anschließend werden 125,42 g der Kieseläuredispersion aus 1 eingerührt. Danach werden innerhalb von 10 min 12,00 g der Borsäure Lösung zudosiert. Es erfolgt 15 min Nachrühren. Die Streichfarbe hat die in der Tabelle "Eigenschaften der Streichfarbe" aufgeführten Eigenschaften.

Beispiel 9c

Streichfarbe unter Verwendung eines wässrigen, alkoholfreien Hydrolysats aus Butylaminopropyltrimethoxysilan:

Das Hydrolysat wird wie unter Beispiel 9b geschildert hergestellt.

1. Herstellung der silanisierten Kieselsäuredispersion: 600,26 g VE Wasser werden vorgelegt. Mittels Dissolver werden 259,45 g Flammkieselsäure dispergiert. Anschließend wird bei 5000 - 7000 rpm 15 min nachdispergiert. Anschließend erfolgt eine weitere Homogenisierung für 10 min mittels Ultra Turrax bei 20500 rpm. Danach werden 4,82 g einer 85 gew.-%igen Ameisensäurelösung in Wasser zugegeben. Anschließend werden 68,59 g des Silanhydrolysats langsam zugegeben. Der pH-Wert darf hierbei einen Wert von ca. 4 nicht überschreiten, da oberhalb davon die Dispersion hochviskos wird. Nach Beendigung der Silanzugabe wird noch ca. 60 min mittels Ultra Turrax bei 20500 rpm nachdispergiert.

2. Herstellung einer Streichfarbe aus 1: 65,11 g VE-Wasser werden vorgelegt. Unter Rühren werden 75,35 g der Polyvinylalkohollösung zugegeben. Anschließend werden 125,34 g der Kieseläuredispersion aus 1 eingerührt. Danach werden innerhalb von 10 min 12,08 g der Borsäure Lösung zudosiert. Es erfolgt 15 min Nachrühren. Die Streichfarbe hat die in der Tabelle "Eigenschaften der Streichfarbe" aufgeführten Eigenschaften.

**Beispiel 9d**

Streichfarbe unter Verwendung des wässrigen, alkoholfreien quaternären Aminosilansystems aus Beispiel 1:

1. Herstellung der silanisierten Kieselsäuredispersion: 300,04 g VE Wasser und 7,07 g einer wässrigen, 18 gew.-%igen HCl Lösung werden vorgelegt. Mittels Dissolver werden 129,34 g Flammkieselsäure dispergiert. Anschließend wird bei 4000 rpm 15 min nachdispergiert. Anschließend erfolgt eine weitere Homogenisierung für 10 min mittels Ultra Turrax bei 20500 rpm. Anschließend werden 31,20 g des Silanhydrolysats langsam zusammen mit weiteren 1,65 g der 18 gew.-%igen Salzsäure zugegeben. Der pH-Wert darf hierbei einen Wert von ca. 3 nicht überschreiten, da oberhalb davon die Dispersion hochviskos wird. Nach Beendigung der Silanzugabe wird noch ca. 60 min mittels Ultra Turrax bei 20500 rpm nachdispergiert.

2. Herstellung einer Streichfarbe aus 1: 65,00 g VE-Wasser werden vorgelegt. Unter Rühren werden 76,08 g der Polyvinylalkohollösung zugegeben. Anschließend werden 127,25 g der Kieseläuredispersion aus 1 eingerührt. Danach werden innerhalb von 10 min 12,05 g der Borsäure Lösung zudosiert. Es erfolgt 15 min Nachrühren. Die Streichfarbe hat die in der Tabelle "Eigenschaften der Streichfarbe" aufgeführten Eigenschaften.

**Beispiel 9e**

Streichfarbe unter Verwendung eines alkoholhaltigen quaternären Aminosilans.

Das quaternäre Aminosilan wird folgendermaßen hergestellt:

Wasserfreies ethanolisches quaternäres Silansystems hergestellt aus Chlorpropyltriethoxysilan und Tetramethylethylendiamin.
Apparatur: Büchi Autoklav mit Sumpfthermometer, Manometer und N2-Überlagerung

Stoffeinsatz:

| Edukte | m(Edukt) [g] | n(Edukte) [mol] | w(Edukte) [%] | Bemerkung |
|---|---|---|---|---|
| Chlorpropyltriethoxysilan | 216,7 | 0,9 | 25,7 | M=240,8g/mol |

(fortgesetzt)

| Edukte | m(Edukt) [g] | n(Edukte) [mol] | w(Edukte) [%] | Bemerkung |
|---|---|---|---|---|
| N,N,N,'N'-Tetramethylethylendiamin | 104,6 | 0,9 | 12,4 | M=116,21g/mol |
| Ethanol | 520,7 | | 61,8 | |
| Auswaage Produkt: 718,0 g, Theorie: 751,3 g; Gesamtmenge Proben: 90,7 g | | | | |

Durchführung:

Chlorpropyltriethoxysilan wird vorgelegt, und unter Rühren Tetramethylethylendiamin und Ethanol schnell zugegeben. Anschließend wird bei einer Sumpftemperatur von 140 °C im Autoklav die Reaktion durchgeführt. Der Überdruck steigt dabei auf 4,3 bar. Die Reaktionskontrolle erfolgt zeitabhängig mittels GC. Eine Verlängerung der Reaktionszeit von 5 h auf 10 h führt zu einer deutlichen Reduktion an Chlorpropyltriethoxysilan bei nahezu konstantem TMEDA Gehalt: Reaktion zum Bis-Addukt. Nach 10 h Reaktionszeit war ein Umsetzungsrad von > 90 % erreicht. Im Sumpf kam es dabei zu geringen Ausfällungen (weißer Niederschlag). Dieser wurde abfiltriert, mit n-Heptan gewaschen und am Rotationsverdampfer getrocknet: m = 5,0g.

Analysen (Produkt):

| Bestimmung | Ergebnis | Methode |
|---|---|---|
| Dichte (20 °C) [g/ml] | 0,856 | DIN 51757 |
| $SiO_2$[%] | 6,6 | s. o. |
| Gesamt-N [%] | 2,8 | s. o. |
| Gesamtchlorid [%] | 3,5 | s. o. |
| Hydrol. Chlorid [%] | 3,5 | s. o. |

1. Herstellung der silanisierten Kieselsäuredispersion: 600,33 g VE Wasser und 9,65g einer wässrigen, 18 gew.-%igen HCl Lösung werden vorgelegt. Mittels Dissolver werden 248,79 g Flammkieselsäure dispergiert. Anschließend wird bei 6000 rpm 15 min nachdispergiert. Anschließend erfolgt eine weitere Homogenisierung für 10 min mittels Ultra Turrax bei 20500 rpm. Anschließend werden 66,81 g der ethanolischen Silan Lösung langsam zusammen mit weiteren 4,57 g der 18 gew.-%igen Salzsäure zugegeben. Der pH-Wert darf hierbei einen Wert von ca. 3,5 nicht überschreiten, da oberhalb davon die Dispersion hochviskos wird. Nach Beendigung der Silanzugabe wird noch ca. 60 min mittels Ultra Turrax bei 20500 rpm nachdispergiert.
2. Herstellung einer Streichfarbe aus 1: 64,94 g VE-Wasser werden vorgelegt. Unter Rühren werden 75,81 g der Polyvinylalkohollösung zugegeben. Anschließend werden 126,95 g der Kieseläuredispersion aus 1 eingerührt. Danach werden innerhalb von 10 min 12,04 g der Borsäure Lösung zudosiert. Es erfolgt 15 min Nachrühren. Die Streichfarbe hat die in untenstehender Tabelle aufgeführten Eigenschaften.

Tabelle "Eigenschaften der Streichfarben":

| Beispiel | 9a | 9b | 9c | 9d | 9e |
|---|---|---|---|---|---|
| Silangehalt der Kieselsäuredispersion / Gew.-% | 1,8 | 1,9 | 3,7 | 3,7 | 1,9 |
| Alkoholgehalt der Kieselsäuredispersion / Gew.-% | 7,9 | 0,0 | 0,0 | 0,0 | 6,4 |
| Viskosität der Streichfarbe / mPa s | 129 | 589 | 174 | 83 | 423 |

Aus der Tabelle ist ersichtlich, dass mittels Einsatz von alkoholischen Aminosilan Lösungen (Beispiel 9a) niedrigviskose Streichfarben mit einer Viskosität < 150 mPa s herstellbar sind. Verwendet man das gleiche Silan, allerdings als wasserbasiertes, alkoholfreies Hydrolysat, so erreicht man erst bei fast verdoppelter Dosierung akzeptable Viskositäten unter 300 mPa s (Beispiel 9c). Bei Verwendung wasserbasierter quartärer Aminosilanlösungen (Beispiel

9d) erreicht man bei gleicher Dosierung (Vergleich mit wasserbasiertem Aminosilan) ausgezeichnete Viskositäten unter 100 mPa s. Die gleiche Silanwirksubstanz zeigt dagegen, eingesetzt als nicht hydrolysierte, alkoholische Lösung, eine nicht akzeptable Viskosität der Streichfarbe sowie einen hohen, problematischen Alkoholgehalt.

## Patentansprüche

**1.** Verfahren zur Herstellung einer Zusammensetzung enthaltend quartäreaminofunktionelle, siliciumorganische Verbindungen,
**dadurch gekennzeichnet,**
**dass** man

- als Komponente A

(i) mindestens ein halogenalkylfunktionelles Alkoxysilan der allgemeinen Formel I

$$(R^10)_{3-x-y}(R^2)_xSi[(R^3)_nCH_2Hal]_{1+y} \qquad (I),$$

worin Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht,
Gruppen $R^2$ gleich oder verschieden sind und $R^2$ für eine lineare, verzweigte oder cyclische Alkyl-Gruppe mit 1 bis 8 C-Atomen oder für eine Aryl-, Arylalkyl- oder Acyl-Gruppe steht,
Gruppen $R^3$ gleich oder verschieden sind und $R^3$ eine lineare, verzweigte oder cyclische Alkylengruppe mit 1 bis 18 C-Atomen darstellt,
n gleich 0 oder 1 ist und Hal für Chlor oder Brom steht, und
x gleich 0, 1 oder 2, y gleich 0, 1 oder 2 und (x + y) gleich 0, 1 oder 2 sind,

oder (ii) ein Hydrolyse- oder Kondensationsprodukt von mindestens einem Alkoxysilan der zuvor genannten allgemeinen Formel I
oder (iii) ein Gemisch aus mindestens einem Alkoxysilan der zuvor genannten allgemeinen Formel I und einem Hydrolyse- und/oder Kondensationsprodukt von mindestens einem Alkoxysilan der zuvor genannten allgemeinen Formel I

- mit einem tertiären Amin der allgemeinen Formel II als Komponente B,

$$N(R^4)_3 \qquad (II),$$

worin Gruppen $R^4$ gleich oder verschieden sind und $R^4$ für eine Gruppe $(R^10)_{3-x-y}(R^2)_xSi[(R^3)_nCH_2-]_{1+y}$, wobei $R^1$, $R^2$, $R^3$, n, x, y sowie (x+y) ebenfalls die zuvor genannte Bedeutung haben, oder für eine lineare, verzweigte oder cyclische Alkylgruppe mit 1 bis 30 C-Atomen steht, die darüber hinaus substituiert sein kann,
wobei gegebenenfalls zwei Gruppen $R^4$ ihrerseits miteinander verknüpft sind und mit dem Stickstoff des tertiären Amins einen Cyclus bilden,
- in Gegenwart einer definierten Menge Wasser umsetzt und
- den gebildete Hydrolysealkohol zumindest teilweise aus dem System entfernt, wobei man flüchtiges Löse- bzw. Verdünnungsmittel und gegebenenfalls zu flüchtigem Lösemittel hydrolysierbare Gruppen, insbesondere Hydrolysealkohol, bis auf einen Gehalt in der Gesamtzusammensetzung von unter 12 Gew.-% entfernt, wobei das Entfernen von flüchtigem Löse- bzw. Verdünnungsmittel während der Umsetzung und/oder danach durch Destillation, insbesondere unter vermindertem Druck im Bereich von 1 bis 1000 mbar erfolgen kann.

**2.** Verfahren nach Anspruch 1,
**dadurch gekennzeichnet,**
**dass** man die Umsetzung in Gegenwart eines Katalysators bzw. unter Zusatz eines gesonderten Katalysators durchführt.

**3.** Verfahren nach Anspruch 1 oder 2,
**dadurch gekennzeichnet,**
**dass** man als weitere Eduktkomponente C mindestens eine weitere hydrolysier- bzw. kondensierbare Siliciumverbindung, vorzugsweise eine organoalkoxyfunktionelle Siliciumverbindung, deren Hydrolyse-, Homo-, Co-, Block-Co-Kondensat oder Gemischen dieser einsetzt.

4. Verfahren nach einem der Ansprüche 1 bis 3,
**dadurch gekennzeichnet,**
**dass** man Wasser in einer Menge von 0,5 bis 500 mol Wasser je mol der im Reaktionsgemisch vorliegenden Silicium-Atome einsetzt, bevorzugt 5 bis 25 mol Wasser je mol der hydrolysierbaren Silicium-Atome bezüglich der eingesetzten Komponenten A sowie gegebenenfalls B bzw. C, besonders bevorzugt 10 bis 20 mol Wasser je mol besagter Silicium-Atome, insbesondere 12 bis 17 mol Wasser je mol besagter Silicium-Atome, wobei man das Wasser kontinuierlich oder diskontinuierlich in das Reaktionsgemisch der Eduktkomponenten A, B sowie gegebenenfalls C dosiert, vorzugsweise das Wasser diskontinuierlich unter Rühren zugibt, besonders bevorzugt chargenweise, in 1 bis 10 Chargen, insbesondere in 2 bis 5 Chargen, und man die Umsetzung bei einem Druck von 1 mbar bis 1,1 bar, bevorzugt bei Umgebungsdruck (Normaldruck), und einer Temperatur von 20 und 150 °C, bevorzugt von 40 bis 120 °C, besonders bevorzugt von 60 bis 100 °C, insbesondere von 80 bis 95 °C, durchführt.

5. Verfahren nach einem der Ansprüche 1 bis 4,
**dadurch gekennzeichnet,**
**dass** man flüchtiges Löse- bzw. Verdünnungsmittel und gegebenenfalls zu flüchtigem Lösemittel hydrolysierbare Gruppen, insbesondere Hydrolysealkohol, bis auf ein Gehalt in der Gesamtzusammensetzung von unter 10 Gew.-% bis 0 Gew.-% entfernt, bevorzugt unter 5 Gew.-%, besonders bevorzugt 2 Gew.-% bis 0,0001 Gew.-%, insbesondere 1 bis ≤ 0,5 Gew.-%, wobei das Entfernen von flüchtigem Löse- bzw. Verdünnungsmittel während der Umsetzung und/oder danach durch Destillation, insbesondere unter vermindertem Druck im Bereich von 80 bis 300 mbar erfolgen kann.

6. Verfahren nach einem der Ansprüche 1 bis 5,
**dadurch gekennzeichnet,**
**dass** man als Komponente A mindestens eine Siliciumverbindung aus der Reihe 3-Chlorpropyltrimethoxysilan, 3-Chlorpropyltriethoxysilan, 3-Chlorpropylmethyldimethoxysilan, 3-Chlorpropyl-methyldiethoxysilan, 3-Chlorpropyldimethylethoxysilan oder 3-Chlorpropyl-dimethylmethoxysilan oder ein Hydrolyse- oder Kondensationsprodukt der zuvor genannten Alkoxysilane einsetzt.

7. Verfahren nach einem der Ansprüche 1 bis 6,
**dadurch gekennzeichnet,**
**dass** man als Komponente B mindestens ein tertiäres Amin ausgewählt aus der Reihe der Verbindungen der Formeln IIa und/oder IIb,

$$(R^{14})_2N[CH_2CH_2N(R^{14})]_hCH_2CH_2N(R^{14})_2 \qquad (IIa),$$

worin $R^{14}$ unabhängig für eine unverzweigte, verzweigte oder cyclische Alkyl-, Aryl- oder Alkylaryl-Gruppe mit 1 bis 20 C-Atomen steht und h gleich 0, 1, 2, 3, 4, 5, 6 oder 7 ist,

$$[(CH_3)\text{-}(CH_2)_w]_{p^*}N(R^{14})_{3-p^*} \qquad (IIb),$$

worin w gleich 2 bis 20, insbesondere mit w gleich 7 bis 17, und $R^{14}$ unabhängig für eine unverzweigte, verzweigte oder cyclische Alkyl-, Aryl- oder Alkylaryl-Gruppe mit 1 bis 20 C-Atomen steht und p* gleich 1 oder 2 ist,
einsetzt, wobei man als Komponente B vorzugsweise mindestens ein tertiäres Amin ausgewählt aus der Reihe Tetramethylethylendiamin, Pentamethyldiethylentriamin, Hexadecyldimethylamin, Octadecyldimetylamin, Tetradecyldimethylamin, Dodecyldimethylamin, Decyldimethylamin, Octyldimethylamin, Tetraethylethylendiamin, Pentaethyldiethylentriamin, Hexadecyldiethylamin, Octadecyldietylamin, Tetradecyldiethylamin, Dodecyldiethylamin, Decyldiethylamin, Octyldiethylamin, iso-Hexadecyldimethylamin, iso-Octadecyldimetylamin, iso-Tetradecyldimethylamin, iso-Dodecyldimethylamin, iso-Decyldimethylamin, iso-Octyldimethylamin, iso-Tetraethylethylendiamin, iso-Pentaethyldiethylentriamin, iso-Hexadecyldiethylamin, iso-Octadecyldietylamin, iso-Tetradecyldiethylamin, iso-Dodecyldiethylamin, iso-Decyldiethylamin, iso-Octyldiethylamin, Tris(trimethoxysilylpropyl)amin, Tris(triethoxysilylpropyl)amin, Tris(trimethoxysilylmethyl)amin, Tris(triethoxysilylmethyl)amin einsetzt.

8. Verfahren nach einem der Ansprüche 1 bis 7,
**dadurch gekennzeichnet,**
**dass** man die Komponenten A und B in einem Verhältnis einsetzt, wobei das molare Verhältnis der Siliciumverbindung im Sinne der Formel I zur tertiären Aminverbindung im Sinne der Formel II von 2 : 1 bis 1 : m ist, wobei m die Anzahl der tertiären Amin-Gruppen der Formel II darstellt und m eine ganze Zahl zwischen 1 bis 100 ist, bevorzugt von 1 bis 10, besonders bevorzugt 1, 2, 3, 4, 5, 6 oder 7, insbesondere 1 oder 2.

**9.** Verfahren nach einem der Ansprüche 1 bis 8,
**dadurch gekennzeichnet,**
**dass** man die Komponenten A und C in einem molaren Verhältnis von 1 : < 4, bevorzugt 1 : 0 bis 2, besonders bevorzugt 1 : 0,001 bis 1, insbesondere von 1 : 0,1 bis 0,5 einsetzt.

**10.** Verfahren nach einem der Ansprüche 1 bis 9,
**dadurch gekennzeichnet,**
**dass** man als Komponente C mindestens eine mit weiteren organofunktionellen Gruppen funktionalisierte Siliciumverbindung der Formel III, deren Hydrolyseprodukte, Kondensationsprodukte, Co- bzw. Blockkondensationsprodukte oder Gemische dieser einsetzt,

$$(R^{7}0)_{3-a-b}(R^{8})_{a}Si(B)_{1+b} \qquad (III)$$

worin $R^7$ unabhängig für ein Wasserstoff, eine lineare, verzweigte oder cyclische Alkyl-Gruppe mit 1 bis 8 C-Atomen, eine Aryl-, Arylalkyl- oder Acyl-Gruppe, bevorzugt Alkyl mit 1 bis 5 C-Atomen, besonders bevorzugt Methyl, Ethyl, n-Propyl steht,
$R^8$ unabhängig eine lineare, verzweigte oder cyclische Alkyl-Gruppe mit 1 bis 24 C-Atomen, bevorzugt mit 1 bis 16, besonders bevorzugt mit 1 bis 8 C-Atomen, eine Aryl- oder Arylalkyl- Gruppe darstellt,
Gruppen B gleich oder verschieden sind und B für eine organofunktionelle Gruppe steht,
a gleich 0, 1 oder 2, b gleich 0, 1 oder 2 und (a + b) gleich 0, 1 oder 2 sind, wobei die Verbindung der allgemeinen Formel III ausgewählt ist aus Verbindungen mit

- B gleich $-[(R^{10})_nR^9]$, wobei $R^{10}$ für eine lineare, verzweigte oder cyclische Alkylen-Gruppe mit 1 bis 18 C-Atomen oder eine Alkenylen-Gruppe mit 1 bis 18 C-Atomen steht, n gleich 0 oder 1 ist und $R^9$ unabhängig eine unsubstituierte oder substituierte lineare, verzweigte oder cyclische Alkyl-Gruppe mit 1 bis 30 C-Atomen darstellt, die optional eine oder mehrere $-N(R^{3*})_2$, $-OR^{3*}$ und/oder $-SR^{3*}$ Gruppen aufweisen kann, mit $R^{3*}$ unabhängig für ein Wasserstoff oder mit $R^{3*}$ gleich $R^9$ sowie $R^9$ zusammen mit einem Heteroatom N, S oder O ein Cyclus oder Heteroaromaten mit 1 bis 7 C-Atomen ist,
- B gleich $(R^{5*}0)_{3-x^*}(R^{6*})_{x^*}Si[(R^{2*})CH_2-]$ ist, wobei $R^{5*}$ unabhängig für ein Wasserstoff, eine lineare, verzweigte oder cyclische Alkyl-Gruppe mit 1 bis 8 C-Atomen oder für eine Aryl-, Arylalkyl- oder Acyl-Gruppe steht, $R^{6*}$ unabhängig eine lineare, verzweigte oder cyclische Alkyl-Gruppe mit 1 bis 24 C-Atomen oder eine Aryl-, Arylalkyl- oder Acyl-Gruppe darstellt, $R^{2*}$ eine lineare, verzweigte oder cyclische Alkylen-Gruppe mit 1 bis 18 C-Atomen oder eine Alkenylen-Gruppe mit 1 bis 18 C-Atomen, bevorzugt ein Alkylen-Gruppe, insbesondere $-(CH_2)_{n^*}-$ mit n* gleich 0, 1 oder 2 sowie $-CH_2CH(CH_3)-$, und x* gleich 0, 1 oder 2 ist,
- B ein primärer, sekundärer oder tertiärer aminofunktioneller Rest der allgemeinen Formeln IIIa oder IIIb ist,

$$R^{11}{}_{h^*}NH_{(2-h^*)}[(CH_2)_h(NH)]_j[(CH_2)_l(NH)]_c\ -(CH_2)_k- \qquad (IIIa)$$

worin $0 \leq h \leq 6$; h* = 0, 1 oder 2, j = 0, 1 oder 2; $0 \leq l \leq 6$; c = 0, 1 oder 2; $0 \leq k \leq 6$ und $R^{11}$ einem Benzyl-, Aryl-, Vinyl-, Formyl-Rest oder einem linearen, verzweigten oder cyclischen Alkyl-Rest mit 1 bis 8 C-Atomen entsprechen und in Formel IIIb

$$[NH_2(CH_2)_d]_2N(CH_2)_p- \qquad (IIIb)$$

$0 \leq d \leq 6$ und $0 \leq p \leq 6$ sind, bevorzugt mit d gleich 1 oder 2 und p gleich 3,
- B gleich $-(CH_2)_{i^*}-[NH(CH_2)_{f^*}]_{g^*}NH[(CH_2)_{f^*}NH]_{g^*}-(CH_2)_{i^*}-SiR^{2*}{}_{a^*}(OR^{1**})_{b^*}$ (IIIc), worin i*, f* oder g* in der Formel IIIc jeweils unabhängig voneinander gleich oder verschieden sind, mit i* = 0 bis 8, f* = 1, 2 oder 3, g* = 0, 1 oder 2 und $R^{1**}$ einem linearen, cyclischen oder verzweigten Alkyl-Rest mit 1 bis 4 C-Atomen entsprechen, wobei i* insbesondere eine der Zahlen 1, 2, 3 oder 4 ist, mit a*, b* = 0, 1, 2 oder 3 und (a* + b*) gleich 3 und $R^{2*}$ ein Alkyl-Rest mit 1 bis 24 C-Atomen ist,
- B ein Rest $R^{12}-Y_q-(CH_2)_s-$ ist, wobei $R^{12}$ einem mono-, oligo- oder perfluorierten Alkyl-Rest mit 1 bis 20 C-Atomen oder einem mono-, oligo- oder perfluorierten Aryl-Rest entspricht, wobei ferner Y einem $-CH_2-$, -O-, -Aryl- oder -S-Rest entspricht und q = 0 oder 1 und s = 0 oder 2 ist, insbesondere entspricht B einem perfluorierten Alkylrest mit 1 bis 20 C-Atomen,

- B ein Vinyl-, Allyl-, iso-Propenyl-Rest, Mercaptoalkyl-Rest, Sulfanalkyl-Rest, Ureidoalkyl-Rest, Acryloxyalkyl-Rest, Methacryloxyalkyl-Rest, insbesondere Methacryloxypropyl, oder ein linearer, verzweigter oder cyclischer Alkoxyrest mit 1 bis 24 C-Atomen ist, insbesondere mit 1 bis 16 C-Atomen, bevorzugt mit 1 bis 4 C-Atomen, insbesondere bei a gleich 0 und b gleich 0, 1 oder 2 in Formel III für ein Tetraalkoxysilan,
- B ein Hydroxyalkyl-, Epoxy- und/oder Ether-Rest ist, insbesondere ein 3-Glycidyloxyalkyl-, 3-Glycidyloxypropyl-, Dihydroxyalkyl-, Epoxyalkyl-, Epoxycycloalkyl-, Polyalkylglykolalkyl-Rest oder ein Polyalkylglykol-3-propyl-Rest, oder
- zumindest teilweisen Hydrolyse- und Kondensationsprodukten einer oder mindestens zweier Verbindungen der Formel III.

**11.** Verfahren nach einem der Ansprüche 1 bis 10,
**dadurch gekennzeichnet,**
**dass** man als Komponente C mindestens eine Siliciumverbindung aus der Reihe Siliciumtetrachlorid, Tetramethoxysilan, Tetraethoxysilan, Tetrapropoxylsilan, Methyltrimethoxysilan, Methyltriethoxysilan, Ethyltrimethoxysilan, Ethyltriethoxysilan, n-Propyltrimethoxysilan, n-Propyltriethoxysilan, n- bzw. i-Butyltrimethoxysilan, n- bzw. i-Butyltriethoxysilan, n- bzw. i-Octyltrimethoxysilan, n- bzw. i-Octyltriethoxysilan, Hexadecyltrimethoxysilan, Hexadecyltriethoxysilan, Vinyltriethoxysilan, Vinyltrimethoxysilan, Vinyltris(2-methoxyethoxy)silan, Phenyltrimethoxysilan, Phenyltriethoxysilan, Tridecafluor-1,1,2,2,tetrahydro-octyltrimethoxysilan, Tridecafluor-1,1,2,2,tetrahydrooctyltriethoxysilan, 3-Mercaptopropyltrimethoxysilan, 3-Mercaptopropyltriethoxysilan, 1-Mercaptomethyltrimethoxysilan, 1-Mercaptomethyltriethoxysilan, 3-Glycidyloxypropyltriethoxysilan, 3-Glycidyloxypropyltrimethoxysilan, 3-Methacryloxyisobutyltrimethoxysilan, 3-Methacryloxyisobutyltriethoxysilan, 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, 3-Ureidopropyltriethoxysilan, 3-Ureidopropyltrimethoxysilan, 3-Aminopropyltrimethoxysilan, 3-Aminopropyltriethoxysilan, 3-Aminopropylmethyldimethoxysilan, 3-Aminpropylmethyldiethoxysilan, 1-Aminomethyltrimethoxysilan, 1-Aminomethyltriethoxysilan, 2-Aminoethyltrimethoxysilan, 2-Aminoethyltriethoxysilan, 3-Aminoisobutyltrimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-amino-methyltriethoxysilan, N-n-Butyl-1-aminomethylmethyldimethoxysilan, N-n-Butyl-1-aminomethyltrimethoxysilan, N-n-Butyl-1-amino-methylmethyltriethoxysilan, Benzyl-3-aminopropyltrimethoxysilan, Benzyl-3-aminopropyltriethoxysilan, Benzyl-2-aminoethyl-3-aminopropyltrimethoxysilan, Benzyl-2-aminoethyl-3-aminopropyltriethoxysilan, N-Formyl-3-aminopropyltriethoxysilan, N-Formyl-3-aminopropyltrimethoxysilan, N-Formyl-1-amino-methylmethyldimethoxysilan, N-Formyl-1-aminomethylmethyldiethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxysilan, (1-Aminoethylamino)-methyltrimethoxysilan, (1-Aminoethyl-amino)-methyltriethoxysilan, Tris(trimethoxysilylpropyl)amin, Tris(triethoxysilylpropyl)amin, Tris(trimethoxysilylmethyl)amin, Tris(triethoxysilylmethyl)amin, Bis(trimethoxysilylpropyl)amin, Bis(triethoxysilylpropyl)amin, Bis(diethoxymethylsilylpropyl)amin, Bis(dimethoxymethylsilylpropyl)amin, Bis(triethoxysilylmethyl)amin, Bis(trimethoxysilylmethyl)amin, Bis(diethoxymethylsilylmethyl)-amin, Bis(dimethoxymethylsilylmethyl)amin, $(H_3CO)_3Si(CH_2)_3NH(CH_2)_2NH(CH_2)_3Si(OCH_3)_3$,
$(H_3CO)_3Si(CH_2)_3NH(CH_2)_2NH(CH_2)_2NH(CH_2)_3Si(OCH_3)_3$,
$(H_3CO)_2(CH_3)Si(CH_2)_3NH(CH_2)_2NH(CH_2)_3Si(OCH_3)_2(CH_3)$,
$(H_3CO)_3(CH_3)Si(CH_2)_3NH(CH_2)_2NH(CH_2)_2NH(CH_2)_3Si(OCH_3)_2(CH_3)$,
oder ein Gemisch aus mindestens zwei der zuvor genannten Verbindungen oder ein Hydrolyse- bzw. Kondensationsprodukt einer der zuvor genannten Verbindungen
oder ein Hydrolyse-, Kondensations-, Co-, Block- bzw. Block-Co-kondensationsprodukt aus mindestens zwei der zuvor genannten Verbindungen einsetzt.

**12.** Verfahren nach einem der Ansprüche 1 bis 11,
**dadurch gekennzeichnet,**
**dass** man

- die Komponenten A und B und optional C mischt, wobei dem Gemisch optional ein Löse- bzw. Verdünnungsmittel, vorzugsweise ein Alkohol, besonders bevorzugt Methanol, Ethanol, Isopropanol, zugesetzt werden kann,
- in das Gemisch kontinuierlich oder diskontinuierlich Wasser in einer Menge von 0,5 bis 500 mol Wasser je Mol der vorliegenden Silicium-Atome dosiert, vorzugsweise unter Rühren, sowie optional dem Reaktionsgemisch einen Katalysator zusetzt,
- das vorliegende Reaktionsgemisch bei Umgebungsdruck oder vermindertem Druck auf eine Temperatur zwischen 20 und 150 °C einstellt und

- den gebildete Hydrolysealkohol zumindest teilweise, vorzugsweise im Wesentlichen vollständig, aus dem Reaktionsgemisch entfernt ebenso das gegebenenfalls eingesetzte Löse- bzw. Verdünnungsmittel und
- die so erhaltene Zusammensetzung optional mit Wasser verdünnt, wobei man den Gehalt an Wirkstoff in der Zusammensetzung bevorzugt auf 0,1 bis 99,9 Gew.-% einstellt, und nachfolgend gegebenenfalls mit mindestens einer weiteren Komponente aus der Reihe der Pigmente, Füllstoffe, Binder, Vernetzer, optische Aufheller, Verdicker, Rheologiehilfsstoffe, Lackhilfsstoffe oder einem anderen Hilfsstoff versetzt oder in Kontakt bringt.

**13.** Zusammensetzung enthaltend quartäre-aminoalkylfunktionelle, siliciumorganische Verbindungen und Wasser, erhältlich nach einem Verfahren gemäß einem der Ansprüche 1 bis 12 und
**gekennzeichnet durch**
einen Gehalt an Wasser von 0,0999 bis 99,9 Gew.-% und einen Gehalt an flüchtigem Lösemittel bzw. Hydrolysealkohol in der Gesamtzusammensetzung von unter 12 Gew.-% bis 0 Gew.-%, vorzugsweise unter 5 bis 0,0001 Gew.-%, wobei alle Bestandteile in der Zusammensetzung in Summe 100 Gew.-% ergeben, wobei die Zusammensetzung eine Viskosität von < 1500 mPa s aufweist.

**14.** Zusammensetzung nach Anspruch 13,
**gekennzeichnet durch**
einen Gehalt an Wirkstoff in der Zusammensetzung von 0,1 bis 99,9 Gew.-%, vorzugsweise 0,5 bis 90 Gew.-%, besonders bevorzugt 5 bis 70 Gew.-%, ganz besonders bevorzugt 7 bis 60 Gew.%, insbesondere 10 bis 50 Gew.-%, wobei alle Bestandteile in der Zusammensetzung in Summe 100 Gew.-% ergeben.

**15.** Zusammensetzung nach Anspruch 13 oder 14,
**dadurch gekennzeichnet,**
**dass** die Zusammensetzung mindestens eine weitere der folgenden Komponenten aus der Reihe Pigmente, Füllstoffe, Binder, Vernetzer, optische Aufheller, Lackhilfsstoffe oder andere Hilfsstoffe enthält.

**16.** Zusammensetzung nach einem der Ansprüche 13 bis 15, **dadurch gekennzeichnet, dass** die Zusammensetzung eine Viskosität von ≤ 1000 mPa s, bevorzugt 10 bis 300 mPa s, insbesondere von 100 bis 300 mPa s, aufweist.

**17.** Verwendung einer Zusammensetzung nach einem der Ansprüche 13 bis 16 oder hergestellt nach einem der Ansprüche 1 bis 12 zur Modifizierung, Behandlung und/oder Herstellung von Formulierungen, Substraten, Artikeln, organischen oder anorganischen Materialien, Kompositmaterialien, Papierstreichmassen, Inkjet-Anwendungen, Papierbeschichtungsmitteln, Papier, Textilien, Füllstoffen, biozid, fungizid und/oder viruzid wirkenden Formulierungen, biozid, fungizid und/oder viruzid wirkenden Beschichtungen, zur Ausrüstung von Fasermaterialien, Garnen und/oder Textilien, zur Textilimprägnierung, zur Antistatikausrüstung von Oberflächen, insbesondere flächiger, faseriger, gewebter, körniger und/oder pulverförmiger Materialien.

## Claims

**1.** Process for preparing a composition containing quaternary amino-functional organosilicon compounds, **characterized in that**
it comprises reacting

- as component A

(i) at least one haloalkyl-functional alkoxysilane of the general formula I

$$(R^10)_{3-x-y}(R^2)_xSi[(R^3)_nCH_2Hal]_{1+y} \qquad (I),$$

where the $R^1$ groups are the same or different and $R^1$ represents a hydrogen, a linear, branched, or cyclic alkyl group having 1 to 8 carbon atoms, an aryl, arylalkyl or acyl group,
the $R^2$ groups are the same or different and $R^2$ represents a linear, branched or cyclic alkyl group having 1 to 8 carbon atoms, or an aryl, arylalkyl or acyl group,
the $R^3$ groups are the same or different and $R^3$ signifies a linear, branched or cyclic alkylene group having 1 to 18 carbon atoms,
n is equal to 0 or 1 and Hal represents chlorine or bromine, and

x is equal to 0, 1 or 2, y is equal to 0, 1 or 2 and (x + y) is equal to 0, 1 or 2,

or (ii) a hydrolysis or condensation product of at least one alkoxysilane of the aforementioned general formula I
or (iii) a mixture of at least one alkoxysilane of the aforementioned general formula I and a hydrolysis and/or condensation product of at least one alkoxysilane of the aforementioned general formula I

- with a tertiary amine of the general formula II as component B,

$$N(R^4)_3 \qquad (II),$$

where the $R^4$ groups are the same or different and $R^4$ represents a group $(R^10)_{3-x-y}(R^2)_xSi[(R^3)_nCH_2-]_{1+y}$, where $R^1$, $R^2$, $R^3$, n, x, y and (x+y) likewise have the aforementioned meaning, or represents a linear, branched or cyclic alkyl group having 1 to 30 carbon atoms which may additionally be substituted,
where optionally two $R^4$ groups are in turn linked together and combine with the nitrogen of the tertiary amine to form a cycle,
- in the presence of a defined amount of water, and
- removing the resulting hydrolysis alcohol at least partially from the system, volatile solvent/diluent medium and any groups hydrolyzable to volatile solvent, more particularly hydrolysis alcohol, are removed down to a level in the overall composition of below 12% by weight, wherein the removing of volatile solvent/diluent medium can be effected during the reaction and/or thereafter by distillation, more particularly under reduced pressure in the range from 1 to 1000 mbar.

**2.** Process according to Claim 1, **characterized in that** the reaction is carried out in the presence of a catalyst and/or under addition of a separate catalyst.

**3.** Process according to Claim 1 or 2, **characterized in that** there is used as a further input component C at least one further hydrolyzable/condensable silicon compound, preferably an organoalkoxy-functional silicon compound, its hydrolysis, homo-, co-, block co-condensate or mixtures thereof.

**4.** Process according to any one of Claims 1 to 3, **characterized in that** water is used in an amount of 0.5 to 500 mol of water per mole of silicon atoms present in the reaction mixture, preferably 5 to 25 mol of water per mole of hydrolyzable silicon atoms concerning the used components A and also optionally B and/or C, particularly preferably 10 to 20 mol of water per mole of said silicon atoms, more particularly 12 to 17 mol of water per mole of said silicon atoms, wherein the water is metered continuously or discontinuously into the reaction mixture of the input components A, B and optionally C, preferably the water is added discontinuously under stirring, more preferably portionwise, in 1 to 10 portions, more particularly in 2 to 5 portions, and the reaction is carried out at a pressure in the range from 1 mbar to 1.1 bar, preferably at ambient pressure (normal pressure), and a temperature of 20 and 150°C, preferably in the range from 40 to 120°C, more preferably in the range from 60 to 100°C and more particularly in the range from 80 to 95°C.

**5.** Process according to any one of Claims 1 to 4, **characterized in that** volatile solvent/diluent medium and any groups hydrolyzable to volatile solvent, more particularly hydrolysis alcohol, are removed down to a level in the overall composition of below 10% by weight to 0% by weight, preferably below 5% by weight, more preferably in the range from 2% by weight to 0.0001% by weight and more particularly in the range from 1% to ≤ 0.5% by weight, wherein the removing of volatile solvent/diluent medium can be effected during the reaction and/or thereafter by distillation, more particularly under reduced pressure in the range from 80 to 300 mbar.

**6.** Process according to any one of Claims 1 to 5, **characterized in that** component A comprises at least one silicon compound from the series 3-chloropropyltrimethoxysilane, 3-chloropropyltriethoxysilane, 3-chloropropylmethyldimethoxysilane, 3-chloropropylmethyldiethoxysilane, 3-chloropropyldimethylethoxysilane or 3-chloropropyldimethylmethoxysilane or a hydrolysis or condensation product of the aforementioned alkoxysilanes.

**7.** Process according to any one of Claims 1 to 6, **characterized in that** component B comprises at least one tertiary amine selected from the series of compounds of formulae IIa and/or IIb,

$$(R^{14})2N\ [CH_2CH_2N(R^{14})]_hCH_2CH_2N(R^{14})_2 \qquad (IIa),$$

where $R^{14}$ in each occurrence independently represents a branched, unbranched or cyclic alkyl, aryl or alkylaryl group having 1 to 20 carbon atoms and h is equal to 0, 1, 2, 3, 4, 5, 6 or 7,

$$[(CH_3\text{-}(CH_2)_w]_{p*}N(R^{14})_{3\text{-}p*} \quad \text{(IIb)},$$

where w is equal to 2 to 20, more particularly where w is equal to 7 to 17, and $R^{14}$ in each occurrence independently represents a branched, unbranched or cyclic alkyl, aryl or alkylaryl group having 1 to 20 carbon atoms and p* is equal to 1 or 2, wherein component B preferably comprises at least one tertiary amine selected from the series tetramethylethylenediamine, pentamethyldiethylenetriamine, hexadecyldimethylamine, octadecyldimethylamine, tetradecyldimethylamine, dodecyldimethylamine, decyldimethylamine, octyldimethylamine, tetraethylethylenediamine, pentaethyldiethylenetriamine, hexadecyldiethylamine, octadecyldiethylamine, tetradecyldiethylamine, dodecyldiethylamine, decyldiethylamine, octyldiethylamine, isohexadecyldimethylamine, isooctadecyldimethylamine, isotetradecyldimethylamine, isododecyldimethylamine, isodecyldimethylamine, isooctyldimethylamine, isotetraethylethylenediamine, isopentaethyldiethylenetriamine, isohexadecyldiethylamine, isooctadecyldiethylamine, isotetradecyldiethylamine, isododecyldiethylamine, isodecyldiethylamine, isooctyldiethylamine, tris(trimethoxysilylpropyl)amine, tris(triethoxysilylpropyl)amine, tris(trimethoxysilylmethyl)amine, tris(triethoxysilylmethyl)amine.

**8.** Process according to any one of Claims 1 to 7, **characterized in that** components A and B are used in a ratio, wherein the molar ratio of the silicon compound within the meaning of formula I to the tertiary amine compound within the meaning of formula II is in the range from 2 : 1 to 1 : m, wherein m is the number of tertiary amine groups of formula II and m is an integer between 1 to 100, preferably in the range from 1 to 10, more preferably 1, 2, 3, 4, 5, 6 or 7 and more particularly 1 or 2.

**9.** Process according to any one of Claims 1 to 8, **characterized in that** components A and C are used in a molar ratio of 1 : < 4, preferably 1 : 0 to 2, more preferably 1 : 0.001 to 1 and more particularly 1 : 0.1 to 0.5.

**10.** Process according to any one of Claims 1 to 9, **characterized in that** component C comprises at least one further organofunctionalized silicon compound of formula III, its hydrolysis products, condensation products, co- or block condensation products or mixtures thereof,

$$(R^7O)_{3\text{-}a\text{-}b}(R^8)_aSi(B)_{1+b} \quad \text{(III)}$$

where $R^7$ in each occurrence independently represents a hydrogen, a linear, branched or cyclic alkyl group having 1 to 8 carbon atoms, an aryl, arylalkyl or acyl group, preferably alkyl having 1 to 5 carbon atoms, more preferably methyl, ethyl, n-propyl,
$R^8$ in each occurrence independently signifies a linear, branched or cyclic alkyl group having 1 to 24 carbon atoms, preferably having 1 to 16 and more preferably having 1 to 8 carbon atoms, an aryl or arylalkyl group,
the B groups are the same or different and B represents an organofunctional group,
a is equal to 0, 1 or 2, b is equal to 0, 1 or 2 and (a + b) is equal to 0, 1 or 2,
wherein the compound of the general formula III is selected from compounds with

- B being equal to $-[(R^{10})_nR^9]$, where $R^{10}$ represents a linear, branched or cyclic alkylene group having 1 to 18 carbon atoms or an alkenylene group having 1 to 18 carbon atoms, n is equal to 0 or 1 and $R^9$ in each occurrence independently signifies a substituted or unsubstituted linear, branched or cyclic alkyl group having 1 to 30 carbon atoms which may optionally include one or more $-N(R^{3*})_2$, $-OR^{3*}$ and/or $-SR^{3*}$ groups, with $R^{3*}$ in each occurrence independently representing a hydrogen or with $R^{3*}$ equal $R^9$ and also $R^9$ together with a heteroatom N, S or O being a cycle or heteroaromatic having 1 to 7 carbon atoms,
- B being equal to $(R^{5*}O)_{3\text{-}x*}(R^{6*})_{x*}Si[(R^{2*})CH_2\text{-}]$, where $R^{5*}$ in each occurrence independently represents a hydrogen, a linear, branched or cyclic alkyl group having 1 to 8 carbon atoms or represents an aryl, arylalkyl or acyl group, $R^{6*}$ in each occurrence independently signifies a linear, branched or cyclic alkyl group having 1 to 24 carbon atoms or an aryl, arylalkyl or acyl group, $R^{2*}$ is a linear, branched or cyclic alkylene group having 1 to 18 carbon atoms or an alkenylene group having 1 to 18 carbon atoms, preferably an alkylene group, more particularly $-(CH_2)_{n*}-$ with $n_*$ being equal to 0, 1 or 2 and also $-CH_2CH(CH_3)-$, and $x_*$ is equal to 0, 1 or 2,
- B is a primary, secondary or tertiary amino-functional radical of the general formulae IIIa or IIIb,

$$R^{11}{}_{h*}NH_{(2\text{-}h*)}[(CH_2)_h(NH)]_j[(CH_2)_l(NH)]_c\text{-}(CH_2)_k\text{-} \quad \text{(IIIa)}$$

where $0 \leq h \leq 6$; $h^* = 0$, 1 or 2, $j = 0$, 1 or 2; $0 \leq l \leq 6$; $c = 0$, 1 or 2; $0 \leq k \leq 6$ and $R^{11}$ corresponds to a benzyl, aryl, vinyl, formyl radical or a linear, branched or cyclic alkyl radical having 1 to 8 carbon atoms and in formula IIIb

$$[NH_2(CH_2)_d]_2N(CH_2)_p - \qquad \text{(IIIb)}$$

$0 \leq d \leq 6$ and $0 \leq p \leq 6$, preferably with d equal 1 or 2 and p equal 3,

- B is equal to $-(CH_2)_{i^*}-[NH(CH_2)_{f^*}]_{g^*}NH[(CH_2)_{f^*}NH]g_* -(CH_2)_{i^*}-SiR^{2*}{}_{a^*}(OR^{1**})_{b^*}$ (IIIc), where i*, f* or g* in formula IIIc are each independently identical or different, with i* = 0 to 8, f* = 1, 2 or 3, g* = 0, 1 or 2 and $R^{1**}$ corresponding to a linear, cyclic or branched alkyl radical having 1 to 4 carbon atoms, where i* is more particularly one of the numbers 1, 2, 3 or 4, with a*, b* = 0, 1, 2 or 3 and (a* + b*) equal 3 and $R^{2*}$ is an alkyl radical having 1 to 24 carbon atoms,
- B is a radical $R^{12}-Y_q-(CH_2)_s-$, where $R^{12}$ corresponds to a mono-, oligo- or perfluorinated alkyl radical having 1 to 20 carbon atoms or to a mono-, oligo- or perfluorinated aryl radical, where Y further corresponds to a $-CH_2-$, -O-, -aryl or -S-radical and q is = 0 or 1 and s is = 0 or 2, more particularly B corresponds to a perfluorinated alkyl radical having 1 to 20 carbon atoms,
- B is a vinyl, allyl, isopropenyl radical, mercaptoalkyl radical, sulfanealkyl radical, ureidoalkyl radical, acryloyloxyalkyl radical, methacryloyloxyalkyl radical, more particularly methacryloyloxypropyl, or a linear, branched or cyclic alkoxy radical having 1 to 24 carbon atoms, more particularly having 1 to 16 carbon atoms and preferably having 1 to 4 carbon atoms, more particularly with a equal 0 and b equal 0, 1 or 2 in formula III for a tetraalkoxysilane,
- B is a hydroxyalkyl, epoxy and/or ether radical, more particularly a 3-glycidyloxyalkyl, 3-glycidyloxypropyl, dihydroxyalkyl, epoxyalkyl, epoxycycloalkyl, polyalkylglycolalkyl radical or a polyalkylglycol-3-propyl radical, or
- at least partial hydrolysis and condensation products of one or at least two compounds of formula III.

**11.** Process according to any one of Cclaims 1 to 10, **characterized in that** component C comprises at least one silicon compound from the series silicon tetrachloride, tetramethoxysilane, tetraethoxysilane, tetrapropoxysilane, methyltrimethoxysilane, methyltriethoxysilane, ethyltrimethoxysilane, ethyltriethoxysilane, n-propyltrimethoxysilane, n-propyltriethoxysilane, n-butyltrimethoxysilane, i-butyltrimethoxysilane, n-butyltriethoxysilane, i-butyltriethoxysilane, n-octyltrimethoxysilane i-octyltrimethoxysilane, n-octyltriethoxysilane, i-octyltriethoxysilane, hexadecyltrimethoxysilane, hexadecyltriethoxysilane, vinyltriethoxysilane, vinyltrimethoxysilane, vinyltris(2-methoxyethoxy)silane, phenyltrimethoxysilane, phenyltriethoxysilane, tridecafluoro-1,1,2,2-tetrahydrooctyltrimethoxysilane, tridecafluoro-1,1,2,2-tetrahydrooctyltriethoxysilane, 3-mercaptopropyltrimethoxysilane, 3-mercaptopropyltriethoxysilane, 1-mercaptomethyltrimethoxysilane, 1-mercaptomethyltriethoxysilane, 3-glycidyloxypropyltriethoxysilane, 3-glycidyloxypropyltrimethoxysilane, 3-methacryloxyisobutyltrimethoxysilane, 3-methacryloxyisobutyltriethoxysilane, 3-methacryloxypropyltrimethoxysilane, 3-methacryloxypropyltriethoxysilane, 3-methacryloxypropylmethyldimethoxysilane, 3-methacryloxypropylmethyldiethoxysilane, 3-ureidopropyltriethoxysilane, 3-ureidopropyltrimethoxysilane, 3-aminopropyltrimethoxysilane, 3-aminopropyltriethoxysilane, 3-aminopropylmethyldimethoxysilane, 3-aminopropylmethyldiethoxysilane, 1-aminomethyltrimethoxysilane, 1-aminomethyltriethoxysilane, 2-aminoethyltrimethoxysilane, 2-aminoethyltriethoxysilane, 3-aminoisobutyltrimethoxysilane, 3-aminoisobutyltriethoxysilane, N-n-butyl-3-aminopropyltriethoxysilane, N-n-butyl-3-aminopropylmethyldiethoxysilane, N-n-butyl-3-aminopropyltrimethoxysilane, N-n-butyl-3-aminopropylmethyldimethoxysilane, N-n-butyl-1-aminomethyltriethoxysilane, N-n-butyl-1-aminomethylmethyldimethoxysilane, N-n-butyl-1-aminomethyltrimethoxysilane, N-n-butyl-1-aminomethylmethyltriethoxysilane, benzyl-3-aminopropyltrimethoxysilane, benzyl-3-aminopropyltriethoxysilane, benzyl-2-aminoethyl-3-aminopropyltrimethoxysilane, benzyl-2-aminoethyl-3-aminopropyltriethoxysilane, N-formyl-3-aminopropyltriethoxysilane, N-formyl-3-aminopropyltrimethoxysilane, N-formyl-1-aminomethylmethyldimethoxysilane, N-formyl-1-aminomethylmethyldiethoxysilane, diaminoethylene-3-propyltrimethoxysilane, diaminoethylene-3-propyltriethoxysilane, triaminodiethylene-3-propyltrimethoxysilane, triaminodiethylene-3-propyltriethoxysilane, (2-amino-ethylamino)ethyltrimethoxysilane, (2-aminoethylamino)ethyltriethoxysilane, (1-aminoethylamino)methyltrimethoxysilane, (1-aminoethylamino)methyltriethoxysilane, tris(trimethoxysilylpropyl)amine, tris(triethoxysilylpropyl)amine, tris(trimethoxysilylmethyl)amine, tris(triethoxysilylmethyl)amine, bis(trimethoxysilylpropyl)amine, bis(triethoxysilylpropyl)amine, bis(diethoxymethylsilylpropyl)amine, bis(dimethoxymethylsilylpropyl)amine, bis(triethoxysilylmethyl)amine, bis(trimethoxysilylmethyl)amine, bis(diethoxymethylsilylmethyl)amine, bis(dimethoxymethylsilylmethyl)amine, $(H_3CO)_3Si(CH_2)_3NH(CH_2)_2NH(CH_2)_3Si(OCH_3)_3$, $(H_3CO)_3Si(CH_2)_3NH(CH_2)_2NH(CH_2)_2NH(CH_2)_3Si(OCH_3)_3$, $(H_3CO)_2(CH_3)Si(CH_2)_3NH(CH_2)_2NH(CH_2)_3Si(OCH_3)_2(CH_3)$, $(H_3CO)_3(CH_3)Si(CH_2)_3NH(CH_2)_2NH(CH_2)_2NH(CH_2)_3Si(OCH_3)_2(CH_3)$,

or a mixture of at least two of the aforementioned compounds
or a hydrolysis/condensation product of one of the aforementioned compounds
or a hydrolysis, condensation, co-, block or block co-condensation product of at least two of the aforementioned compounds.

**12.** Process according to any one of Claims 1 to 11, **characterized in that**

- the components A and B and optionally C are mixed, wherein the mixture may optionally have added to it a solvent/diluent medium, preferably an alcohol, more preferably methanol, ethanol, isopropanol,
- water is continuously or discontinuously metered into the mixture in an amount of 0.5 to 500 mol of water per mole of silicon atoms present, preferably under stirring, and optionally a catalyst is added to the reaction mixture,
- the reaction mixture present is set to a temperature between 20 and 150°C at ambient pressure or reduced pressure, and
- the resultant hydrolysis alcohol is at least partially, preferably essentially completely, removed from the reaction mixture as is any solvent/diluent medium used, and
- the composition thus obtained is optionally diluted with water, wherein the level of active ingredient in the composition is preferably adjusted to 0.1% to 99.9% by weight and thereafter optionally admixed or contacted with at least one further component from the series of pigments, fillers, binders, crosslinkers, optical brighteners, thickeners, rheological auxiliaries, coating auxiliaries or some other auxiliary.

**13.** Composition containing quaternary aminoalkylfunctional organosilicon compounds and water, obtainable by a process according to any one of Claims 1 to 12 and **characterized by** a level of water ranging from 0.0999% to 99.9% by weight and a level of volatile solvent/hydrolysis alcohol in the overall composition of below 12% by weight to 0% by weight, preferably below 5% to 0.0001% by weight, wherein all the constituents in the composition sum to 100% by weight, wherein the composition has a viscosity of < 1500 mPa s.

**14.** Composition according to Claim 13, **characterized by** a level of active ingredient in the composition ranging from 0.1% to 99.9% by weight, preferably 0.5% to 90% by weight, more preferably 5% to 70% by weight, even more preferably 7% to 60% by weight and more particularly 10% to 50% by weight, wherein all the constituents in the composition sum to 100% by weight.

**15.** Composition according to any one of Claims 13 and 14, **characterized in that** the composition contains at least one further of the following components from the series pigments, fillers, binders, crosslinkers, optical brighteners, coating auxiliaries or other auxiliaries.

**16.** Composition according to any one of Claims 13 to 15, **characterized in that** the composition has a viscosity of ≤ 1000 mPa s, preferably 10 to 300 mPa s, more particularly of 100 to 300 mPa s.

**17.** Use of a composition according to any one of Claims 13 to 16 or obtained according to any one of Claims 1 to 12 for modification, treatment and/or production of formulations, substrates, articles, organic or inorganic materials, composite materials, papercoating slips, inkjet applications, papercoating materials, paper, textiles, fillers, biocidally, fungicidally and/or virucidally acting formulations, biocidally, fungicidally and/or virucidally acting coatings, for finishing of fiber materials, yarns and/or textiles, for textile impregnation, for antistatisization of surfaces, more particularly sheetlike, fibrous, woven, granular and/or pulverulent materials.

**Revendications**

**1.** Procédé pour la préparation d'une composition contenant des composés organosiliciés à fonctionnalité amino quaternaire, **caractérisé en ce qu'**on transforme

- comme composant A :

(i) au moins un alcoxysilane à fonctionnalité halogénoalkyle de formule générale I

$$(R^10)_{3-x-y}(R^2)_xSi[(R^3)_nCH_2Hal]_{1+y} \qquad (I),$$

dans laquelle les groupes $R^1$ sont identiques ou différents et $R^1$ représente hydrogène, un groupe alkyle linéaire, ramifié ou cyclique comprenant 1 à 8 atomes de carbone, un groupe aryle, un groupe arylalkyle ou un groupe acyle,
les groupes $R^2$ sont identiques ou différents et $R^2$ représente un groupe alkyle linéaire, ramifié ou cyclique comprenant 1 à 8 atomes de carbone ou un groupe aryle, arylalkyle ou acyle,
les groupes $R^3$ sont identiques ou différents et $R^3$ représente un groupe alkylène linéaire, ramifié ou cyclique comprenant 1 à 18 atomes de carbone,
n vaut 0 ou 1 et Hal représente chlore ou brome, et
x vaut 0, 1 ou 2, y vaut 0, 1 ou 2 et (x + y) vaut 0, 1 ou 2, ou

(ii) un produit d'hydrolyse ou de condensation d'au moins un alcoxysilane de la formule générale I susmentionnée ou
(iii) un mélange d'au moins un alcoxysilane de la formule générale I susmentionnée et d'un produit d'hydrolyse et/ou de condensation d'au moins un alcoxysilane de la formule générale I susmentionnée

- avec une amine tertiaire de formule générale II, comme composant B,

$$N(R^4)_3 \qquad \textbf{(II)},$$

dans laquelle les groupes $R^4$ sont identiques ou différents et $R^4$ représente un groupe $(R^1O)_{3-x-y}(R^2)_xSi[R^3)_nCH_2-]_{1+y}$, $R^1$, $R^2$, $R^3$, n, x, y ainsi que (x + y) présentant également la signification susmentionnée, ou un groupe alkyle linéaire, ramifié ou cyclique comprenant 1 à 30 atomes de carbone, qui peut en outre être substitué,
deux groupes $R^4$ étant de leur côté le cas échéant liés l'un à l'autre et formant un cycle avec l'azote de l'amine tertiaire,
- en présence d'une quantité définie d'eau et
- on élimine l'alcool d'hydrolyse formé au moins partiellement du système, le solvant ou le diluant volatil et le cas échéant les groupes hydrolysables en solvant volatil, en particulier l'alcool d'hydrolyse, étant éliminés jusqu'à une teneur dans la composition totale inférieure à 12% en poids, l'élimination du solvant ou du diluant volatil pouvant avoir lieu pendant la transformation et/ou par la suite par distillation, en particulier sous pression réduite dans la plage de 1 à 1000 mbars.

2. Procédé selon la revendication 1, **caractérisé en ce qu'**on réalise la transformation en présence d'un catalyseur ou avec addition d'un catalyseur séparé.

3. Procédé selon la revendication 1 ou 2, **caractérisé en ce qu'**on utilise, comme autre composant de départ C, au moins un autre composé hydrolysable ou condensable du silicium, de préférence un composé à fonctionnalité organoalcoxy du silicium, son produit d'hydrolyse-condensation, d'homocondensation, de cocondensation ou de condensation à blocs ou des mélanges de ceux-ci.

4. Procédé selon l'une quelconque des revendications 1 à 3, **caractérisé en ce qu'**on utilise de l'eau en une quantité de 0,5 à 500 moles d'eau par mole d'atomes de silicium se trouvant dans le mélange réactionnel, de préférence de 5 à 25 moles d'eau par mole d'atomes de silicium hydrolysables par rapport au composant A utilisé ainsi que le cas échéant B et C, de manière particulièrement préférée de 10 à 20 moles d'eau par mole desdits atomes de silicium, en particulier de 12 à 17 moles d'eau par mole desdits atomes de silicium, l'eau étant dosée en continu ou de manière discontinue dans le mélange réactionnel des composants de départ A, B ainsi que le cas échéant C, l'eau étant de préférence ajoutée de manière discontinue sous agitation, de manière particulièrement préférée par charges, en 1 à 10 charges, en particulier en 2 à 5 charges et on réalise la transformation à une pression de 1 mbar à 1,1 bar, de préférence à la pression ambiante (pression normale) et à une température de 20 à 150°C, de préférence de 40 à 120°C, de manière particulièrement préférée de 60 à 100°C, en particulier de 80 à 95°C.

5. Procédé selon l'une quelconque des revendications 1 à 4, **caractérisé en ce qu'**on élimine le solvant ou le diluant volatil et le cas échéant les groupes hydrolysables en solvant volatil, en particulier l'alcool d'hydrolyse, jusqu'à une teneur dans la composition totale inférieure à 10% en poids jusqu'à 0% en poids, de préférence inférieure à 5% en poids, de manière particulièrement préférée de 2% en poids à 0,0001% en poids, en particulier de 1 à ≤ 0,5% en poids, l'élimination du solvant ou du diluant volatil pouvant avoir lieu pendant la transformation et/ou par la suite par distillation, en particulier sous pression réduite dans la plage de 80 à 300 mbars.

6. Procédé selon l'une quelconque des revendications 1 à 5, **caractérisé en ce qu'**on utilise, comme composant A, au moins un composé du silicium de la série formée par le 3-chloropropyltriméthoxysilane, le 3-chloropropyltriéthoxysilane, le 3-chloropropylméthyldiméthoxysilane, le 3-chloropropylméthyldiéthoxysilane, le 3-chloropropyldiméthyléthoxysilane ou le 3-chloropropyldiméthylméthoxysilane ou un produit d'hydrolyse ou de condensation des alcoxysilanes susmentionnés.

7. Procédé selon l'une quelconque des revendications 1 à 6, **caractérisé en ce qu'**on utilise, comme composant B, au moins une amine tertiaire choisie dans la série des composés des formules IIa et/ou IIb,

$$(R^{14})_2N[CH_2CH_2N(R^{14})]_hCH_2CH_2N(R^{14})_2 \qquad \textbf{(IIa)},$$

$R^{14}$ représentant, indépendamment, un groupe alkyle non ramifié, ramifié ou cyclique, un groupe aryle ou un groupe alkylaryle comprenant 1 à 20 atomes de carbone et h valant 0, 1, 2, 3, 4, 5, 6 ou 7,

$$[(CH_3)-(CH_2)_w]_{p^*}N(R^{14})_{3-p^*} \qquad \textbf{(IIb)},$$

dans laquelle w vaut 2 à 20, en particulier w vaut 7 à 17, et $R^{14}$ représente, indépendamment, un radical alkyle linéaire, ramifié ou cyclique, un groupe aryle ou un groupe alkylaryle comprenant 1 à 20 atomes de carbone et p* vaut 1 ou 2,
en utilisant, comme composant B, de préférence au moins une amine tertiaire, choisie dans la série formée par la tétraméthyléthylènediamine, la pentaméthyldiéthylènetriamine, l'hexadécyldiméthylamine, l'octadécyldiméthylamine, la tétradécyldiméthylamine, la dodécyldiméthylamine, la décyldiméthylamine, l'octyldiméthylamine, la tétraéthyléthylènediamine, la pentaéthyldiéthylènetriamine, l'hexadécyldiéthylamine, l'octadécyldiéthylamine, la tétradécyldiéthylamine, la dodécyldiéthylamine, la décyldiéthylamine, l'octyldiéthylamine, l'iso-hexadécyldiméthylamine, l'iso-octadécyldiméthylamine, l'iso-tétradécyldiméthylamine, l'iso-dodécyldiméthylamine, l'iso-décyldiméthylamine, l'iso-octyldiméthylamine, l'iso-tétraéthyléthylènediamine, l'iso-pentaéthyldiéthylènetriamine, l'iso-hexadécyldiéthylamine, l'iso-octadécyldiéthylamine, l'iso-tétradécyldiéthylamine, l'iso-dodécyldiéthylamine, l'iso-décyldiéthylamine, l'iso-octyldiéthylamine, la tris(triméthoxysilylpropyl)amine, la tris(triéthoxysilylpropyl)amine, la tris(triméthoxysilylméthyl)amine, la tris(triéthoxysilylméthyl)amine.

8. Procédé selon l'une quelconque des revendications 1 à 7, **caractérisé en ce qu'**on utilise les composants A et B dans un rapport, le rapport molaire du composé de silicium dans le sens de la formule I au composé d'amine tertiaire dans le sens de la formule II valant 2:1 à 1:m, m représentant le nombre de groupes d'amine tertiaire de la formule II et m étant un nombre entier entre 1 à 100, de préférence de 1 à 10, de manière particulièrement préférée 1, 2, 3, 4, 5, 6 ou 7, en particulier 1 ou 2.

9. Procédé selon l'une quelconque des revendications 1 à 8, **caractérisé en ce qu'**on utilise les composants A et C dans un rapport molaire de 1:< 4, de préférence de 1:0 à 2, de manière particulièrement préférée de 1:0,001 à 1, en particulier de 1:0,1 à 0,5.

10. Procédé selon l'une quelconque des revendications 1 à 9, **caractérisé en ce qu'**on utilise, comme composant C, au moins un composé du silicium fonctionnalisé avec d'autres groupes organofonctionnels de formule III, ses produits d'hydrolyse, ses produits de condensation, ses produits de cocondensation ou de condensation à blocs ou des mélanges de ceux-ci,

$$(R^70)_{3-a-b}(R^8)_aSi(B)_{1+b} \qquad \textbf{(III)}$$

dans laquelle

$R^7$ représente, indépendamment, hydrogène, un groupe alkyle linéaire, ramifié ou cyclique comprenant 1 à 8 atomes de carbone, un groupe aryle, arylalkyle ou acyle, de préférence alkyle comprenant 1 à 5 atomes de carbone, de manière particulièrement préférée méthyle, éthyle, n-propyle,
$R^8$ représente, indépendamment, un groupe alkyle linéaire, ramifié ou cyclique comprenant 1 à 24 atomes de carbone, de préférence 1 à 16, de manière particulièrement préférée 1 à 8 atomes de carbone, un groupe aryle ou arylalkyle,
les groupes B sont identiques ou différents et B représente un groupe organofonctionnel,
a vaut 0, 1 ou 2, b vaut 0, 1 ou 2 et (a + b) vaut 0, 1 ou 2, le composé de formule générale III étant choisi parmi les composés avec

- B représentant $-[(R^{10})_nR^9]$, $R^{10}$ représentant un groupe alkylène linéaire, ramifié ou cyclique comprenant 1 à 18 atomes de carbone ou un groupe alcénylène comprenant 1 à 18 atomes de carbone, n valant 0 ou 1 et $R^9$ représentant, indépendamment, un groupe alkyle non substitué ou substitué, linéaire, ramifié ou cyclique comprenant 1 à 30 atomes de carbone, qui peut éventuellement présenter un ou plusieurs groupes $-N(R^{3*})_2$, $-OR^{3*}$ et/ou $-SR^{3*}$, $R^{3*}$ représentant, indépendamment, hydrogène ou $R^{3*}$ représentant $R^9$ et $R^9$ représentant, ensemble avec un hétéroatome N, S ou 0, un cycle ou un hétéroaromatique comprenant 1 à 7 atomes de carbone,
- B représentant $(R^{5*}O)_{3-x*}(R^{6*})_{x*}Si[(R^{2*})CH_2-]$, $R^{5*}$ représentant, indépendamment, hydrogène, un groupe alkyle linaire, ramifié ou cyclique comprenant 1 à 8 atomes de carbone ou un groupe aryle, arylalkyle ou acyle, $R^{6*}$ représentant, indépendamment, un groupe alkyle linéaire, ramifié ou cyclique comprenant 1 à 24 atomes de carbone ou un groupe aryle, arylalkyle ou acyle, $R^{2*}$ représentant un groupe alkylène linéaire, ramifié ou cyclique comprenant 1 à 18 atomes de carbone ou un groupe alcénylène comprenant 1 à 18 atomes de carbone, de préférence un groupe alkylène, en particulier un groupe $-(CH_2)_{n*}-$ avec n* valant 0, 1 ou 2 ainsi que $-CH_2CH(CH_3)-$, et x* valant 0, 1 ou 2,
- B représentant un radical à fonctionnalité amino primaire, secondaire ou tertiaire des formules générales IIIa ou IIIb

$$R^{11}_{h*}NH_{(2-h*)}[(CH_2)_h(NH)]_j[(CH_2)_l(NH)]_c-(CH_2)_k- \quad \textbf{(IIIa)}$$

dans laquelle $0 \le h \le 6$ ; h* = 0, 1 ou 2, j = 0, 1 ou 2 ; $0 \le l \le 6$ ; c = 0, 1 ou 2 ; $0 \le k \le 6$ et $R^{11}$ correspond à un radical benzyle, aryle, vinyle, formyle ou un radical alkyle linéaire, ramifié ou cyclique comprenant 1 à 8 atomes de carbone et dans la formule IIIb

$$[NH_2(CH_2)_d]_2N(CH_2)_p- \quad \textbf{(IIIb)}$$

$0 \le d \le 6$ et $0 \le p \le 6$, d valant de préférence 1 ou 2 et p valant 3,
- B représentant $-(CH_2)_{i*}-[NH(CH_2)_{f*}]_{g*}NH[(CH_2)_{f*}NH]_{g*}-(CH_2)_{i*}-SiR^{2*}{}_{a*}(OR^{1**})_{b*}$(IIIc), dans laquelle i*, f* ou g* dans la formule IIIc, à chaque fois indépendamment les uns des autres, sont identiques ou différents, avec i* = 0 à 8, f* = 1, 2 ou 3, g* = 0, 1 ou 2 et $R^{1**}$ correspond à un radical alkyle linéaire, cyclique ou ramifié comprenant 1 à 4 atomes de carbone, i* valant en particulier un des nombres 1, 2, 3 ou 4, avec a*, b* = 0, 1, 2 ou 3 et (a* + b*) valant 3 et $R^{2*}$ représente un radical alkyle comprenant 1 à 24 atomes de carbone,
- B représentant un radical $R^{12}-Y_q-(CH_2)_s-$, $R^{12}$ représentant un radical alkyle monofluoré, oligofluoré ou perfluoré comprenant 1 à 20 atomes de carbone ou un radical aryle monofluoré, oligofluoré ou perfluoré, Y correspondant en outre à un radical $-CH_2-$, -O-, aryle ou -S- et q = 0 ou 1 et s = 0 ou 2, en particulier B correspondant à un radical alkyle perfluoré comprenant 1 à 20 atomes de carbone,
- B représentant un radical vinyle, allyle, isopropényle, un radical mercaptoalkyle, sulfanalkyle, uréidoalkyle, acryloxyalkyle, méthacryloxyalkyle, en particulier méthacryloxypropyle, ou un radical alcoxy linéaire, ramifié ou cyclique comprenant 1 à 24 atomes de carbone, en particulier 1 à 16 atomes de carbone, de préférence 1 à 4 atomes de carbone, en particulier avec a valant 0 et b valant 0, 1 ou 2 dans la formule III, un tétraalcoxysilane,
- B représentant un radical hydroxyalkyle, époxy et/ou éther, en particulier un radical 3-glycidyloxyalkyle, 3-glycidyloxypropyle, dihydroxyalkyle, époxyalkyle, époxycycloalkyle, polyalkylglycolalkyle ou un radical polyalkylglycol-3-propyle, ou
- des produits d'hydrolyse ou de condensation au moins partielle d'un ou d'au moins deux composés de formule III.

11. Procédé selon l'une quelconque des revendications 1 à 10, **caractérisé en ce qu'**on utilise, comme composant C, au moins un composé du silicium de la série formée par le tétrachlorure de silicium, le tétraméthoxysilane, le tétraéthoxysilane, le tétrapropoxysilane, le méthyltriméthoxysilane, le méthyltriéthoxysilane, l'éthyltriméthoxysilane, l'éthyltriéthoxysilane, le n-propyltriméthoxysilane, le n-propyltriéthoxysilane, le n-butyltriméthoxysilane ou l'i-butyltriméthoxysilane, le n-butyltriéthoxysilane ou l'i-butyltriéthoxysilane, le n-octyltriméthoxysilane ou l'i-octyltriméthoxysilane, le n-octyltriéthoxysilane ou l'i-octyltriéthoxysilane, l'hexadécyltriméthoxysilane, l'hexadécyltriéthoxysilane, le vinyltriéthoxysilane, le vinyltriméthoxysilane, le vinyltris(2-méthoxyéthoxy)silane, le phényltriméthoxysilane, le phényltriéthoxysilane, le tridécafluoro-1,1,2,2-tétrahydrooctyltriméthoxysilane, le tridécafluoro-1,1,2,2-tétrahydrooctyltriéthoxysilane, le 3-mercaptopropyltriméthoxysilane, le 3-mercaptopropyltriéthoxysilane, le 1-mercaptométhyltriméthoxysilane, le 1-mercaptométhyltriéthoxysilane, le 3-glycidyloxypropyltriéthoxysilane, le 3-glycidyloxypropyltriméthoxysilane, le 3-méthacryloxyisobutyltriméthoxysilane, le 3-méthacryloxyisobutyltriéthoxysilane, le 3-méthacryloxypropyltriméthoxysilane, le 3-méthacryloxypropyltriéthoxysilane, le 3-méthacryloxypropylméthyldiméthoxysilane, le 3-méthacryloxypropylméthyldiéthoxysilane, le 3-uréidopropyltriéthoxysilane, le 3-uréidopropyltriméthoxysilane, le 3-aminopropyltriméthoxysilane, le 3-aminopropyltriéthoxysilane, le 3-aminopropylméthyldiméthoxysilane,

le 3-aminopropylméthyldiéthoxysilane, le 1-aminométhyltriméthoxysilane, le 1-aminométhyltriéthoxysilane, le 2-aminoéthyltriméthoxysilane, le 2-aminoéthyltriéthoxysilane, le 3-aminoisobutyltriméthoxysilane, le 3-aminoisobutyltriéthoxysilane, le N-n-butyl-3-aminopropyltriéthoxysilane, le N-n-butyl-3-aminopropylméthyldiéthoxysilane, le N-n-butyl-3-aminopropyltriméthoxysilane, le N-n-butyl-3-aminopropylméthyldiméthoxysilane, le N-n-butyl-1-aminométhyltriéthoxysilane, le N-n-butyl-1-aminométhylméthyldiméthoxysilane, le N-n-butyl-1-aminométhyltriméthoxysilane, le N-n-butyl-1-aminométhylméthyltriéthoxysilane, le benzyl-3-aminopropyltriméthoxysilane, le benzyl-3-aminopropyltriéthoxysilane, le benzyl-2-aminoéthyl-3-aminopropyltriméthoxysilane, le benzyl-2-aminoéthyl-3-aminopropyltriéthoxysilane, le N-formyl-3-aminopropyltriéthoxysilane, le N-formyl-3-aminopropyltriméthoxysilane, le N-formyl-1-aminométhylméthyldiméthoxysilane, le N-formyl-1-aminométhylméthyldiéthoxysilane, le diaminoéthylène-3-propyltriméthoxysilane, le diaminoéthylène-3-propyltriéthoxysilane, le triaminodiéthylène-3-propyltriméthoxysilane, le triaminodiéthylène-3-propyltriéthoxysilane, le (2-aminoéthylamino)-éthyltriméthoxysilane, le (2-aminoéthylamino)-éthyltriéthoxysilane, le (1-aminoéthylamino)-méthyltriméthoxysilane, le (1-aminoéthylamino)-méthyltriéthoxysilane, la tris(triméthoxysilylpropyl)amine, la tris(triéthoxysilylpropyl)amine, la tris(triméthoxysilylméthyl)amine, la tris(triéthoxysilylméthyl)amine, bis(triméthoxysilylpropyl)amine, la bis(triéthoxysilylpropyl)amine, la bis(diéthoxyméthylsilylpropyl)amine, la bis(diméthoxyméthylsilylpropyl)amine, la bis(triéthoxysilylméthyl)amine, la bis(triméthoxysilylméthyl)amine, la bis(diéthoxyméthylsilylméthyl)amine, la bis(diméthoxyméthylsilylméthyl)amine, $(H_3CO)_3Si(CH_2)_3NH(CH_2)_2NH(CH_2)_3Si(OCH_3)_3$, $(H_3CO)_3Si(CH_2)_3NH(CH_2)_2NH(CH_2)_2NH(CH_2)_3Si(OCH_3)_3$, $(H_3CO)_2(CH_3)Si(CH_2)_3NH(CH_2)_2NH(CH_2)_3Si(OCH_3)_2(CH_3)$, $(H_3CO)_3(CH_3)Si(CH_2)_3NH(CH_2)_2NH(CH_2)_2NH(CH_2)_3Si(OCH_3)_2(CH_3)$, ou un mélange d'au moins deux des composés susmentionnés ou un produit d'hydrolyse ou de condensation d'un des composés susmentionnés ou un produit d'hydrolyse, de condensation, de cocondensation, de condensation à blocs ou de condensation à blocs et de cocondensation d'au moins deux des composés susmentionnés.

12. Procédé selon l'une quelconque des revendications 1 à 11, **caractérisé en ce qu'**on

- mélange les composants A et B et éventuellement C, le mélange pouvant éventuellement être additionné d'un solvant ou d'un diluant, de préférence d'un alcool, de manière particulièrement préférée de méthanol, d'éthanol, d'isopropanol,
- dose dans le mélange, en continu ou de manière discontinue, de l'eau en une quantité de 0,5 à 500 moles d'eau par mole des atomes de silicium présents, de préférence sous agitation, et on ajoute éventuellement un catalyseur au mélange réactionnel,
- règle le mélange réactionnel présent à la pression ambiante ou sous pression réduite à une température entre 20 et 150°C et
- élimine au moins partiellement, de préférence de manière pratiquement complète, l'alcool d'hydrolyse formé du mélange réactionnel, ainsi que le solvant ou le diluant le cas échéant utilisé et
- dilue la composition ainsi obtenue éventuellement avec de l'eau, la teneur en substance active dans la composition étant de préférence réglée à 0,1 à 99,9% en poids puis on ajoute ou on met en contact avec le cas échéant au moins un autre composant de la série des pigments, des charges, des liants, des réticulants, des azurants optiques, des épaississants, des adjuvants de rhéologie, des adjuvants de laque ou un autre adjuvant.

13. Composition contenant des composés organosiliciés, à fonctionnalité amino quaternaire et de l'eau, pouvant être obtenue selon un procédé selon l'une quelconque des revendications 1 à 12 et **caractérisée par**
une teneur en eau de 0,0999 à 99,9% en poids et une teneur en solvant volatil ou en alcool d'hydrolyse dans la composition totale inférieure à 12% en poids jusqu'à 0% en poids, de préférence inférieure à 5 jusqu'à 0,0001% en poids, la somme de l'ensemble des constituants dans la composition valant 100% en poids, la composition présentant une viscosité < 1500 mPa.s.

14. Composition selon la revendication 13, **caractérisée par**
une teneur en substance active dans la composition de 0,1 à 99,9% en poids, de préférence de 0,5 à 90% en poids, de manière particulièrement préférée de 5 à 70% en poids, de manière tout particulièrement préférée de 7 à 60% en poids, en particulier de 10 à 50% en poids, la somme de l'ensemble des constituants dans la composition valant 100% en poids.

15. Composition selon la revendication 13 ou 14, **caractérisée en ce que** la composition contient au moins un autre des composants suivants de la série des pigments, des charges, des liants, des réticulants, des azurants optiques, des adjuvants de laque ou d'autres adjuvants.

16. Composition selon l'une quelconque des revendications 13 à 15, **caractérisée en ce que** la composition présente

une viscosité ≤ 1000 mPa.s, de préférence de 10 à 300 mPa.s, en particulier de 100 à 300 mPa.s.

**17.** Utilisation d'une composition selon l'une quelconque des revendications 13 à 16 ou préparée selon l'une quelconque des revendications 1 à 12 pour la modification, le traitement et/ou la préparation de formulations, de substrats, d'articles, de matériaux organiques ou inorganiques, de matériaux composites, de masses de couchage de papier, d'utilisations par jet d'encre, d'agents de revêtement de papier, de papiers, de textiles, de charges, de formulations à effet biocide, fongicide et/ou virucide, de revêtements à effet biocide, fongicide et/ou virucide, pour l'apprêt de matériaux fibreux, de fils et/ou de textiles, pour l'imprégnation de textiles, pour l'apprêt antistatique de surfaces, en particulier de matériaux plats, fibreux, tissés, granuleux et/ou sous forme de poudre.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 881654
- NL 6517163
- DE 1262272
- DE 2221349
- DE 2648240
- US 4035411 A
- US 4005118 A
- US 4005119 A
- DE 3120195
- DE 2222997
- DE 2229580
- DE 2408192
- GB 882067 A
- EP 0054748 A
- WO 2008076839 A
- US 4845256 A
- WO 2005009745 A2
- US 20030175451 A
- US 20050170109 A
- DE 102007012578 A1
- US 2005170109 A1
- US 2003175451 A
- DE 102007040802 A1
- WO 2006010666 A
- EP 0846717 A1
- EP 0846716 A1
- EP 1101787 A1
- EP 0960921 A1
- EP 0716127 A1
- EP 1205505 A
- EP 0518056 A1
- EP 0814110 A1
- EP 1205481 A1
- EP 0675128 A